(19) Europäisches Patentamt
European Patent Office
Office européen des brevets

(11) EP 4 656 645 A1

(12) # EUROPEAN PATENT APPLICATION
published in accordance with Art. 153(4) EPC

(43) Date of publication:
**03.12.2025 Bulletin 2025/49**

(21) Application number: **24747333.3**

(22) Date of filing: **24.01.2024**

(51) International Patent Classification (IPC):
***C07F 7/21*** *(2006.01)*

(52) Cooperative Patent Classification (CPC):
**C07F 7/21**

(86) International application number:
**PCT/JP2024/002052**

(87) International publication number:
**WO 2024/158007 (02.08.2024 Gazette 2024/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.01.2023 JP 2023008656**

(71) Applicant: **National Institute of Advanced Industrial Science and Technology**
**Chiyoda-ku**
**Tokyo 100-8921 (JP)**

(72) Inventors:
- **IGARASHI, Masayasu**
  **Tsukuba-shi, Ibaraki 305-8560 (JP)**
- **YAGIHASHI, Fujio**
  **Tsukuba-shi, Ibaraki 305-8560 (JP)**
- **MATSUMOTO, Tomohiro**
  **Tsukuba-shi, Ibaraki 305-8560 (JP)**
- **SATO, Kazuhiko**
  **Tsukuba-shi, Ibaraki 305-8560 (JP)**

(74) Representative: **V.O.**
**P.O. Box 87930**
**2508 DH Den Haag (NL)**

(54) **COMPOUND AND METHOD FOR PRODUCING SAME**

(57) Provided is a compound which is represented by Formula (1). (In Formula (1), a plurality of $Z^5$'s each independently represent a hydrogen atom or a group represented by $-SiR^1R^2R^3$, where at least one of the plurality of $Z^5$'s represents a group represented by - $SiR^1R^2R^3$

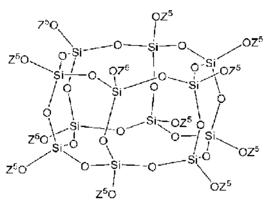

・・・(1)

EP 4 656 645 A1

## Description

### TECHNICAL FIELD

The present invention relates to a compound and a method for producing the same.

Priority is claimed on Japanese Patent Application No. 2023-008656, filed January 24, 2023, the content of which is incorporated herein by reference.

### BACKGROUND ART

A group of siloxane compounds having a cage-type skeleton, which is regarded as a condensate of orthosilicic acid or a derivative thereof, is promising as a functional silicon material in various fields, and various methods for searching for a novel compound and producing the compound have been examined.

For example, it is disclosed that, as one kind of such a cage-type siloxane compound, a compound represented by Formula (91) (in the present specification, also referred to as "compound (91)") is obtained by using a compound represented by Formula (90) (in the present specification, also referred to as "compound (90)") as a raw material by the following synthetic route (see Non Patent Document 1).

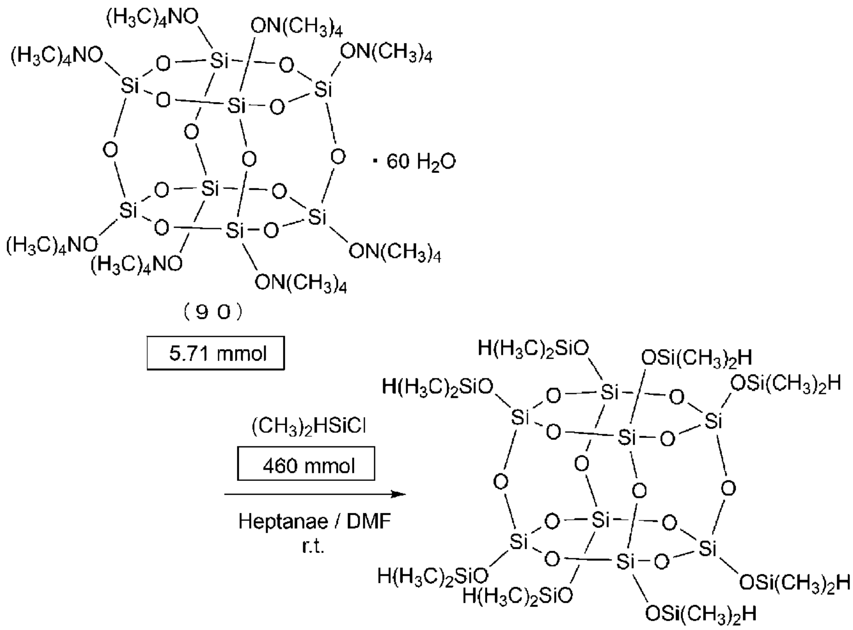


(91)

### Citation List

#### Non Patent Document

Non Patent Document 1: Main Group Metal Chemistry 20 (1997) pp. 515 to 529

### SUMMARY OF INVENTION

#### Technical Problem

However, the method described in Non Patent Document 1 has a problem in that an excessive amount of chlorodimethylsilane ($(CH_3)_2HSiCl$) needs to be used for the compound (90) as a raw material in order to obtain the compound (91). This is because the compound (90) which is a silicate compound contains a large amount of hydrated water.

As described above, some of cage-type siloxane compounds of the related art cannot be produced by a practical method, and thus it has been desired to improve the production method.

In addition, it cannot be said that the search for the cage-type siloxane compounds is sufficiently performed at present, and the search for a novel cage-type siloxane compound is also desired.

An object of the present invention is to provide a novel cage-type siloxane compound and a method for producing the same.

Solution to Problem

The present invention includes the following aspects.

[1] A compound represented by Formula (1).

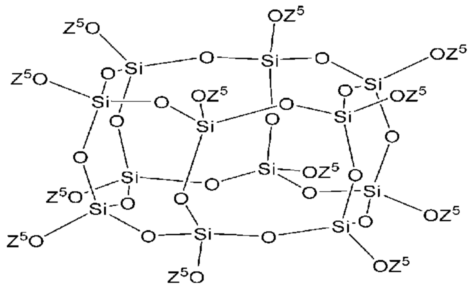

・・・(1)

(In Formula (1), a plurality of $Z^5$'s each independently represent a hydrogen atom or a group represented by $-SiR^1R^2R^3$, where at least one of the plurality of $Z^5$'s represents a group represented by $-SiR^1R^2R^3$. $R^1$, $R^2$, and $R^3$ each independently represent a hydrogen atom, an alkyl group which may have a substituent, an alkenyl group which may have a substituent, or an aryl group which may have a substituent, and in a case where two or more of $R^1$, $R^2$, and $R^3$ represent the alkyl group, the alkenyl group, or the aryl group, these groups may be bonded to each other to form a ring.)

[2] The compound according to [1], in which $R^1$, $R^2$, and $R^3$ each independently represent preferably a hydrogen atom, an alkyl group having 1 to 20 carbon atoms, which may have a substituent, an alkenyl group having 2 to 20 carbon atoms, which may have a substituent, or an aryl group having 6 to 20 carbon atoms, more preferably a hydrogen atom, a linear, branched, or cyclic alkyl group having 1 to 20 carbon atoms, which may have a substituent, a linear, branched, or cyclic alkenyl group having 2 to 20 carbon atoms, which may have a substituent, or a monocyclic or polycyclic aryl group having 6 to 20 carbon atoms, and still more preferably a methyl group, an ethyl group, an n-propyl group, an isopropyl group, an n-butyl group, an isobutyl group, a sec-butyl group, a tert-butyl group, an n-pentyl group, an isopentyl group, a neopentyl group, a tert-pentyl group, a 1-methylbutyl group, an n-hexyl group, a 2-methylpentyl group, a 3-methylpentyl group, a 2,2-dimethylbutyl group, a 2,3-dimethylbutyl group, an n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, an n-octyl group, an isooctyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an icosyl group, a cyclopropyl group, a cyclobutyl group, a cyclopentyl group, a cyclohexyl group, a cycloheptyl group, a cyclooctyl group, a cyclononyl group, a cyclodecyl group, a norbornyl group, an isobornyl group, a 1-adamantyl group, a 2-adamantyl group, a tricyclodecyl group, a cyclopentylmethyl group, a 1-cyclopentylethyl group, a cyclohexylmethyl group, a 1-cyclohexylethyl group, a methylcyclopentyl group, an ethylcyclopentyl group, a methylcyclohexyl group, an ethylcyclohexyl group, a dimethylcyclohexyl group, a vinyl group, a 1-propenyl group, a 2-propenyl group (allyl group), a 2-butenyl group, a 2-butenyl group, a 3-butenyl group, a 1-pentenyl group, a 2-pentenyl group, a 3-pentenyl group, a 4-pentenyl group, a 1-hexenyl group, a 2-hexenyl group, a 3-hexenyl group, a 4-hexenyl group, a 5-hexenyl group, a heptenyl group, an octenyl group, a nonenyl group, a decenyl group, an isopropenyl group, a 1-methyl-2-propenyl group, a 2-methyl-2-propenyl group, an isopentenyl group, a butadienyl group, a pentadienyl group, a hexadienyl group, an octadienyl group, a 1-cyclohexenyl group, a 2-cyclohexenyl group, a 3-cyclohexenyl group, a phenyl group, a 1-naphthyl group, a 2-naphthyl group, an o-tolyl group, an m-tolyl group, a p-tolyl group, or a xylyl group (dimethylphenyl group).

[3] The compound according to [1] or [2], in which the group represented by General Formula "$-SiR^1R^2R^3$" is a trialkylsilyl group, a dialkylsilyl group, a monoalkylsilyl group, a trialkenylsilyl group, a dialkenylsilyl group, a monoalkenylsilyl group, a triarylsilyl group, a diarylsilyl group, a monoarylsilyl group, a dialkylmonoarylsilyl group, a monoalkyldiarylsilyl group, a monoalkylmonoarylsilyl group, a dialkenylmonoarylsilyl group, a monoalkenyldiarylsilyl group, a monoalkenylmonoarylsilyl group, a dialkenylmonoalkylsilyl group, a monoalkenyldialkylsilyl group, a monoalkenylmonoalkylsilyl group, or a silyl group ($-SiH_3$) and preferably a trimethylsilyl group, a dimethylmonovinylsilyl group, or a dimethylsilyl group.

[4] A method for producing a compound, including: reacting at least one compound (3) represented by Formula (3) with a compound (10) represented by Formula (10) to obtain a compound (1) represented by Formula (1).

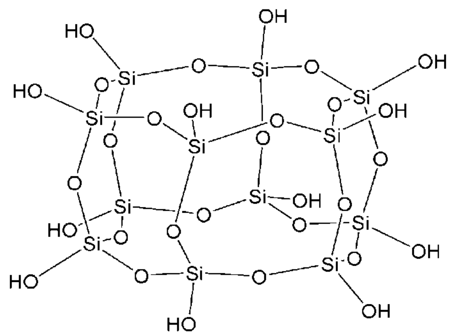

・・・(10)

$$X\text{-}SiR^1R^2R^3 \cdots \quad (3)$$

(In Formula (3), $R^1$, $R^2$, and $R^3$ each independently represent a hydrogen atom, an alkyl group which may have a substituent, an alkenyl group which may have a substituent, or an aryl group which may have a substituent, and in a case where two or more of $R^1$, $R^2$, and $R^3$ represent the alkyl group, the alkenyl group, or the aryl group, these groups may be bonded to each other to form a ring, and X represents a halogen atom.)

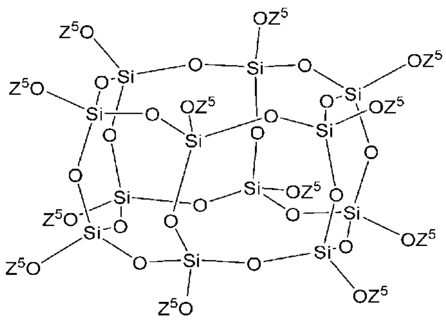

・・・(1)

(In Formula (1), a plurality of $Z^5$'s each independently represent a hydrogen atom or a group represented by $-SiR^1R^2R^3$, where at least one of the plurality of $Z^5$'s represents a group represented by $-SiR^1R^2R^3$. $R^1$, $R^2$, and $R^3$ each independently represent a hydrogen atom, an alkyl group which may have a substituent, an alkenyl group which may have a substituent, or an aryl group which may have a substituent, and in a case where two or more of $R^1$, $R^2$, and $R^3$ represent the alkyl group, the alkenyl group, or the aryl group, these groups may be bonded to each other to form a ring.)

[5] The method for producing a compound according to [4], in which $R^1$, $R^2$, and $R^3$ each independently represent preferably a hydrogen atom, an alkyl group having 1 to 20 carbon atoms, which may have a substituent, an alkenyl group having 2 to 20 carbon atoms, which may have a substituent, or an aryl group having 6 to 20 carbon atoms, more preferably a hydrogen atom, a linear, branched, or cyclic alkyl group having 1 to 20 carbon atoms, which may have a substituent, a linear, branched, or cyclic alkenyl group having 2 to 20 carbon atoms, which may have a substituent, or a monocyclic or polycyclic aryl group having 6 to 20 carbon atoms, and still more preferably a methyl group, an ethyl group, an n-propyl group, an isopropyl group, an n-butyl group, an isobutyl group, a sec-butyl group, a tert-butyl group, an n-pentyl group, an isopentyl group, a neopentyl group, a tert-pentyl group, a 1-methylbutyl group, an n-hexyl group, a 2-methylpentyl group, a 3-methylpentyl group, a 2,2-dimethylbutyl group, a 2,3-dimethylbutyl group, an n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, an n-octyl group, an isooctyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an icosyl group, a cyclopropyl group, a cyclobutyl group, a cyclopentyl group, a cyclohexyl group, a cycloheptyl group, a cyclooctyl group, a cyclononyl group, a cyclodecyl group, a norbornyl group, an isobornyl group, a 1-adamantyl group, a 2-adamantyl group, a tricyclodecyl group, a cyclopentylmethyl group, a 1-cyclopentylethyl group, a

cyclohexylmethyl group, a 1-cyclohexylethyl group, a methylcyclopentyl group, an ethylcyclopentyl group, a methylcyclohexyl group, an ethylcyclohexyl group, a dimethylcyclohexyl group, a vinyl group, a 1-propenyl group, a 2-propenyl group (allyl group), a 2-butenyl group, a 2-butenyl group, a 3-butenyl group, a 1-pentenyl group, a 2-pentenyl group, a 3-pentenyl group, a 4-pentenyl group, a 1-hexenyl group, a 2-hexenyl group, a 3-hexenyl group, a 4-hexenyl group, a 5-hexenyl group, a heptenyl group, an octenyl group, a nonenyl group, a decenyl group, an isopropenyl group, a 1-methyl-2-propenyl group, a 2-methyl-2-propenyl group, an isopentenyl group, a butadienyl group, a pentadienyl group, a hexadienyl group, an octadienyl group, a 1-cyclohexenyl group, a 2-cyclohexenyl group, a 3-cyclohexenyl group, a phenyl group, a 1-naphthyl group, a 2-naphthyl group, an o-tolyl group, an m-tolyl group, a p-tolyl group, or a xylyl group (dimethylphenyl group).

[6] The method for producing a compound according to [4] or [5], in which the group represented by General Formula "$-SiR^1R^2R^3$" is a trialkylsilyl group, a dialkylsilyl group, a monoalkylsilyl group, a trialkenylsilyl group, a dialkenylsilyl group, a monoalkenylsilyl group, a triarylsilyl group, a diarylsilyl group, a monoarylsilyl group, a dialkylmonoarylsilyl group, a monoalkyldiarylsilyl group, a monoalkylmonoarylsilyl group, a dialkenylmonoarylsilyl group, a monoalkenyldiarylsilyl group, a monoalkenylmonoarylsilyl group, a dialkenylmonoalkylsilyl group, a monoalkenyldialkylsilyl group, a monoalkenylmonoalkylsilyl group, or a silyl group ($-SiH_3$) and preferably a trimethylsilyl group, a dimethylmonovinylsilyl group, or a dimethylsilyl group.

[7] The method for producing a compound according to any one of [4] to [6], in which the halogen atom is a chlorine atom, a bromine atom, or an iodine atom and preferably the chlorine atom.

[8] The method for producing a compound according to any one of [4] to [7], in which a total amount of the compound (3) to be used is preferably 24 molar times or less and more preferably 18 molar times or less with respect to an amount of the compound (10) to be used.

[9] The method for producing a compound according to any one of [4] to [8], in which it is preferable to use a base in a case of reacting the compound (10) with the compound (3), more preferable to use an organic base as the base, still more preferable to use an aromatic amine or an aliphatic amine as the organic base, and particularly preferable to use aniline, pyridine, piperidine, triethylamine, or diisopropylethylamine as the aromatic amine or the aliphatic amine.

[10] The method for producing a compound according to [9], in which an amount of the base to be used is preferably 1 to 2 molar times and more preferably 1 to 1.5 molar times with respect to an amount of the compound (3).

[11] The method for producing a compound according to any one of [4] to [10], in which it is preferable to use a solvent in a case of reacting the compound (10) with the compound (3), more preferable to use a compound having an ether bond, an amide compound having an amide bond or an amide group, an ester compound having an ester bond, a halogenated hydrocarbon having a halogen atom, a nitrile compound having a nitrile group, or a hydrocarbon having no substituent as the solvent, and still more preferable to use tetrahydrofuran (THF), 1,4-dioxane, tetrahydropyrane, dibutyl ether, 1,2-dimethoxyethane, N,N-dimethylformamide (DMF), N,N-dimethylacetamide (DMAc), ethyl acetate, butyl acetate, 1,2-dichloroethane, methylene chloride, chlorobenzene, propionitrile, acetonitrile, toluene, n-hexane, or methylcyclohexane.

[12] The method for producing a compound according to [11], in which an amount of the solvent to be used is preferably 0 to 100 mL and more preferably 10 to 50 mL with respect to 1 mmol of an amount of the compound (10) to be used.

[13] The method for producing a compound according to any one of [4] to [12], in which at least two or more of the compounds (3) react with each other.

[14] The method for producing a compound according to any one of [4] to [13], further including: a proton exchange step of reacting a silicate having a structure represented by Formula (10)' with an acidic compound to obtain the compound (10).

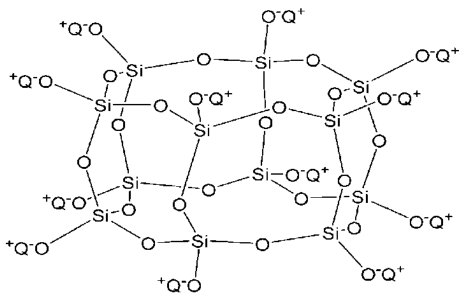

・・・(10)'

(In Formula (10)', $Q^+$ represents a cation.)

[15] The method for producing a compound according to [14], in which the acidic compound has preferably an acid dissociation constant pKa of -1 to 20, more preferably 0 or greater and 16 or less, still more preferably 1 or greater and 14 or less, and particularly preferably 2 or greater and 8 or less in dimethyl sulfoxide (DMSO).

[16] The method for producing a compound according to [14] or [15], in which the acidic compound is preferably nitric acid, sulfuric acid, hydrochloric acid, phosphoric acid, acetic acid, benzoic acid, Meldrum's acid, dimedone, or acetylacetone.

[17] The method for producing a compound according to any one of [14] to [16], in which an amount of the acidic compound to be used in the proton exchange step is 1 time or greater and 50 times or less, preferably 1.5 times or greater and 20 times or less, and more preferably 2.0 times or greater and 5 times or less in terms of a substance amount with respect to the silicate.

[18] The method for producing a compound according to any one of [14] to [17], in which the proton exchange step is preferably performed in a reaction medium, and the reaction medium is more preferably an ether-based liquid having an ether bond, an alcohol-based liquid having a hydroxyl group, an amide-based liquid having an amide bond or an amide group, an ester-based liquid having an ester bond, a halogen-based liquid having a halogen atom, a nitrile-based liquid having a nitrile group, a ketone-based liquid having a carbonyl group, a sulfinyl-based liquid having a sulfinyl group, or water and still more preferably tetrahydrofuran (THF), tetrahydropyrane, dioxane, diethyl ether ($Et_2O$), dimethyl ether, diisopropyl ether, diphenyl ether, methyl ethyl ether, diethylene glycol dimethyl ether, triethylene glycol dimethyl ether, methanol, ethanol, n-propanol, i-propanol, formamide, N,N-dimethylformamide (DMF), acetamide, N-methylacetamide, N,N-dimethylacetamide (DMAc), urea, tetramethylurea, ethyl acetate, n-amyl acetate, ethyl lactate, methylene chloride, chloroform, carbon tetrachloride, tetrachloroethane, hexachloroethane, acetonitrile, acetone, methyl ethyl ketone, phenyl methyl ketone, dimethyl sulfoxide (DMSO), or water.

[19] The method for producing a compound according to [18], in which an amount of the reaction medium to be used in the proton exchange step is an amount set such that a content of the silicate is 0.005 to 0.04 mol/L.

[20] The method for producing a compound according to any one of [14] to [19], in which the cation represented by $Q^+$ is preferably an alkali metal ion, an alkaline earth metal ion, a transition metal ion, or an ammonium ion, more preferably a lithium ion ($Li^+$), a sodium ion ($Na^+$), a potassium ion ($K^+$), a magnesium ion ($Mg^{2+}$), a calcium ion ($Ca^{2+}$), an iron (III) ion ($Fe^{3+}$), a copper (II) ion ($Cu^{2+}$), a zinc ion ($Zn^{2+}$), an ammonium ion ($NH_4^+$), a tetramethylammonium ion ($NMe_4^+$), an ethyltrimethylammonium ion ($NEtMe^{3+}$), a diethyldimethylammonium ion ($NEt_2Me^{2+}$), a triethylmethylammonium ion ($NEt_3Me^+$), a tetraethylammonium ion ($NEt_4^+$), a tetrapropylammonium ion ($NPr_4^+$), or a tetrabutylammonium ion ($NBu_4^+$), and still more preferably a sodium ion ($Na^+$), a potassium ion ($K^+$), a tetramethylammonium ion ($NMe_4^+$), a tetraethylammonium ion ($NEt_4^+$), or an ethyltrimethylammonium ion ($NEtMe^{3+}$).

[21] The method for producing a compound according to any one of [14] to [20], in which the proton exchange step includes an isolation step of isolating the compound (10) as a powder from a solution containing the compound (10).

[22] The method for producing a compound according to [21], in which the isolation step preferably includes a step of adding a poor solvent to a solution containing the compound (10) to precipitate the compound (10) and isolating the compound (10) as a powder.

[23] The method for producing a compound according to [22], in which the poor solvent is hexane, benzene, toluene, dibutyl ether, diisopropyl ether, diethyl ether, dichloromethane, chloroform, or ethyl acetate, preferably hexane, benzene, diisopropyl ether, or ethyl acetate, and more preferably diethyl ether or ethyl acetate.

[24] Use of a silanol compound-containing composition containing the compound according to any one of [1] to [3] for producing a functional silicon material.

[25] Use of a silanol compound-containing composition containing the compound according to any one of [1] to [3] as a functional silicon material for improving heat resistance, cold resistance, atmospheric corrosion resistance, light resistance, high light transmittance, transparency, insulating properties, releasability, or water repellency.

[26] Use of a silanol compound-containing composition containing the compound according to any one of [1] to [3] for producing a polymer.

[27] Use of a silanol compound-containing composition containing the compound according to any one of [1] to [3] for producing a porous body.

[28] A method for producing a functional silicon material, including: using a silanol compound-containing composition which contains the compound according to any one of [1] to [3].

Advantageous Effects of Invention

According to the present invention, it is possible to provide a novel cage-type siloxane compound and a method for producing the same.

BRIEF DESCRIPTION OF DRAWINGS

[FIG. 1] A measurement result of $^{29}Si$-NMR of a product obtained in Production Example 1.

[FIG. 2] A measurement result of high resolution mass spectrometry (TOF-MS) of the product obtained in Production Example 1.

[FIG. 3] An example of a proton exchange reaction formula in which a silanol compound is generated by causing an inorganic acid (for example, hydrochloric acid) to act on a silicate having a structure represented by Formula (10)'.

[FIG. 4] A measurement result of $^{1}$H-NMR of a compound (1)-1 obtained in Example 1.

[FIG. 5] A measurement result of $^{13}$C-NMR of a compound (1)-1 obtained in Example 1.

[FIG. 6] A measurement result of $^{29}$Si-NMR of a compound (1)-1 obtained in Example 1.

[FIG. 7] A measurement result of high resolution mass spectrometry (TOF-MS) of the compound (1)-1 obtained in Example 1.

[FIG. 8] A measurement result of $^{1}$H-NMR of a compound (1)-2 obtained in Example 2.

[FIG. 9] A measurement result of $^{13}$C-NMR of a compound (1)-2 obtained in Example 2.

[FIG. 10] A measurement result of $^{29}$Si-NMR of a compound (1)-2 obtained in Example 2.

[FIG. 11] A measurement result of high resolution mass spectrometry (TOF-MS) of the compound (1)-2 obtained in Example 2.

[FIG. 12] A measurement result of $^{1}$H-NMR of a compound (1)-3 obtained in Example 3.

[FIG. 13] A measurement result of $^{13}$C-NMR of a compound (1)-3 obtained in Example 3.

[FIG. 14] A measurement result of $^{29}$Si-NMR of a compound (1)-3 obtained in Example 3.

[FIG. 15] A measurement result of high resolution mass spectrometry (TOF-MS) of the compound (1)-3 obtained in Example 3.

[FIG. 16] A measurement result of $^{1}$H-NMR of a compound (1)-4 obtained in Example 4.

[FIG. 17] A measurement result of $^{13}$C-NMR of a compound (1)-4 obtained in Example 4.

[FIG. 18] A measurement result of $^{29}$Si-NMR of a compound (1)-4 obtained in Example 4.

[FIG. 19] A measurement result of high resolution mass spectrometry (TOF-MS) of a compound in which in Formula (1), one $Z^5$ represents a dimethylsilyl group and 11 pieces of $Z^5$'s represent a trimethylsilyl group among the compounds (1)-4 obtained in Example 4.

[FIG. 20] A measurement result of high resolution mass spectrometry (TOF-MS) of a compound in which in Formula (1), two $Z^5$'s represent a dimethylsilyl group and 10 pieces of $Z^5$'s represent a trimethylsilyl group among the compounds (1)-4 obtained in Example 4.

[FIG. 21] A measurement result of high resolution mass spectrometry (TOF-MS) of a compound in which in Formula (1), three $Z^5$'s represent a dimethylsilyl group and 9 pieces of $Z^5$'s represent a trimethylsilyl group among the compounds (1)-4 obtained in Example 4.

[FIG. 22] A measurement result of high resolution mass spectrometry (TOF-MS) of a compound in which in Formula (1), four $Z^5$'s represent a dimethylsilyl group and 8 pieces of $Z^5$'s represent a trimethylsilyl group among the compounds (1)-4 obtained in Example 4.

[FIG. 23] A measurement result of high resolution mass spectrometry (TOF-MS) of a compound in which in Formula (1), five $Z^5$'s represent a dimethylsilyl group and 7 pieces of $Z^5$'s represent a trimethylsilyl group among the compounds (1)-4 obtained in Example 4.

[FIG. 24] A measurement result of high resolution mass spectrometry (TOF-MS) of a compound in which in Formula (1), six $Z^5$'s represent a dimethylsilyl group and 6 pieces of $Z^5$'s represent a trimethylsilyl group among the compounds (1)-4 obtained in Example 4.

[FIG. 25] A measurement result of high resolution mass spectrometry (TOF-MS) of a compound in which in Formula (1), 7 pieces of $Z^5$'s represent a dimethylsilyl group and 5 pieces of $Z^5$'s represent a trimethylsilyl group among the compounds (1)-4 obtained in Example 4.

[FIG. 26] A measurement result of high resolution mass spectrometry (TOF-MS) of a compound in which in Formula (1), 8 pieces of $Z^5$'s represent a dimethylsilyl group and 4 pieces of $Z^5$'s represent a trimethylsilyl group among the compounds (1)-4 obtained in Example 4.

[FIG. 27] A measurement result of high resolution mass spectrometry (TOF-MS) of a compound in which in Formula (1), 9 pieces of $Z^5$'s represent a dimethylsilyl group and 3 pieces of $Z^5$'s represent a trimethylsilyl group among the compounds (1)-4 obtained in Example 4.

[FIG. 28] A measurement result of high resolution mass spectrometry (TOF-MS) of a compound in which in Formula (1), 10 pieces of $Z^5$'s represent a dimethylsilyl group and 2 pieces of $Z^5$'s represent a trimethylsilyl group among the compounds (1)-4 obtained in Example 4.

[FIG. 29] A measurement result of high resolution mass spectrometry (TOF-MS) of a series of the compounds (1)-4 obtained in Example 4.

[FIG. 30] A measurement result of $^{1}$H-NMR of a compound (1)-5 obtained in Example 5.

[FIG. 31] A measurement result of $^{13}$C-NMR of a compound (1)-5 obtained in Example 5.

[FIG. 32] A measurement result of $^{29}$Si-NMR of the compound (1)-5 obtained in Example 5.

[FIG. 33] A measurement result of high resolution mass spectrometry (TOF-MS) of a compound in which in Formula

(1), 1 piece of $Z^5$ represents a dimethylvinyl group and 11 pieces of $Z^5$'s represent a trimethylsilyl group among the compounds (1)-5 obtained in Example 5.

[FIG. 34] A measurement result of high resolution mass spectrometry (TOF-MS) of a compound in which in Formula (1), two pieces of $Z^5$'s represent a dimethylvinyl group and 10 pieces of $Z^5$'s represent a trimethylsilyl group among the compounds (1)-5 obtained in Example 5.

[FIG. 35] A measurement result of high resolution mass spectrometry (TOF-MS) of a compound in which in Formula (1), 3 pieces of $Z^5$'s represent a dimethylvinyl group and 9 pieces of $Z^5$'s represent a trimethylsilyl group among the compounds (1)-5 obtained in Example 5.

[FIG. 36] A measurement result of high resolution mass spectrometry (TOF-MS) of a compound in which in Formula (1), 4 pieces of $Z^5$'s represent a dimethylvinyl group and 8 pieces of $Z^5$'s represent a trimethylsilyl group among the compounds (1)-5 obtained in Example 5.

[FIG. 37] A measurement result of high resolution mass spectrometry (TOF-MS) of a compound in which in Formula (1), 5 pieces of $Z^5$'s represent a dimethylvinyl group and 7 pieces of $Z^5$'s represent a trimethylsilyl group among the compounds (1)-5 obtained in Example 5.

[FIG. 38] A measurement result of high resolution mass spectrometry (TOF-MS) of a compound in which in Formula (1), 6 pieces of $Z^5$'s represent a dimethylvinyl group and 6 pieces of $Z^5$'s represent a trimethylsilyl group among the compounds (1)-5 obtained in Example 5.

[FIG. 39] A measurement result of high resolution mass spectrometry (TOF-MS) of a compound in which in Formula (1), 7 pieces of $Z^5$'s represent a dimethylvinyl group and 5 pieces of $Z^5$'s represent a trimethylsilyl group among the compounds (1)-5 obtained in Example 5.

[FIG. 40] A measurement result of high resolution mass spectrometry (TOF-MS) of a compound in which in Formula (1), 8 pieces of $Z^5$'s represent a dimethylvinyl group and 4 pieces of $Z^5$'s represent a trimethylsilyl group among the compounds (1)-5 obtained in Example 5.

[FIG. 41] A measurement result of high resolution mass spectrometry (TOF-MS) of a compound in which in Formula (1), 9 pieces of $Z^5$'s represent a dimethylvinyl group and 3 pieces of $Z^5$'s represent a trimethylsilyl group among the compounds (1)-5 obtained in Example 5.

[FIG. 42] A measurement result of high resolution mass spectrometry (TOF-MS) of a compound in which in Formula (1), 10 pieces of $Z^5$'s represent a dimethylvinyl group and 2 pieces of $Z^5$'s represent a trimethylsilyl group among the compounds (1)-5 obtained in Example 5.

[FIG. 43] A measurement result of high resolution mass spectrometry (TOF-MS) of a compound in which in Formula (1), 11 pieces of $Z^5$'s represent a dimethylvinyl group and 1 piece of $Z^5$ represents a trimethylsilyl group among the compounds (1)-5 obtained in Example 5.

[FIG. 44] A measurement result of high resolution mass spectrometry (TOF-MS) of a series of the compounds (1)-5 obtained in Example 5.

## DESCRIPTION OF EMBODIMENTS

<<Compound>>

A compound according to the embodiment of the present invention is a compound represented by General Formula (1) (in the present specification, also referred to as "compound (1)").

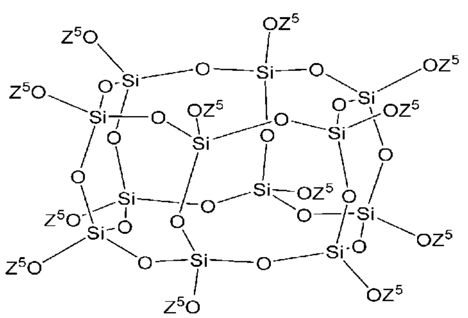

・・・(1)

(In Formula (1), a plurality of $Z^5$'s each independently represent a hydrogen atom or a group represented by $-SiR^1R^2R^3$, where at least one of the plurality of $Z^5$'s represents a group represented by $-SiR^1R^2R^3$.

$R^1$, $R^2$, and $R^3$ each independently represent a hydrogen atom, an alkyl group which may have a substituent, an alkenyl group which may have a substituent, or an aryl group which may have a substituent, and in a case where two or more of $R^1$, $R^2$, and $R^3$ represent the alkyl group, the alkenyl group, or the aryl group, these groups may be bonded to

each other to form a ring.)

In General Formula (1), $Z^5$ represents a hydrogen atom (-H) or a group represented by General Formula "-Si$R^1R^2R^3$". Further, $R^1$, $R^2$, and $R^3$ each independently represent a hydrogen atom, an alkyl group which may have a substituent, an alkenyl group which may have a substituent, or an aryl group.

The alkyl group as $R^1$, $R^2$, and $R^3$ may be any of linear, branched, or cyclic.

The number of carbon atoms in the linear or branched alkyl group as $R^1$, $R^2$, and $R^3$ is not particularly limited, but is preferably 1 to 20.

Examples of the linear or branched alkyl group include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a tert-pentyl group, a 1-methylbutyl group, an n-hexyl group, a 2-methylpentyl group, a 3-methylpentyl group, a 2,2-dimethylbutyl group, a 2,3-dimethylbutyl group, an n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, an n-octyl group, an isooctyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group.

The number of carbon atoms in the linear or branched alkyl group is more preferably 1 to 10, and may be, for example, any of 1 to 6 or 1 to 3.

The cyclic alkyl group as $R^1$, $R^2$, and $R^3$ may be monocyclic or polycyclic.

The number of carbon atoms in the cyclic alkyl group is not particularly limited as long as the number is 3 or more, but is preferably 3 to 20.

Examples of the cyclic alkyl group include a cyclopropyl group, a cyclobutyl group, a cyclopentyl group, a cyclohexyl group, a cycloheptyl group, a cyclooctyl group, a cyclononyl group, a cyclodecyl group, a norbornyl group, an isobornyl group, a 1-adamantyl group, a 2-adamantyl group, and a tricyclodecyl group.

The number of carbon atoms in the cyclic alkyl group is more preferably 3 to 15, and may be, for example, any of 3 to 10 or 3 to 6, or any of 5 to 15 or 5 to 10.

The alkyl group as $R^1$, $R^2$, and $R^3$ may be formed such that a linear or branched chain-like structure and a cyclic structure are mixedly present.

Examples of the alkyl group in which such a chain-like structure and a cyclic structure are mixedly present include a group having a structure in which one or two or more hydrogen atoms in the above-described linear or branched alkyl group, such as a cyclopentylmethyl group, a 1-cyclopentylethyl group, a cyclohexylmethyl group, or a 1-cyclohexylethyl group, are substituted with the above-described cyclic alkyl group, and a group having a structure in which one or two or more hydrogen atoms in the above-described cyclic alkyl group, such as a methylcyclopentyl group, an ethylcyclopentyl group, a methylcyclohexyl group, an ethylcyclohexyl group, or a dimethylcyclohexyl group, are substituted with the above-described linear or branched alkyl group.

The number of carbon atoms in the alkyl group in which a chain-like structure and a cyclic structure are mixedly present is not particularly limited as long as the number thereof is 4 or more, but is preferably 4 to 25, and may be, for example, 6 to 15.

The alkenyl group as $R^1$, $R^2$, and $R^3$ may be any of linear, branched, or cyclic.

The number of carbon atoms in the linear or branched alkenyl group as $R^1$, $R^2$, and $R^3$ is not particularly limited, but is preferably 2 to 20.

Examples of such a linear or branched alkenyl group include a vinyl group, a 1-propenyl group, a 2-propenyl group (allyl group), a 2-butenyl group, a 2-butenyl group, a 3-butenyl group, a 1-pentenyl group, a 2-pentenyl group, a 3-pentenyl group, a 4-pentenyl group, a 1-hexenyl group, a 2-hexenyl group, a 3-hexenyl group, a 4-hexenyl group, a 5-hexenyl group, a heptenyl group, an octenyl group, a nonenyl group, a decenyl group, an isopropenyl group, a 1-methyl-2-propenyl group, a 2-methyl-2-propenyl group, an isopentenyl group, a butadienyl group, a pentadienyl group, a hexadienyl group, and an octadienyl group.

The number of carbon atoms in the linear or branched alkenyl group is more preferably 2 to 10, and may be, for example, any of 2 to 6 or 2 or 3.

The cyclic alkenyl group as $R^1$, $R^2$, and $R^3$ may be monocyclic or polycyclic.

The number of carbon atoms in the cyclic alkenyl group is not particularly limited as long as the number thereof is 3 or more, and is preferably 3 to 20.

Examples of the cyclic alkenyl group include a 1-cyclohexenyl group, a 2-cyclohexenyl group, and a 3-cyclohexenyl group.

The number of carbon atoms in the cyclic alkenyl group is more preferably 3 to 15, and may be, for example, any of 3 to 10 or 3 to 6, or any of 5 to 15 or 5 to 10.

The alkenyl group as $R^1$, $R^2$, and $R^3$ may be formed such that a linear or branched chain-like structure and a cyclic structure are mixedly present.

Examples of the alkenyl group in which such a chain-like structure and a cyclic structure are mixedly present include a group having a structure in which one or two or more hydrogen atoms in the above-described linear or branched alkenyl group are substituted with the above-described cyclic alkenyl group, and a group having a structure in which one or two or more hydrogen atoms in the above-described cyclic alkenyl group are substituted with the above-described linear or branched alkenyl group.

The number of carbon atoms in the alkenyl group in which a chain-like structure and a cyclic structure are mixedly present is not particularly limited as long as the number thereof is 4 or more, but is preferably 4 to 25, and may be, for example, 6 to 15.

The aryl group as $R^1$, $R^2$, and $R^3$ may be monocyclic or polycyclic.

The number of carbon atoms in the aryl group is preferably 6 to 20, and examples of the aryl group include a phenyl group, a 1-naphthyl group, a 2-naphthyl group, an o-tolyl group, an m-tolyl group, a p-tolyl group, and a xylyl group (dimethylphenyl group), and other examples thereof also include a group having a structure in which one or two or more hydrogen atoms of these aryl groups are substituted with the aryl group or the alkyl group as $R^1$ to $R^3$. The number of carbon atoms in the aryl group having these substituents is preferably 6 to 20.

The number of carbon atoms in the aryl group is more preferably 6 to 12.

The alkyl group, the alkenyl group, and the aryl group as $R^1$, $R^2$, and $R^3$ may have a substituent.

In the present specification, the alkyl group, the alkenyl group, and the aryl group having a substituent are not limited to the cases of $R^1$, $R^2$, and $R^3$, and the alkyl group, the alkenyl group, and the aryl group having a substituent mean that one or two or more hydrogen atoms constituting these groups are substituted with a group other than a hydrogen atom unless otherwise specified. Further, in the present specification, the term "group" includes not only an atomic group formed by bonding a plurality of atoms but also a single atom unless otherwise specified.

Examples of the substituent in $R^1$, $R^2$, and $R^3$ include a halogen atom such as a chlorine atom, a bromine atom, or an iodine atom, a hydroxyl group, a carboxy group, and an alkyl group and an aryl group in which one methylene group ($-CH_2-$) or two or more methylene groups which are not adjacent to each other are substituted with an oxygen atom (-O-), a carbonyloxy group (-C(=O)-O-), or an oxycarbonyl group (-O-C(=O)-).

Examples of the alkyl group in "alkyl group in which a methylene group is substituted with an oxygen atom, a carbonyloxy group, or an oxycarbonyl group" described above include the same groups as those for the alkyl group as $R^1$, $R^2$, and $R^3$.

In "alkyl group in which a methylene group is substituted with an oxygen atom, a carbonyloxy group, or an oxycarbonyl group" described above, the position of the methylene group substituted with a substituent (an oxygen atom, a carbonyloxy group, or an oxycarbonyl group) is not particularly limited, and the number of substituents may be 1 or 2 or more. In addition, in a case where the number of substituents is 2 or more, these substituents may be the same as or different from each other.

$R^1$, $R^2$, and $R^3$ each independently represent preferably a hydrogen atom, an alkyl group having 1 to 20 carbon atoms (a linear or branched alkyl group having 1 to 20 carbon atoms, or a cyclic alkyl group having 3 to 20 carbon atoms), an alkylene group having 2 to 20 carbon atoms (a linear or branched alkylene group having 2 to 20 carbon atoms, or a cyclic alkylene group having 3 to 20 carbon atoms), or an aryl group having 6 to 20 carbon atoms and more preferably each independently a hydrogen atom, an alkyl group having 1 to 6 carbon atoms (a linear or branched alkyl group having 1 to 6 carbon atoms, or a cyclic alkyl group having 3 to 6 carbon atoms), an alkylene group having 2 to 6 carbon atoms (a linear or branched alkylene group having 2 to 6 carbon atoms, or a cyclic alkylene group having 3 to 6 carbon atoms), or an aryl group having 6 to 12 carbon atoms. All the alkyl group, the alkenyl group, and the aryl group as $R^1$, $R^2$, and $R^3$ may have a substituent.

In a group represented by General Formula "$-SiR^1R^2R^3$", in a case where two or more (two or three) of $R^1$, $R^2$, and $R^3$ represent the alkyl group, the alkenyl group, or the aryl group, these groups (the alkyl groups, the alkenyl groups, or the aryl groups) may be bonded to each other to form a ring together with a silicon atom (Si) to which these groups are bonded.

The ring formed by bonding two or more of $R^1$, $R^2$, and $R^3$ to each other is a silicon-containing aliphatic ring or a silicon-containing aromatic ring, which has a silicon atom as an atom forming a ring skeleton.

The bonding position of $R^1$, $R^2$, or $R^3$ in a case where the ring is formed is not particularly limited. For example, in a case where $R^1$, $R^2$, or $R^3$ has a chain-like structure, the bonding position may be a terminal carbon atom of the chain-like structure or a non-terminal carbon atom. Here, in a case where the alkyl group, the alkenyl group, or the aryl group has the substituent, the substituent does not serve as the bonding position in a case where a ring is formed.

In the case where a ring is formed, the number of bonding sites of $R^1$, $R^2$, or $R^3$ may be 1 or may be 2 or more. That is, the ring may be monocyclic or polycyclic.

In General Formula (1), a plurality of $Z^5$'s may be the same as or different from each other. That is, all of the plurality of $Z^5$'s may be the same as or different from each other, or only some of the plurality of $Z^5$'s may be the same as each other.

Here, in General Formula (1), all $Z^5$'s do not represent a hydrogen atom at the same time, one or two or more pieces of $Z^5$'s represent a group represented by General Formula "$-SiR^1R^2R^3$", and all 12 pieces of $Z^5$'s may represent a

group represented by General Formula "-$SiR^1R^2R^3$".

In General Formula (1), in a case where one or two or more pieces of $Z^5$'s represent a hydrogen atom (that is, in a case where the compound (1) is not a compound in which all $Z^5$'s represent a group represented by General Formula "-$SiR^1R^2R^3$"), the bonding position of the group represented by General Formula "-$SiR^1R^2R^3$" is not particularly limited.

More specific examples of the group represented by General Formula "-$SiR^1R^2R^3$" include a trialkylsilyl group, a dialkylsilyl group, a monoalkylsilyl group, a trialkenylsilyl group, a dialkenylsilyl group, a monoalkenylsilyl group, a triarylsilyl group, a diarylsilyl group, a monoarylsilyl group, a dialkylmonoarylsilyl group, a monoalkyldiarylsilyl group, a monoalkylmonoarylsilyl group, a dialkenylmonoarylsilyl group, a monoalkenyldiarylsilyl group, a monoalkenylmonoarylsilyl group, a dialkenylmonoalkylsilyl group, a monoalkenyldialkylsilyl group, a monoalkenylmonoalkylsilyl group, and a silyl group (-$SiH_3$). Among these, a trimethylsilyl group is preferable, a dimethylmonovinylsilyl group is more preferable, and a dimethylsilyl group is still more preferable.

<<Method for producing compound>>

The method for producing a compound according to the embodiment of the present invention is a method for producing a compound, in which a compound (1) represented by General Formula (1) is obtained by reacting a compound represented by General Formula (10) (in the present specification, also referred to as "compound (10)") with a compound represented by General Formula (3) (in the present specification, also referred to as "compound (3)").

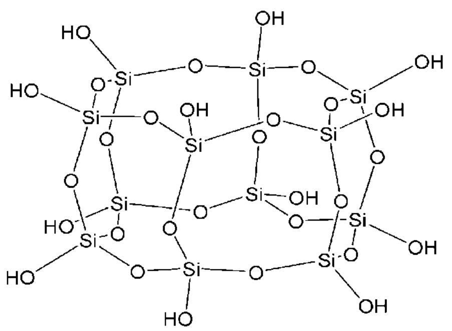

・・・(10)

X-$SiR^1R^2R^3$ ··· (3)

(In Formula (3), $R^1$, $R^2$, and $R^3$ each independently represent a hydrogen atom, an alkyl group which may have a substituent, an alkenyl group which may have a substituent, or an aryl group which may have a substituent, and in a case where two or more of $R^1$, $R^2$, and $R^3$ represent the alkyl group, the alkenyl group, or the aryl group, these groups may be bonded to each other to form a ring, and X represents a halogen atom.)

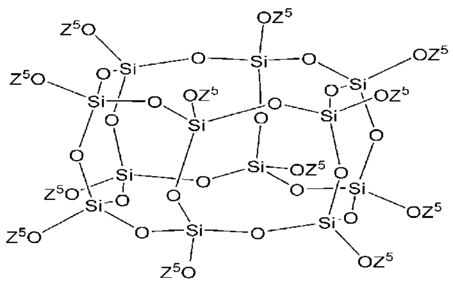

・・・(1)

(In Formula (1), a plurality of $Z^5$'s each independently represent a hydrogen atom or a group represented by -$SiR^1R^2R^3$, where at least one of the plurality of $Z^5$'s represents a group represented by -$SiR^1R^2R^3$.
$R^1$, $R^2$, and $R^3$ each independently represent a hydrogen atom, an alkyl group which may have a substituent, an alkenyl group which may have a substituent, or an aryl group which may have a substituent, and in a case where two or more of $R^1$, $R^2$, and $R^3$ represent the alkyl group, the alkenyl group, or the aryl group, these groups may be bonded to each other to form a ring.)

The compound (1) is the same as described above. The compound (3) and the compound (10) will be described in detail below.

<Compound (3)>

The compound (3) is represented by General Formula (3).
A monovalent group having a structure in which X in the compound (3) is removed is the same as the group represented by General Formula "-$SiR^1R^2R^3$" as $Z^5$ in the compound (1).
$R^1$, $R^2$, and $R^3$ in General Formula (3) each have the same definition as that for $R^1$, $R^2$, and $R^3$ in General Formula (1).
In General Formula (3), X represents a halogen atom.
Examples of the halogen atom include a chlorine atom, a bromine atom, and an iodine atom.
More specific examples of the compound (3) in a case where X represents a chlorine atom include trialkylsilyl chloride, dialkylsilyl chloride, monoalkylsilyl chloride, trialkenylsilyl chloride, dialkenylsilyl chloride, monoalkenylsilyl chloride, triarylsilyl chloride, diarylsilyl chloride, monoarylsilyl chloride, dialkylmonoarylsilyl chloride, monoalkyldiarylsilyl chloride, monoalkylmonoarylsilyl chloride, dialkenylmonoarylsilyl chloride, monoalkenyldiarylsilyl chloride, monoalkenylmonoarylsilyl chloride, dialkenylmonoalkylsilyl chloride, monoalkenyldialkylsilyl chloride, and monoalkenylmonoalkylsilyl chloride.
Next, a general method for reacting the compound (10) with the compound (3) will be described.

<Conditions for reacting compound (10) with compound (3)>

The compound (1) is obtained by reacting the compound (10) with the compound (3).
The compound (3) provided for the reaction may be used alone or two or more kinds thereof, and may be appropriately selected depending on the structure of the target compound (1).
In a case where two or more of the compounds (3) are used, the combination and the ratio thereof can be appropriately adjusted according to the purpose.
Further, in the present specification, in the description regarding the number of kinds of the compounds (1), (10), and (3), the stereoisomers are not taken into consideration unless otherwise specified.
The amount of the compound (3) to be used can be appropriately adjusted according to the structure and the like of the target compound (1).
For example, the amount of the compound (3) to be used can be adjusted according to the number of groups represented by General Formula "-$SiR^1R^2R^3$" in the target compound (1).
For example, in a case where the amount of the compound (3) to be used is 1 to 2 molar times with respect to the amount of the compound (10) to be used regardless of the value of $p_1$, the compound (1) in which the number of groups represented by General Formula "-$SiR^1R^2R^3$" in one molecule is 1 or 2 can be suitably obtained.
For example, in a case where the amount of the compound (3) to be used is 3 to 4 molar times with respect to the amount of the compound (10) to be used regardless of the value of $p_1$, the compound (1) in which the number of groups represented by General Formula "-$SiR^1R^2R^3$" in one molecule is 3 or 4 can be suitably obtained.
For example, in a case where the amount of the compound (3) to be used is 5 to 6 molar times with respect to the amount of the compound (10) to be used regardless of the value of $p_1$, the compound (1) in which the number of groups represented by General Formula "-$SiR^1R^2R^3$" in one molecule is 5 to 6 can be suitably obtained.
For example, in a case where $p_1$ represents 0 and the amount of the compound (3) to be used is 6 molar times or greater with respect to the amount of the compound (10) to be used, the compound (1) in which the number of groups represented by General Formula "-$SiR^1R^2R^3$" in one molecule is 6 can be obtained with a higher yield. In this case, for example, in a case where the amount of the compound (3) to be used is 10 molar times or less, the excessive use of the compound (3) is suppressed.
For example, in a case where the amount of the compound (3) to be used is 7 to 8 molar times with respect to the amount of the compound (10) to be used, the compound (1) in which the number of groups represented by General Formula "-$SiR^1R^2R^3$" in one molecule is 7 to 8 can be suitably obtained.
For example, in a case where the amount of the compound (3) to be used is 8 molar times or greater with respect to the amount of the compound (10) to be used, the compound (1) in which the number of groups represented by General Formula "-$SiR^1R^2R^3$" in one molecule is 8 can be obtained with a higher yield. In this case, for example, in a case where the amount of the compound (3) to be used is preferably 17 molar times or less and more preferably 12 molar times or less, the excessive use of the compound (3) is suppressed.
For example, in a case where the amount of the compound (3) to be used is 9 to 10 molar times with respect to the amount of the compound (10) to be used, the compound (1) in which the number of groups represented by General Formula "-$SiR^1R^2R^3$" in one molecule is 9 or 10 can be suitably obtained.
For example, in a case where the amount of the compound (3) to be used is 10 molar times or greater with respect to the amount of the compound (10) to be used, the compound (1) in which the number of groups represented by General Formula "-$SiR^1R^2R^3$" in one molecule is 10 can be obtained with a higher yield.

For example, in a case where the amount of the compound (3) to be used is 12 molar times or greater with respect to the amount of the compound (10) to be used, the compound (1) in which the number of groups represented by General Formula "$-SiR^1R^2R^3$" in one molecule is 12 can be obtained with a higher yield.
In this case, for example, in a case where the amount of the compound (3) to be used is 18 molar times or less, the excessive use of the compound (3) is suppressed.
Further, the amount of the compound (3) to be used described above is an example for efficiently obtaining the target compound (1) with a satisfactory yield, and the amount of the compound (3) to be used can be appropriately adjusted in consideration of the general conditions for producing the compound (1).
In addition, the amount of the compound (3) to be used described above denotes the total amount of all kinds of compounds (3) to be used in a case where two or more kinds of compounds (3) are used.

[Base]

A base is preferably used during the reaction of the compound (10) with the compound (3). The amount of the compound (1) to be generated is significantly increased by using a base.
An organic base is preferable as the base.
Examples of the organic base include an aromatic amine such as aniline, pyridine, or piperidine, and an aliphatic amine such as triethylamine or diisopropylethylamine.
In a case where the base is used, the base may be used alone or in combination of two or more kinds thereof, and in a case where two or more kinds of bases are used in combination, the combination and the ratio thereof can be appropriately adjusted according to the purpose.
In a case where the base is used, the amount of the base to be used can be adjusted, for example, according to the amount of the compound (3) to be used.
In that case, the amount of the base to be used is preferably 1 to 2 molar times and may be, for example, 1 to 1.5 molar times with respect to the amount of the compound (3) to be used. In a case where the amount of the base to be used is 1 molar times or greater, the amount of the compound (1) to be generated is further increased. In a case where the amount of the base to be used is 2 molar times or less, the excessive use of the base is suppressed.

[Solvent]

The reaction between the compound (10) and the compound (3) may be carried out without using a solvent, but is preferably carried out by using a solvent. In a case where a solvent is used, the fluidity of the reaction solution is improved, the reaction between the compound (10) and the compound (3) proceeds more smoothly, and the amount of by-product to be generated can also be reduced.
It is preferable that the solvent does not have reactivity with components used in the reaction, such as the reaction between the compound (10) and the compound (3).
Examples of the solvent include ethers (compounds having an ether bond) such as tetrahydrofuran (THF), 1,4-dioxane, tetrahydropyran, dibutyl ether, and 1,2-dimethoxyethane, amides such as N,N-dimethylformamide (DMF) and N,N-dimethylacetamide (DMAc), esters such as ethyl acetate and butyl acetate, halogenated hydrocarbons (hydrocarbons having a halogen atom as a substituent) such as 1,2-dichloroethane, methylene chloride, and chlorobenzene, nitriles (compounds containing a cyano group) such as propionitrile and acetonitrile, and hydrocarbons such as toluene, n-hexane, and methylcyclohexane.
In a case where a solvent is used, the solvent may be used alone or in combination of two or more kinds thereof, and in a case where two or more kinds of solvents are used in combination, the combination and the ratio thereof can be appropriately adjusted according to the purpose.
The amount of the solvent to be used is not particularly limited, but is, for example, preferably 0 to 100 mL and more preferably 10 to 50 mL with respect to 1 mmol of the amount of the compound (10) to be used. In a case where the amount of the solvent to be used is 10 mL or greater, the effect of using the solvent is more remarkably obtained. In a case where the amount of the solvent to be used is 100 mL or less, the excessive use of the solvent is suppressed.

[Other components]

Other components which do not correspond to any of the compound (10), the compound (3), the base, and the solvent may be used during the reaction between the compound (10) and the compound (3) within a range where the effects of the present invention are not impaired.
The kind of the other components is not particularly limited and can be optionally selected depending on the purpose.
In a case where the other components are used, the other components may be used alone or in combination of

two or more kinds thereof, and in a case where two or more kinds thereof are used in combination, the combination and the ratio thereof can be appropriately adjusted according to the purpose.

In a case where the other components are used, the amount of the other components to be used is not particularly limited and can be optionally selected depending on the kind of the other components.

[Other reaction conditions]

The reaction temperature during the reaction between the compound (10) and the compound (3) may be appropriately adjusted and is not particularly limited.

The reaction temperature is preferably 10°C to 40°C, and may be, for example, room temperature such as 18°C to 30°C.

The reaction time during the reaction between the compound (10) and the compound (3) may be appropriately adjusted according to other conditions such as the reaction temperature so that the amount of the compound (1) to be generated is increased, and the reaction time is not particularly limited.

The reaction time is, for example, preferably 1 to 72 hours and more preferably 1 to 60 hours.

In the method for producing a compound according to the present embodiment, after completion of the reaction, the compound (1) can be extracted by a known method after post-treatments are performed by known methods as necessary.

For example, after the completion of the reaction, post-treatment operations such as filtration, washing, extraction, pH adjustment, dehydration, and concentration are appropriately performed alone or in combination of two or more kinds thereof as necessary, and the compound (1) can be extracted by concentration, crystallization, reprecipitation, column chromatography, or the like. In addition, the extracted compound (1) may be purified by further performing any one or a combination of two or more kinds of operations such as crystallization, reprecipitation, column chromatography, extraction, and stirring and washing of crystals with a solvent once or twice or more times, as necessary.

In a case where other steps using the compound (1) are continuously performed after the completion of the reaction, the other steps may be continuously performed without extracting the compound (1) after the post-treatments are performed by known methods as necessary after the completion of the reaction.

In a case where a plurality of kinds of compounds (1) are generated by the reaction between the compound (10) and the compound (3), the target compound (1) can be obtained by appropriately selecting and performing any one or both of the above-described post-treatment operation and the purification operation. Even in a case where a plurality of kinds of compounds (1) are generated, the properties of the compounds (1) can be estimated from the structures of the compound (1)s, and thus the yield of the target compound (1) can be improved by selecting the post-treatment operation or the purification operation suitable for the properties.

In addition, in a case where the amount of the compound (3) to be used, other reaction conditions, and the like are adjusted, the yield of the compound (1) can be improved by improving the generation rate of the target compound (1).

The structure of the compound (1) can be confirmed by, for example, a known method such as nuclear magnetic resonance (NMR) spectroscopy, mass spectrometry (MS), infrared spectroscopy (IR), ultraviolet/visible spectroscopy (UV-VIS absorption spectrum), or elemental analysis.

<Compound (10)>

In the method for producing a compound according to the present embodiment, the compound (10) is a silanol compound represented by Formula (10).

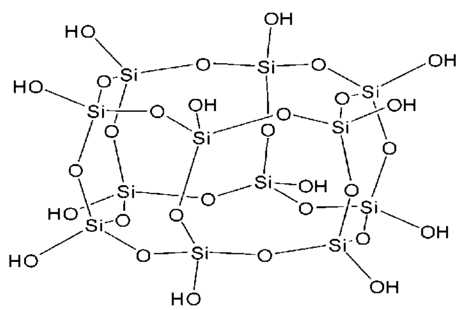

・・・(10)

Since the silanol compound of the compound (10) has the above-described structure, dehydration condensation does not occur even in a case where no crystal solvent is present, and the silanol compound can be isolated as a single powder.

In the silanol compound (for example, a cage-type octamer ($Q_8H_8$) of orthosilicic acid ($Si(OH)_4$)) of the related art, dehydration condensation proceeds in the absence of a crystal solvent (an amide solvent or the like) that is stabilized by coordination, and thus the silanol compound cannot be isolated as a single powder.
Meanwhile, the silanol compound of the compound (10) can maintain a stable state as a single powder (for example, purity: 100%), and thus is easy to handle and extremely advantageous in material development.
Further, in the present embodiment, the silanol compound of the compound (10) can be confirmed by various NMR, high resolution mass spectrometry, and X-ray crystal structure analysis.

<Method for producing compound (10)>

The silanol compound of the compound (10) can be obtained by a method for producing a silanol compound, including a proton exchange step of reacting a silicate having a structure represented by Formula (10)' (hereinafter, also referred to as "silicate") with an acidic compound to obtain a solution containing a silanol compound represented by Formula (10) (hereinafter, also referred to as "proton exchange step").

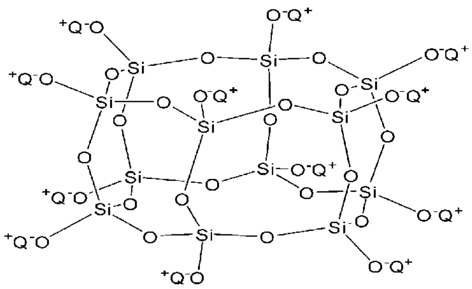

・・・(10)'

(In Formula (10)', $Q^+$ represents a cation.)

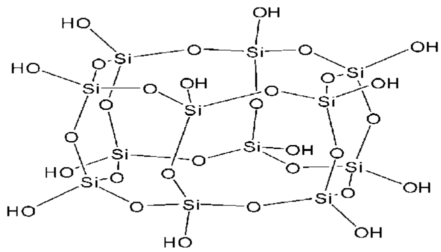

・・・(10)

In addition, it is preferable that the method for producing a silanol compound of the compound (10) further includes a step of adding a poor solvent to the solution obtained in the proton exchange step to precipitate the silanol compound represented by Formula (10) and isolating the silanol compound represented by Formula (10) as a powder (hereinafter, also referred to as "isolation step").
Hereinafter, the silicate, the acidic compound, and other reaction conditions in the proton exchange step will be described in detail.

(Proton exchange step)

The specific kind of the silicate, the specific kind of the acidic compound, the amount of the acidic compound to be used, the kind of the reaction medium which is a solvent or a dispersion medium, the reaction conditions, and the like used in the proton exchange step are not particularly limited, and can be appropriately selected according to the purpose.
As the acidic compound used in the proton exchange step, an acidic compound having an acid dissociation constant pKa (hereinafter, also referred to as "pKa (DMSO)") of -1 to 20 in dimethyl sulfoxide (DMSO) is preferable.
A silanol compound tends to be produced efficiently by performing proton exchange with an acidic compound having a pKa (DMSO) of -1 to 20. In a case where the pKa (DMSO) is -1 to 20, the exchange of a cation ($Q^+$) of a silicate with a proton ($H^+$) of an acidic compound proceeds efficiently, and side reactions are suppressed. Therefore, the silanol compound can be synthesized with a satisfactory yield. In addition, since the reaction of the method for producing a silanol compound of the compound (10) proceeds rapidly under mild conditions, the method is a production method that is extremely suitable for industrial use. Further, the proton exchange step tends to proceed faster as the pKa (DMSO) decreases.

In addition, the pKa (DMSO) denotes a known numerical value to be calculated from the concentration of each component of the acid dissociation equilibrium of the acidic compound in DMSO at 25°C. Specifically, the pKa is a numerical value obtained by taking the common logarithm of a numerical value Ka calculated by the following formula.

$$HA \rightleftarrows H^+ + A^-$$

$$K_a = \frac{[H^+][A^-]}{[HA]}$$

In the proton exchange step, a silicate having a structure represented by Formula (10)' reacts with an acidic compound.

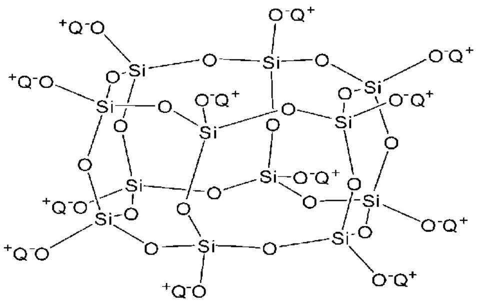

・・・(10)'

(In Formula (10)', $Q^+$ represents a cation.)

In Formula (10)', the cation as $Q^+$ is not particularly limited, and examples thereof include alkali metal ions such as a lithium ion ($Li^+$), a sodium ion ($Na^+$), and a potassium ion ($K^+$), alkaline earth metal ions such as a magnesium ion ($Mg^{2+}$) and a calcium ion ($Ca^{2+}$), transition metal ions such as an iron (III) ion ($Fe^{3+}$), a copper (II) ion ($Cu^{2+}$), and a zinc ion ($Zn^{2+}$), and ammonium ions such as an ammonium ion ($NH_4^+$), a tetramethylammonium ion ($NMe_4^+$), an ethyltrimethylammonium ion ($NEtMe^{3+}$ a diethyldimethylammonium ion ($NEt_2Me^{2+}$), a triethylmethylammonium ion ($NEt_3Me^+$), a tetraethylammonium ion ($NEt_4^+$), a tetrapropylammonium ion ($NPr_4^+$), and a tetrabutylammonium ion ($NBu_4^+$). Among these, a sodium ion ($Na^+$), a potassium ion ($K^+$), a tetramethylammonium ion ($NMe_4^+$), a tetraethylammonium ion ($NEt_4^+$), and an ethyltrimethylammonium ion ($NEtMe^{3+}$) are particularly preferable.

In the proton exchange step, the silicate which reacts with the acidic compound is not particularly limited, and for example, a hydrate (dodecapotassium-2,4,6,8,10,12,14,16,18,20,22,24,25,26,27,28,29,30-octadecaoxa-1,3,5,7,9,11,13,15,17,19,21,23-dodecasilaheptacyclo[13.9.1.13,13.15,11.17,21.19,19.117,23]triacontane-1,3,5,7,9,11,13,15,17,19,21,23-dodecakis(olato) bis(α-dextrin) hydrate (hereinafter, also referred to as "$Q_{12}K_{12}\cdot 2\alpha CD\cdot nH_2O$")) of a cage-type potassium silicate dodecamer ($Q_{12}K_{12}$), in which two α-cyclodextrins (αCD) are vertically coordinated, represented by the following formula described in Angew. Chem. Int. Ed. Engl. 1997, 36, 743 may be used.

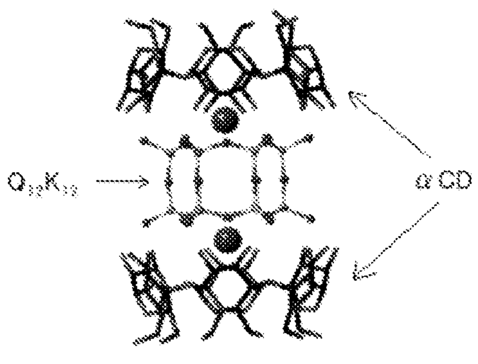


$Q_{12}K_{12}\cdot 2\alpha CD\cdot nH_2O$

Such $Q_{12}K_{12}\cdot 2\alpha CD\cdot nH_2O$ is not particularly limited, and can be prepared with reference to, for example, the description of Angew. Chem. Int. Ed. Engl. 1997, 36, 743., and Crystals 2018, 8, 457.

It is preferable that the acidic compound is an acidic compound having a pKa (DMSO) of -1 to 20. The pKa (DMSO) of the acidic compound is preferably 0 or greater, more preferably 1 or greater, and still more preferably 2 or greater, and is preferably 16 or less, more preferably 14 or less, and still more preferably 8 or less. In a case where the pKa (DMSO) of the acidic compound is in the above-described ranges, the silanol compound can be efficiently produced.

Specific examples of the acidic compound are not particularly limited, and include, for example, at least one organic acid selected from the group consisting of inorganic acids such as nitric acid (pKa (DMSO) of 1.4), sulfuric acid (pKa1 (DMSO) of 1.4, pKa2 (DMSO) of 14.7), hydrochloric acid (pKa (DMSO) of 2.1), and phosphoric acid (pKa1 (DMSO) of 1.83, pKa2 (DMSO) of 6.43, pKa3 (DMSO) of 11.46), acetic acid, and a compound having a structure represented by any of Formulae (b-1) to (b-5).

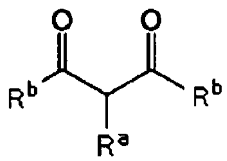

(b-1)

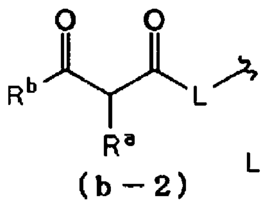

(b-2)

L

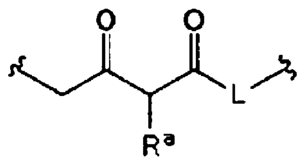

(b-3)

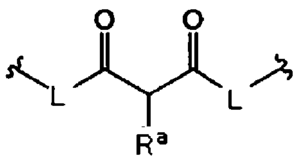

(b-4)

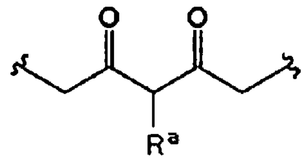

(b-5)

(In Formulae (b-1) to (b-5), L's each independently represent an oxygen atom, a sulfur atom, or an amino group (-$NR^c$-), $R^a$ represents a hydrogen atom or a hydrocarbon group having 1 to 14 carbon atoms, and $R^b$'s each independently represent a hydrogen atom or a hydrocarbon group having 1 to 14 carbon atoms.)

In a case where a proton exchange reaction using an organic acid is carried out in a reaction medium such as N,N-dimethylacetamide (hereinafter, also referred to as "DMAc") or methanol (hereinafter, also referred to as "MeOH") described below, an ammonium salt or an alkali metal salt to be generated is dissolved in the reaction medium. Therefore, it is preferable to separate the ammonium salt or the alkali metal salt, which is a by-product, using column purification or the like. Meanwhile, in a case where a proton exchange reaction is carried out using an inorganic acid in a reaction medium such as tetrahydrofuran (hereinafter, also referred to as "THF") or the like described below, an ammonium salt or an alkali metal salt to be generated, and $\alpha$-dextrin and chemical species derived from $\alpha$-dextrin are unlikely to be dissolved in the reaction medium. Therefore, the ammonium salt or the alkali metal salt can be separated by a simple separation method such as filter filtration, and a silanol compound solution which is a filtrate is obtained. Therefore, it is preferable that the acidic compound is an inorganic acid.

Among the inorganic acids, nitric acid, sulfuric acid, hydrochloric acid, and phosphoric acid are preferable, nitric acid or hydrochloric acid is more preferable, and hydrochloric acid is particularly preferable. Hydrochloric acid is inexpensive, and the yield tends to increase in a case where hydrochloric acid is used.

In addition, the wavy lines in Formulae (b-2) to (b-5) indicate that the following part has an optional structure. For example, the acidic compound may contain a functional group or the like that is not involved in the reaction. Therefore, for example, the acidic compound having a structure represented by Formula (b-4) may be a compound containing a hydrocarbon group such as a methyl group in front of an oxygen atom corresponding to L, such as dimethyl malonate represented by the following formula. In addition, for example, the acidic compound having a structure represented by Formula (b-4) may be a compound in which a hydrocarbon group in front of an oxygen atom corresponding to L is bonded to form a cyclic structure, such as Meldrum's acid represented by the following formula.

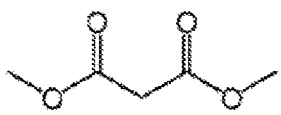

Dimethyl malonate

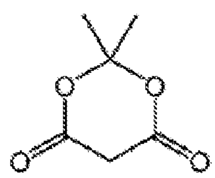

Meldrum's acid

The structures represented by Formulae (b-1) to (b-5) are a so-called β-dicarbonyl structure, but it is known that hydrogen of a methylene group sandwiched between two carbonyl groups, that is, α-hydrogen acts as an acid point. By having the structures represented by Formulae (b-1) to (b-5), the acidic compound exhibits an appropriate acid dissociation constant, and electrons of an anion generated by the dissociation of a proton are delocalized in the structure. For example, the acidic compound having a structure represented by Formula (b-2) undergoes proton dissociation as represented by the following formula. Therefore, it is considered that in the acidic compound having the structure represented by Formulae (b-1) to (b-5), the basicity or nucleophilicity of the anion is suppressed, and thus the side reactions can be effectively suppressed.

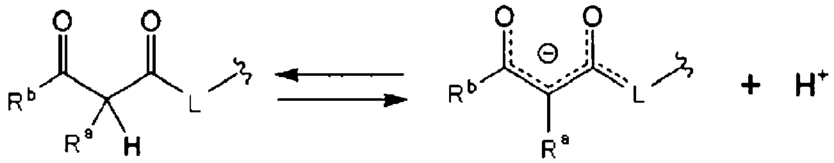

Examples of the amino group (-$NR^c$-) which represents L include a secondary amino group (-NH-). It is particularly preferable that L represents an oxygen atom. In a case where $R^a$ represents a hydrocarbon group, the number of carbon atoms thereof is preferably 6 or less, more preferably 5 or less, and still more preferably 4 or less. $R^a$ is not particularly limited, and examples thereof include a hydrogen atom, a methyl group (-Me), an ethyl group (-Et), a n-propyl group (-nPr), an i-propyl group (-iPr), a n-butyl group (-nBu), and a phenyl group (-Ph). Among these, a hydrogen atom is preferable.

In a case where $R^b$ represents a hydrocarbon group, the number of carbon atoms thereof is preferably 5 or less, more preferably 4 or less, and still more preferably 3 or less. Examples of $R^b$ include a hydrogen atom, a methyl group (-Me), an ethyl group (-Et), an n-propyl group (-nPr), an i-propyl group (-iPr), and an n-butyl group (-nBu). Among these, a hydrogen atom is preferable.

The acidic compound represented by Formula (b-4) is not particularly limited, and examples thereof include an acidic compound represented by Formula (b-4-1). Examples of the acidic compound represented by Formula (b-5) include an acidic compound represented by Formula (b-5-1).

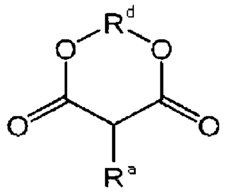

(b−4−1)

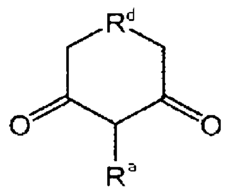

(b−5−1)

(In Formulae (b-4-1) and (b-5-1), $R^a$ represents a hydrogen atom or a hydrocarbon group having 1 to 14 carbon atoms, and $R^d$ represents a divalent hydrocarbon group having 1 to 14 carbon atoms.)

$R^d$ is not particularly limited, and examples thereof include a methylene group (-$CH_2$-), an ethylene group (-$CH_2CH_2$-), an n-propylene group (-$CH_2CH_2CH_2$-), a dimethylmethylene group (-$C(CH_3)_2$-), and an i-propylene group (-$CH(CH_3)CH_2$-).

Specific examples of the acidic compound are not particularly limited, and examples thereof include acetic acid (pKa (DMSO) of 12.6), benzoic acid (pKa (DMSO) of 11.1), Meldrum's acid (pKa (DMSO) of 7.3), a Meldrum's acid derivative, dimedone (pKa (DMSO) of 11.2), a dimedone derivative, acetylacetone (pKa (DMSO) of 13.3), and an acetylacetone derivative (see the following formula).

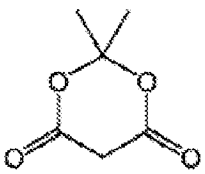

Meldrum's acid

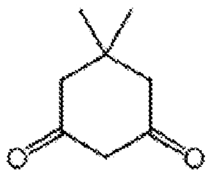

Dimedone

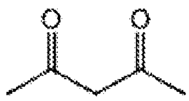

Acetylacetone

As the acidic compound, a compound obtained by introducing a compound represented by Formulae (b-2) to

(b-5) into an organic solid material such as a low-molecular-weight compound such as Meldrum's acid or a resin or an inorganic solid material such as silica or carbon. In a case where the acidic compound is such a solid, the acidic compound can be used as an ion exchange resin by filling a column with the acidic compound. Therefore, the silanol compound can be produced with extremely high efficiency. As the acidic compound, a typical solid acid (for example, Amberlist or Amberlite) may be used.

In particular, the acidic compound is preferably a resin having at least one structure selected from the group consisting of compounds represented by Formulae (b-2) to (b-5), and a resin that can be regenerated as an acidic compound by performing a proton exchange step and then exposing the resin to an acidic aqueous solution such as hydrochloric acid is preferable.

The amount of the acidic compound to be used in the proton exchange step is usually 1 time or greater, preferably 1.5 times or greater, and more preferably 2.0 times or greater, and is usually 50 times or less, preferably 20 times or less, and more preferably 5 times or less with respect to the silicate in terms of the substance amount. In a case where the amount of the acidic compound to be used is in the above-described ranges, the silanol compound can be efficiently produced.

The reaction in the proton exchange step is preferably carried out in a liquid (reaction medium). Such a reaction medium is not particularly limited, and examples thereof include ether-based liquids such as tetrahydrofuran (THF), tetrahydropyrane, dioxane, diethyl ether ($Et_2O$), dimethyl ether, diisopropyl ether, diphenyl ether, methyl ethyl ether, diethylene glycol dimethyl ether, and triethylene glycol dimethyl ether, alcohol-based liquids such as methanol, ethanol, n-propanol, and i-propanol, amide-based liquids such as formamide, N,N-dimethylformamide (DMF), acetamide, N-methylacetamide, N,N-dimethylacetamide (DMAc), urea, and tetramethylurea, ester-based liquids such as ethyl acetate, n-amyl acetate, and ethyl lactate, halogen-based liquids such as methylene chloride, chloroform, carbon tetrachloride, tetrachloroethane, and hexachloroethane, acetonitrile, acetone, methyl ethyl ketone, phenyl methyl ketone, dimethyl sulfoxide (DMSO), and water.

Further, the reaction medium may be used alone or in combination of two or more kinds thereof.

It is preferable that the amount of the reaction medium to be used in the proton exchange step is set such that the content of the silicate is 0.005 to 0.04 mol/L. This is because, in a case where the content of the silicate is in the above-described range, the silanol compound can be efficiently produced. The reaction temperature in the proton exchange step is usually -80°C or higher, preferably 0°C or higher, and more preferably 20°C or higher, and is usually 200°C or lower, preferably 70°C or lower, and more preferably 40°C or lower. The reaction time in the proton exchange step is usually 48 hours or shorter, preferably 24 hours or shorter, more preferably 8 hours or shorter, and particularly preferably 1 hour or shorter. In a case where the reaction temperature and the reaction time are in the above-described ranges, the silanol compound can be efficiently produced.

(Isolation step)

It is preferable that the method for producing a silanol compound of the compound (10) includes a step of adding a poor solvent to the solution of the silanol compound represented by Formula (10) obtained in the proton exchange step to precipitate the silanol compound represented by Formula (10) and isolating the silanol compound represented by Formula (10) as a powder. In a case where the method for producing a silanol compound of the compound (10) includes such a step, dehydration condensation does not occur even in the absence of a crystal solvent, and the silanol compound represented by Formula (10) can be extremely easily isolated as a single powder.

The poor solvent for precipitating the silanol compound represented by Formula (10) is not particularly limited, and examples thereof include hexane, benzene, toluene, dibutyl ether, diisopropyl ether, diethyl ether, dichloromethane, chloroform, and ethyl acetate. Among these, hexane, benzene, diisopropyl ether, or ethyl acetate is preferable, and diethyl ether or ethyl acetate is particularly preferable.

In addition, in a case where a precursor (for example, $Q_{12}K_{12}\cdot 2\alpha CD\cdot nH_2O$) in which a ligand (for example, $\alpha$CD) is coordinated is used as the silicate that reacts with the acidic compound in the isolation step, it is preferable to use a solvent that dissolves the ligand and a decomposition product of the ligand (for example, $\alpha$CD and a decomposition product of $\alpha$CD) as a poor solvent for precipitating the silanol compound represented by Formula (10).

The boiling point of the poor solvent for precipitating the above-described silanol compound represented by Formula (10) is usually 0°C or higher, preferably 10°C or higher, and more preferably 30°C or higher, and is usually 300°C or lower, preferably 200°C or lower, and more preferably 150°C or lower.

In addition, it is preferable that the solution obtained in the proton exchange step is a concentrated solution obtained by filtering the salt generated by the reaction and concentrating the filtrate. The above-described silanol compound represented by Formula (10) can be more efficiently precipitated by using the concentrated solution.

In the isolation step, the time for precipitating the silanol compound represented by Formula (10) is not particularly limited and can be appropriately selected, and the time is usually 24 hours or shorter, preferably 12 hours or shorter, and more preferably 6 hours or shorter, and is usually 0.25 hours or longer, preferably 0.5 hours or longer, and more preferably

1 hour or longer. In a case where the silanol compound is precipitated, the particles to be precipitated are uniform in a case where the silanol compound is stirred, and the silanol compound is likely to be formed into a powder in the drying step.

A method of isolating the above-described silanol compound represented by Formula (10) as a powder is not particularly limited, and examples thereof include filtration.

Further, it is preferable to dry the powder of the above-described silanol compound represented by Formula (10), which is obtained by such an isolation method. The drying temperature, the drying pressure, the drying time, and the like are not particularly limited, and can be appropriately selected according to the purpose.

<Silanol compound-containing composition>

In the method for producing a compound according to the present embodiment, a composition containing the compound (10) (hereinafter, also referred to as "silanol compound-containing composition") can be used as a raw material.

In the silanol compound-containing composition, the kind and the like of the compound contained in addition to the silanol compound represented by Formula (10) are not particularly limited, and can be appropriately selected according to the purpose. Further, as described above, since the compound (10) can be isolated as a single powder (purity: 100%), the content of the compound (10) in the silanol compound-containing composition can be appropriately adjusted. The content of the compound (10) in the silanol compound-containing composition is not particularly limited, but is, for example, preferably 0.1% to 99.9% by mass, more preferably 25% to 50% by mass, still more preferably 50% to 70% by mass, and particularly preferably 70% to 99% by mass with respect to the total mass of the silanol compound-containing composition.

In the silanol compound-containing composition, the compound contained in addition to the silanol compound represented by Formula (10) is not particularly limited, and examples thereof include water, an ether compound, an amine compound, an amide compound, an ammonium salt, and a metal complex.

The specific kind of the amine compound is not particularly limited as long as the amine compound contains an amino group (which may be any of a primary amine, a secondary amine, or a tertiary amine). Further, a compound containing both an amino group and an amide group is classified as "amide compound". Examples of the amine compound include aniline ($NH_2Ph$), diphenylamine ($NHPh_2$), dimethylpyridine (Me2Pyr), di-tert-butylpyridine ($tBu_2Pyr$), pyrazine (Pyraz), triphenylamine ($NPh_3$), triethylamine ($Et_3N$), and diisopropylethylamine ($iPr_2EtN$). Among the amine compounds, aniline ($NH_2Ph$) is particularly preferable. Further, the composition may contain one or two or more kinds of the amine compounds.

The content of the amine compound in the silanol compound-containing composition (total content in a case where the composition contains two or more kinds of amine compounds) is preferably greater than 0.1% by mass, more preferably 1% by mass or greater, and still more preferably 10% by mass or greater, and is usually less than 95% by mass, preferably 80% by mass or less, more preferably 60% by mass or less, and still more preferably 50% by mass or less with respect to the total mass of the composition.

The specific kind of the amide compound is not particularly limited as long as the amine compound has an amide bond. Examples of the amide compound include a compound represented by Formula (i) or (ii).

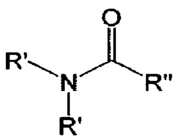

( i )

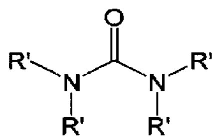

( i i )

(In Formulae (i) and (ii), R' and R" each independently represent a hydrogen atom or a hydrocarbon group having 1 to 10 carbon atoms.)

R' and R" are not particularly limited, and examples thereof include a hydrogen atom, a methyl group (-Me), an ethyl group (-Et), a n-propyl group (-nPr), an i-propyl group (-iPr), and a phenyl group (-Ph). The compound represented by Formula (i) is not particularly limited, and examples thereof include formamide, DMF, acetamide, N-methylacetamide, and DMAc. The compound represented by Formula (ii) is not particularly limited, and examples thereof include urea and tetramethyl urea (Me4Urea). The content of the amide compound in the silanol compound-containing composition (total content in a case where the composition contains two or more kinds of amide compounds) may be 0% by mass (not contained) or greater and 90% by mass or less with respect to the total mass of the composition.

The specific kind of the ammonium salt is not particularly limited as long as the ammonium salt is a compound formed of an ammonium ion and a counter anion. The ammonium ion is not particularly limited, and examples thereof include a tetrahydroammonium ion ($NH_4^+$), a tetramethylammonium ion ($NMe_4^+$), a tetraethylammonium ion ($NEt_4^+$), a

tetrapropylammonium ion ($NPr_4^+$), a tetrabutylammonium ion ($NBu_4^+$), a benzyltributylammonium ion ($NBnBu_3^+$), a tributyl(methyl)ammonium ($NBu_3Me^+$) ion, a tetrapentylammonium ion ($NPen_4^+$), a tetrahexylammonium ion ($NHex_4^+$), a tetraheptylammonium ion ($Nhep_4^+$), a 1-butyl-1-methylpyrrolidinium ion ($BuMePyr^+$), a methyltrioctylammonium ion ($NMeOct_3^+$), a dimethyldioctadecylammonium ion, a hydropyridinium ion ($C_5H_5N^+H$), a hydroanilinium ion ($PhNH_2^+H$), a trimethyladamantylammonium ion, and a Meldrum's acid ion. In addition, examples of the counter anion include a fluoride ion ($F^-$), a chloride ion ($Cl^-$), a bromide ion ($Br^-$), an iodide ion ($I^-$), an acetoxy ion ($AcO^-$), a nitrate ion ($NO_3^-$), an azide ion ($N_3^-$), a tetrafluoroborate ion ($BF_4^-$), a perchlorate ion ($ClO_4^-$), and a sulfate ion ($HSO_4^-$).

As the ammonium salt, tetrabutylammonium chloride ($NBu_4Cl$), tetrabutylammonium bromide ($NBu_4Br$), tetrapentylammonium chloride ($NPen_4Cl$), dimethyldioctadecylammonium chloride, trimethyladamantylammonium hydroxide, or a Meldrum's acid-tetramethylammonium salt is particularly preferable. Further, the composition may contain one or two or more kinds of the ammonium salts.

The content of the ammonium salt in the silanol compound-containing composition (total content in a case where the composition contains two or more kinds of ammonium salts) is preferably greater than 0.1% by mass and more preferably 50% by mass or greater, and is usually less than 95% by mass and preferably 80% by mass or less with respect to the total mass of the composition. In addition, the ratio of the ammonium salt to the silanol compound in the silanol compound-containing composition (the total substance amount of the ammonium salt/the total substance amount of the silanol compound) is preferably greater than 0, more preferably 1 or greater, and is usually 12 or less, preferably 8 or less, and more preferably 6 or less.

## Examples

Hereinafter, the present invention will be described in more detail with reference to specific examples. However, the present invention is not limited to the examples described below.

The meanings of the abbreviations used in the present example are as follows.

AcOEt: ethyl acetate
THF: tetrahydrofuran
Me: methyl group
Vi: vinyl group

The yield of the compound (1) described below is based on the compound (10).

In the description below, "mmol" denotes "$10^{-3}$ mol".

In the description below, the names of individual compounds of the compound (1) are determined using reference numerals attached to the formulae representing these compounds. For example, "compound represented by Formula (1)-1" described below is referred to as "compound (1)-1".

<Production of silanol compound (compound (10))>

[Production Example 1] synthesis of compound (10)

0.501 mL (6.00 mmol) of hydrochloric acid was added to a dispersion liquid obtained by suspending 0.823 g (0.200 mmol) of a dodecapotassium-2,4,6,8,10,12,14,16,18,20,22,24,25,26,27,28,29,30-octadecaoxa-1,3,5,7,9,11,13,15,17,19,21,23-dodecasilaheptacyclo[13.9.1.13,13.15,11.17,21.19,19.117,23]triacontane-1,3,5,7,9,11,13,15,17,19,21,23-dodecakis(olate)bis(a-dextrin) hydrate (hereinafter, also referred to as "$Q_{12}K_{12}\cdot 2\alpha CD\cdot nH_2O$") in 10 mL of THF (reaction solvent), and the solution was stirred for 15 minutes, thereby obtaining a suspension. This suspension was filtered through a filter to obtain a filtrate.

10 mL of ethyl acetate (poor solvent) was added to the obtained filtrate, and the solution was stirred for 10 minutes for reprecipitation (solid substance was precipitated). This suspension was filtered through a filter to separate the solid substance. After the solid substance was recovered, the solid substance was dried under reduced pressure to isolate a compound represented by Compositional Formula $Si_{12}O_{30}H_{12}$ (compound represented by Formula (10), 2,4,6,8,10,12,14,16,18,20,22,24,25,26,27,28,29,30-octadecaoxa-1,3,5,7,9,11,13,15,17,19,21,23-dodecasilaheptacyclo[13.9.1.13,13.15,11.17,21.19,19.117,23]triacontane-1,3,5,7,9,11,13,15,17,19,21,23-dodecaol (CAS number: 126347-25-9 (compound (10))) as a colorless solid (powder) with a yield of 90% (0.170 g). Further, in a case where the colorless solid (powder) of the compound (10) was dissolved in deuterated DMSO-d6 and NMR was measured, peaks were observed at 7.07 ppm in $^1H$-NMR and -101.2 ppm in $^{29}Si$-NMR. FIG. 1 shows the measurement results of $^{29}Si$-NMR. In addition, as a result of dissolving a colorless solid (powder) of $Q_{12}H_{12}$ in a mixed solvent of dimethyl sulfoxide and acetonitrile and performing high resolution mass spectrometry (TOF-MS), the measured value was 850.6538 while the theoretical value was $H_{12}O_{30}Si_{12}Na$[M+Na] 850.6537. FIG. 2 shows the measurement results of the high resolution mass

spectrometry (TOF-MS). As described above, it was confirmed by various NMR and high resolution mass spectrometry that the product obtained in Production Example 1 was a compound (10) having a structure represented by Formula (10). It was found that the compound (10) could maintain a stable state as a single powder (purity: 100%).

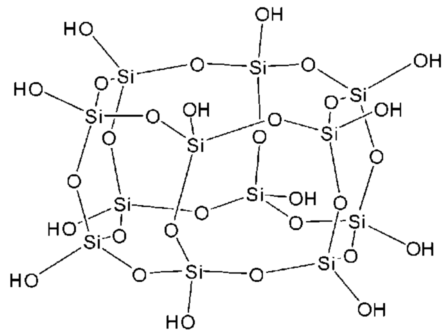

・・・(10)

[Production Example 2] synthesis of compound (10)

3.924 mL (46.99 mmol) of hydrochloric acid was added to a dispersion liquid obtained by suspending 6.845 g (1.602 mmol) of $Q_{12}K_{12}\cdot 2\alpha CD\cdot 59.3H_2O$ in 80 mL of THF (reaction solvent), and the solution was stirred for 15 minutes, thereby obtaining a suspension. This suspension was filtered through a filter to obtain a filtrate.

80 mL of ethyl acetate (poor solvent) was added to the obtained filtrate, and the solution was stirred for 60 minutes for reprecipitation (solid substance was precipitated). This suspension was filtered through a filter to separate the solid substance. After the solid substance was recovered, the solid substance was dried under reduced pressure to isolate the compound (10) as a colorless solid (powder) with a yield of 74% (1.167 g).

[Production Example 3] synthesis of compound (10)

3.007 mL (47.44 mmol) of nitric acid was added to a dispersion liquid obtained by suspending 6.886 g (1.602 mmol) of $Q_{12}K_{12}\cdot 2\alpha CD\cdot 59.3H_2O$ in 80 mL of THF (reaction solvent), and the solution was stirred for 15 minutes, thereby obtaining a suspension. This suspension was filtered through a filter to obtain a filtrate.

80 mL of ethyl acetate (poor solvent) was added to the obtained filtrate, and the solution was stirred for 60 minutes for reprecipitation (solid substance was precipitated). This suspension was filtered through a filter to separate the solid substance. After the solid substance was recovered, the solid substance was dried under reduced pressure to isolate the compound (10) as a colorless solid (powder) with a yield of 14% (0.215 g).

<Production of compound (1)>

[Example 1] synthesis of compound (1)-1

A compound (1)-1 was produced as the compound (1) by using the compound (10) obtained in Production Example 2. More specifically, the process was as follows.

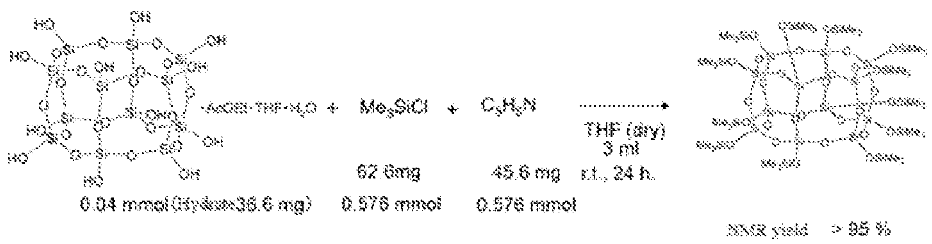


The compound (10) (36.6 mg, 0.04 mmol) was dissolved in THF (3 mL), pyridine (45.6 mg, 0.576 mmol) and chlorotrimethylsilane (62.6 mg, 0.576 mmol) were added to the obtained solution, and the solution was stirred at room temperature for 24 hours, thereby obtaining a suspension. It was confirmed that the compound (1)-1 ("$Si_{12}O_{18}[OSiMe_3]_{12}$") was generated based on various NMR spectra of this suspension. After the filtration through the filter, the solvent was distilled off from the obtained filtrate under reduced pressure. Thereafter, hexane (20 mL) was added thereto, the solution was filtered through a filter, and the solvent was distilled off from the obtained filtrate under reduced

pressure, thereby obtaining the compound (1)-1 as a solid substance (yielding amount: 64 mg, yield: 95%).

The NMR data and the TOF-MS spectrum of the obtained compound (1)-1 are described below. FIG. 4 shows the measurement results of $^{1}$H-NMR. FIG. 5 shows the measurement results of $^{13}$C-NMR. FIG. 6 shows the measurement results of $^{29}$Si-NMR. FIG. 7 shows measurement results of high resolution mass spectrometry (TOF-MS).

$^{1}$H-NMR ($CDCl_3$): 0.14 ppm
$^{13}$C-NMR ($CDCl_3$): 1.31 ppm
$^{29}$Si-NMR ($CDCl_3$): 11.7ppm, -110.2ppm
HRMS (ESI) m/z calcd. for $C_{36}H_{108}NaO_{30}Si_{24}$ 1715.1280 [M+Na]$^+$, found 1715. 1246

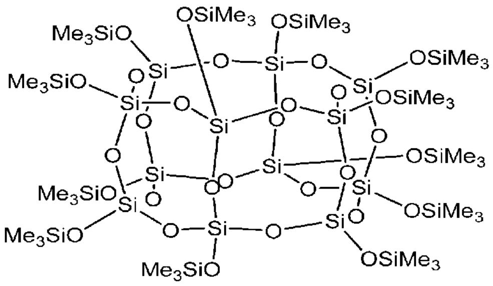

・・・(1) 1

[Example 2]

A compound (1)-2 was produced as the compound (1) by using the compound (10) obtained in Production Example 2. More specifically, the process was as follows.

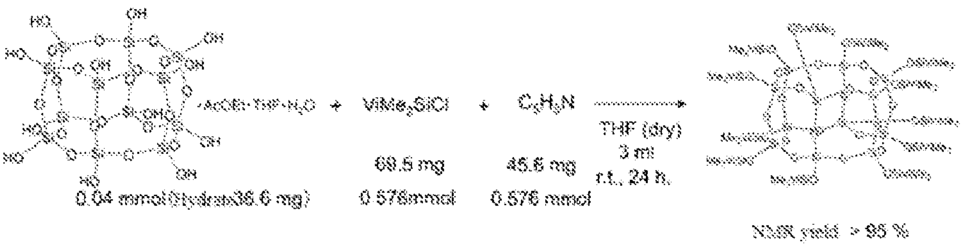


The compound (10) (36.6 mg, 0.04 mmol) was dissolved in THF (3 mL), pyridine (45.6 mg, 0.576 mmol) and chlorodimethylvinylsilane (69.5 mg, 0.576 mmol) were added to the obtained solution, and the mixture was stirred at room temperature for 24 hours, thereby obtaining a suspension. It was confirmed that the compound (1)-2 ("$Si_{12}O_{18}$[OSi-$Me_2$Vi]$_{12}$") was generated (Vi represents a vinyl group) based on various NMR spectra of this suspension. After the filtration through the filter, the solvent was distilled off from the obtained filtrate under reduced pressure. Thereafter, hexane (20 mL) was added thereto, the solution was filtered through a filter, and the solvent was distilled off from the obtained filtrate under reduced pressure, thereby obtaining a compound (1)-2 as a solid substance (yielding amount: 70 mg, yield: 95%).

The NMR data and the TOF-MS spectrum of the obtained compound (1)-2 are described below. FIG. 8 shows the measurement results of $^{1}$H-NMR. FIG. 9 shows the measurement results of $^{13}$C-NMR. FIG. 10 shows the measurement results of $^{29}$Si-NMR. FIG. 11 shows the measurement results of high resolution mass spectrometry (TOF-MS).

$^{1}$H-NMR ($CDCl_3$): 0.18 ppm, 5.73 to 5.77 ppm, 5.91 to 5.94 ppm, 6.08 to 6.14 ppm
$^{13}$C-NMR ($CDCl_3$): -0.11 ppm, 132.3 ppm, 138.2 ppm
$^{29}$Si-NMR ($CDCl_3$): -0.07 ppm, -110.4 ppm
HRMS (ESI) m/z calcd. for $C_{48}H_{108}NaO_{30}Si_{24}$ 1859. 1280 [M+Na]$^+$, found 1859. 1272.

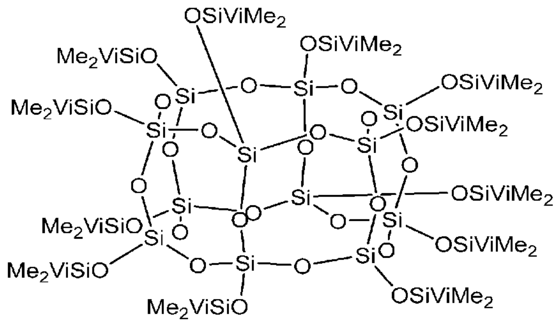

・・・(1)－2

[Example 3]

A compound (1)-3 was produced as the compound (1) by using the compound (10) obtained in Production Example 2. More specifically, the process was as follows.

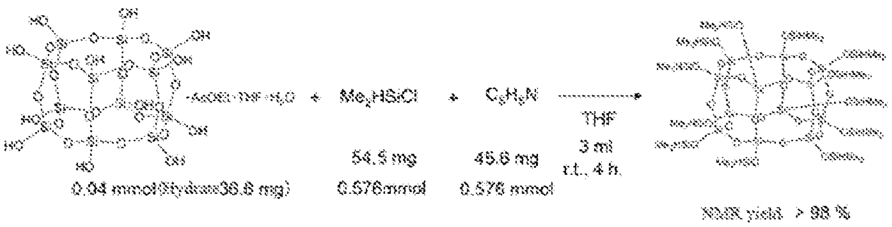


The compound (10) (36.6 mg, 0.04 mmol) was dissolved in THF (3 mL), pyridine (45.6 mg, 0.576 mmol) and chlorodimethylsilane (54.5 mg, 0.576 mmol) were added to the obtained solution, and the solution was stirred at room temperature for 4 hours, thereby obtaining a suspension. It was confirmed that the compound (1)-3 ("$Si_{12}O_{18}[OSiMe_2H]_{12}$") was generated based on various NMR spectra of this suspension. After the filtration through the filter, the solvent was distilled off from the obtained filtrate under reduced pressure. Thereafter, hexane (20 mL) was added thereto, the solution was filtered through a filter, and the solvent was distilled off from the obtained filtrate under reduced pressure, thereby obtaining a compound (1)-3 as a solid substance (yielding amount: 60 mg, yield: 98%).

The NMR data and the TOF-MS spectrum of the obtained compound (1)-3 are described below. FIG. 12 shows the measurement results of $^{1}H$-NMR. FIG. 13 shows the measurement results of $^{13}C$-NMR. FIG. 14 shows the measurement results of $^{29}Si$-NMR. FIG. 15 shows the measurement results of high resolution mass spectrometry (TOF-MS).

$^{1}H$-NMR ($CDCl_3$): 0.24 ppm, 4.73 ppm
$^{13}C$-NMR ($CDCl_3$): 0.2 ppm
$^{29}Si$-NMR ($CDCl_3$): -2.3 ppm, -109.6 ppm
HRMS (ESI) m/z calcd. for $C_{24}H_{84}NaO_{30}Si_{24}$ 1546. 9402 $[M+Na]^+$, found 1546. 9382.

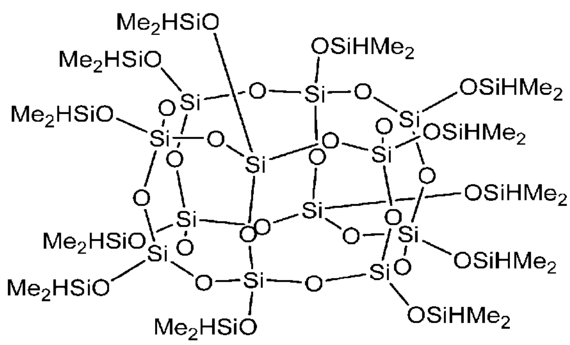

・・・(1)－3

[Example 4]

A compound (1)-4 was produced as the compound (1) by using the compound (10) obtained in Production

Example 2. More specifically, the process was as follows.

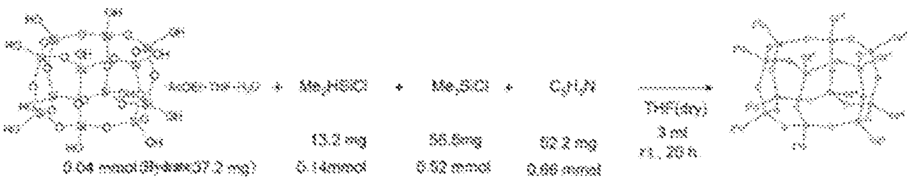

The compound (10) (36.6 mg, 0.04 mmol) was dissolved in THF (3 mL), chlorodimethylsilane (13.2 mg, 0.14 mmol) was added to the obtained solution, chlorotrimethylsilane (56.5 mg, 0.52 mmol) was added thereto, pyridine (52.2 mg, 0.66 mmol) was further added thereto, and the solution was stirred at room temperature for 20 hours, thereby obtaining a suspension. After the filtration through the filter, the solvent was distilled off from the obtained filtrate under reduced pressure. Thereafter, hexane (20 mL) was added thereto, the solution was filtered through a filter, and the solvent was distilled off from the obtained filtrate under reduced pressure, thereby obtaining a series of compounds (1)-4 as solid substances. It was confirmed that a series of compounds (1)-4 ("$Si_{12}O_{18}[OSiMe_2H]_n[OSiMe_3]_{12-n}$") (n = 0 to 12) were generated based on the time-of-flight mass spectrometry (TOF-MS) of the solid substances.

FIG. 16 shows the measurement results of $^1$H-NMR. FIG. 17 shows the measurement results of $^{13}$C-NMR. FIG. 18 shows the measurement results of $^{29}$Si-NMR. FIGS. 19 to 28 show the measurement results of high resolution mass spectrometry (TOF-MS) of each compound. FIG. 29 shows the measurement results of high resolution mass spectrometry (TOF-MS) of the series of compounds (1)-4. FIGS. 19 to 28 show one example of the position of the substituent in the series of compounds (1)-4 on the left side of each of the figures. In the high resolution mass spectrometry, the difference in the position of the substituent is not observed. It was shown that the series of compounds (1)-4 were obtained as a mixture.

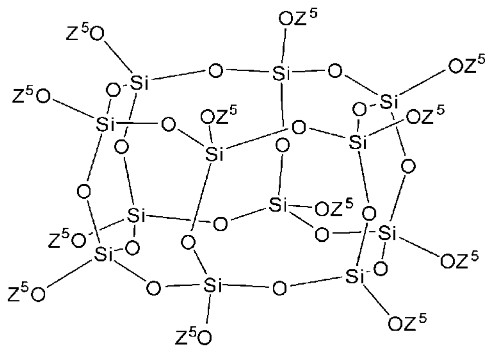

・・・(1) −4

In Formula (1), at least one $Z^5$ represents a dimethylsilyl group, and at least one $Z^5$ represents a trimethylsilyl group.

[Example 5]

A compound (1)-5 was produced as the compound (1) by using the compound (10) obtained in Production Example 2. More specifically, the process was as follows.

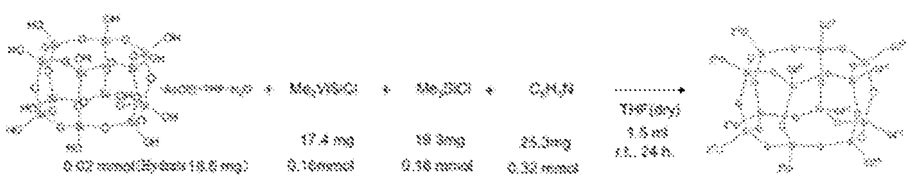

The compound (10) (18.6 mg, 0.02 mmol) was dissolved in THF (1.5 mL), chlorodimethylvinylsilane (17.4 mg, 0.16 mmol) and chlorotrimethylsilane (19.3 mg, 0.16 mmol) were added to the obtained solution, and pyridine (25.3 mg, 0.32 mmol) was further added thereto, and the solution was stirred at room temperature for 24 hours, thereby obtaining a suspension. After the filtration through the filter, the solvent was distilled off from the obtained filtrate under reduced pressure. Thereafter, hexane (20 mL) was added thereto, the solution was filtered through a filter, and the solvent was distilled off under reduced pressure from the obtained filtrate, thereby obtaining a series of compounds (1)-5 as solid substances. It was confirmed that the series of compounds (1)-5 ("$Si_{12}O_{18}[OSiMe_2Vi]_n[OSiMe_3]_{12-n}$") (n = 0 to 12) were

generated based on the time-of-flight mass spectrometry (TOF-MS) of the solid substances.

FIG. 30 shows the measurement results of $^{1}H$-NMR. FIG. 31 shows the measurement results of $^{13}C$-NMR. FIG. 32 shows the measurement results of $^{29}Si$-NMR. FIGS. 33 to 43 show the measurement results of high resolution mass spectrometry (TOF-MS) of each compound. FIG. 44 shows the measurement results of high resolution mass spectrometry (TOF-MS) of the series of compounds (1)-4. FIGS. 33 to 43 show one example of the position of the substituent in the series of compounds (1)-5 on the left side of each of the figures. In the high resolution mass spectrometry, the difference in the position of the substituent is not observed. It was found that the series of compounds (1)-5 were obtained as a mixture.

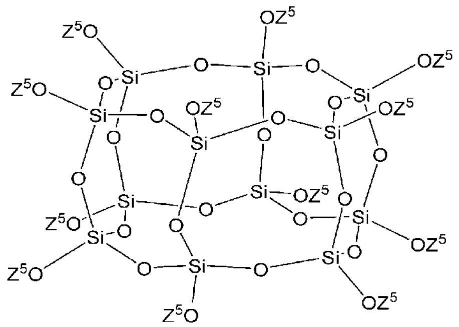

・・・(1) −5

In Formula (1), at least one $Z^5$ represents a dimethylvinylsilyl group, and at least one $Z^5$ represents a trimethylsilyl group.

INDUSTRIAL APPLICABILITY

The present invention can be used as a functional silicon material or an intermediate thereof, and as a method for producing the same.

## Claims

1. A compound represented by Formula (1),

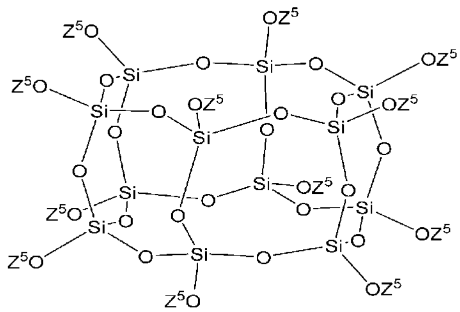

・・・(1)

(in Formula (1), a plurality of $Z^5$'s each independently represent a hydrogen atom or a group represented by $-SiR^1R^2R^3$, where at least one of the plurality of $Z^5$'s represents a group represented by $-SiR^1R^2R^3$, $R^1$, $R^2$, and $R^3$ each independently represent a hydrogen atom, an alkyl group which may have a substituent, an alkenyl group which may have a substituent, or an aryl group which may have a substituent, and in a case where two or more of $R^1$, $R^2$, and $R^3$ represent the alkyl group, the alkenyl group, or the aryl group, these groups may be bonded to each other to form a ring).

2. A method for producing a compound, comprising:

reacting at least one compound (3) represented by Formula (3) with a compound (10) represented by Formula (10) to obtain a compound (1) represented by Formula (1),

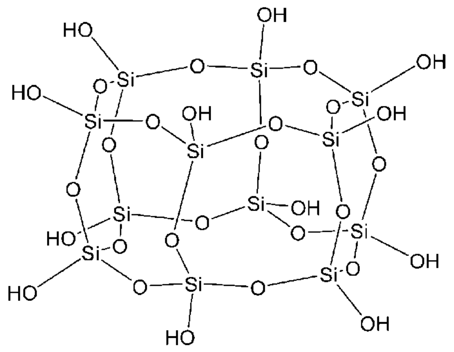

・・・(10)

$X\text{-}SiR^1R^2R^3$ ⋯ (3)

(in Formula (3), $R^1$, $R^2$, and $R^3$ each independently represent a hydrogen atom, an alkyl group which may have a substituent, an alkenyl group which may have a substituent, or an aryl group which may have a substituent, and in a case where two or more of $R^1$, $R^2$, and $R^3$ represent the alkyl group, the alkenyl group, or the aryl group, these groups may be bonded to each other to form a ring, and X represents a halogen atom),

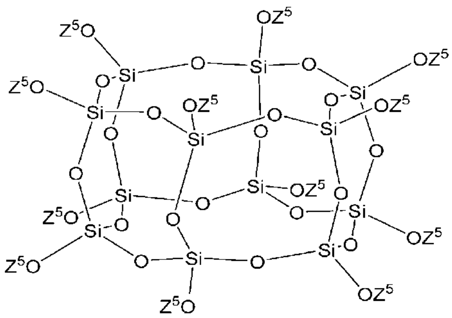

・・・(1)

(in Formula (1), a plurality of $Z^5$'s each independently represent a hydrogen atom or a group represented by $-SiR^1R^2R^3$, where at least one of the plurality of $Z^5$'s represents a group represented by $-SiR^1R^2R^3$,
$R^1$, $R^2$, and $R^3$ each independently represent a hydrogen atom, an alkyl group which may have a substituent, an alkenyl group which may have a substituent, or an aryl group which may have a substituent, and in a case where two or more of $R^1$, $R^2$, and $R^3$ represent the alkyl group, the alkenyl group, or the aryl group, these groups may be bonded to each other to form a ring).

**3.** The method for producing a compound according to Claim 2,
wherein at least two or more of the compounds (3) react with each other.

**4.** The method for producing a compound according to Claim 2 or 3, further comprising:

a proton exchange step of reacting a silicate having a structure represented by Formula (10)' with an acidic compound to obtain the compound (10),

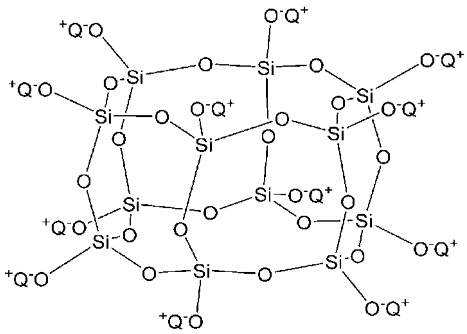

・・・(10)'

(in Formula (10)', $Q^+$ represents a cation).

**5.** The method for producing a compound according to Claim 4, wherein the proton exchange step includes an isolation step of isolating the compound (10) as a powder from a solution containing the compound (10).

FIG. 1

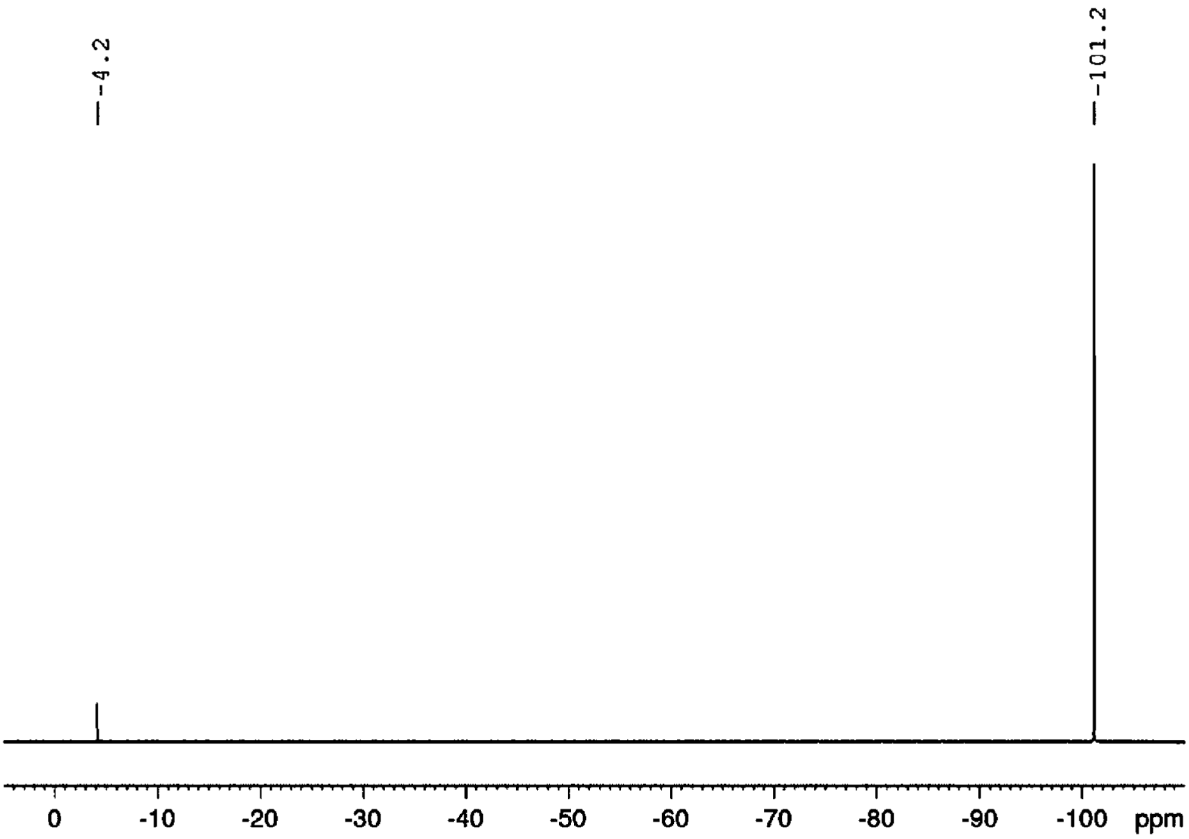

FIG. 2

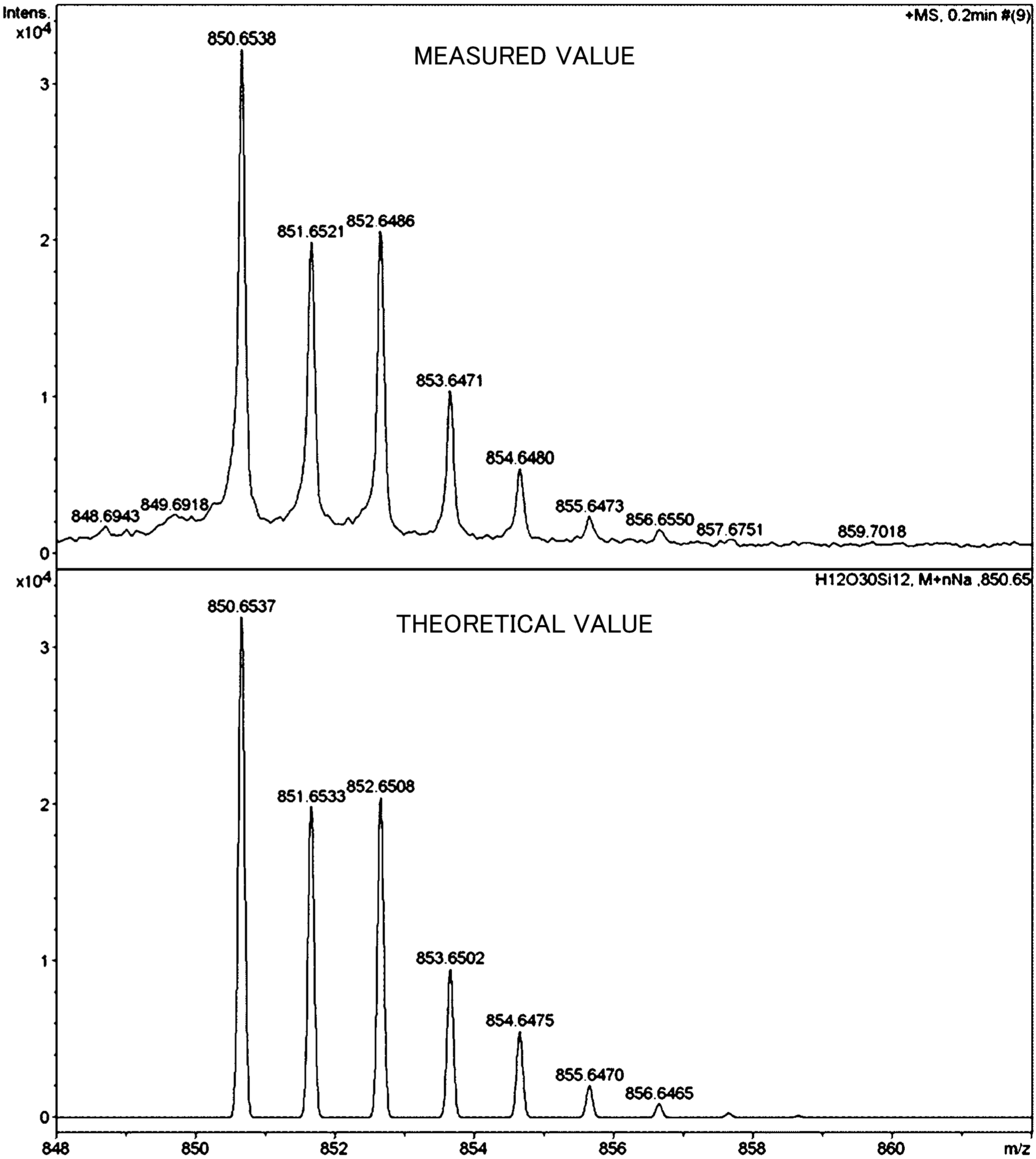
Intens.
x10^4
+MS, 0.2min #(9)
MEASURED VALUE
850.6538
851.6521
852.6486
853.6471
854.6480
855.6473
856.6550
857.6751
859.7018
848.6943
849.6918
x10^4
H12O30Si12, M+nNa ,850.65
THEORETICAL VALUE
850.6537
851.6533
852.6508
853.6502
854.6475
855.6470
856.6465
m/z

FIG. 3

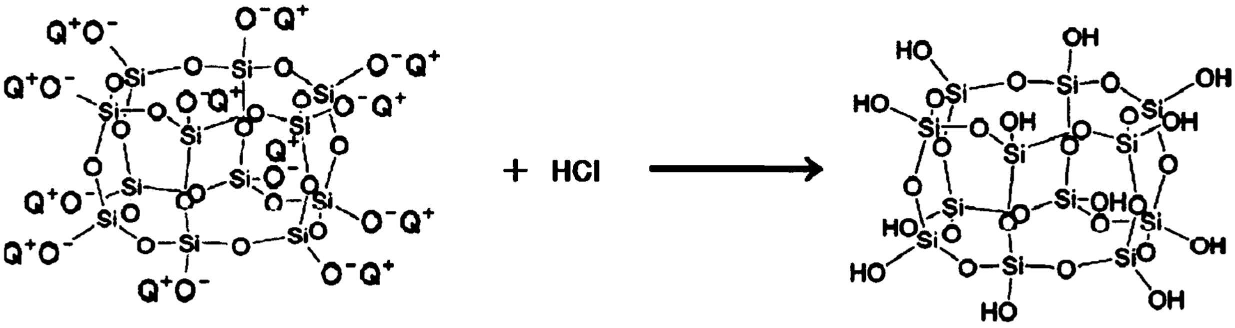


(1)'

(1)

FIG. 4

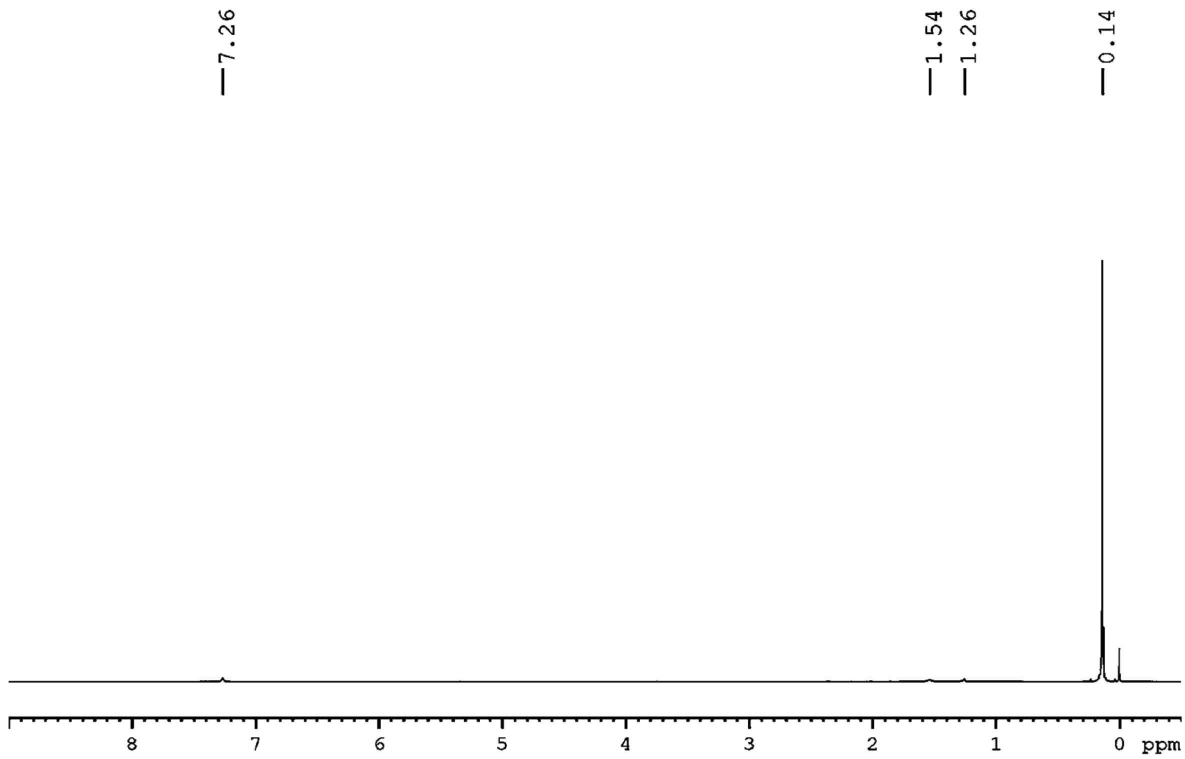

FIG. 5

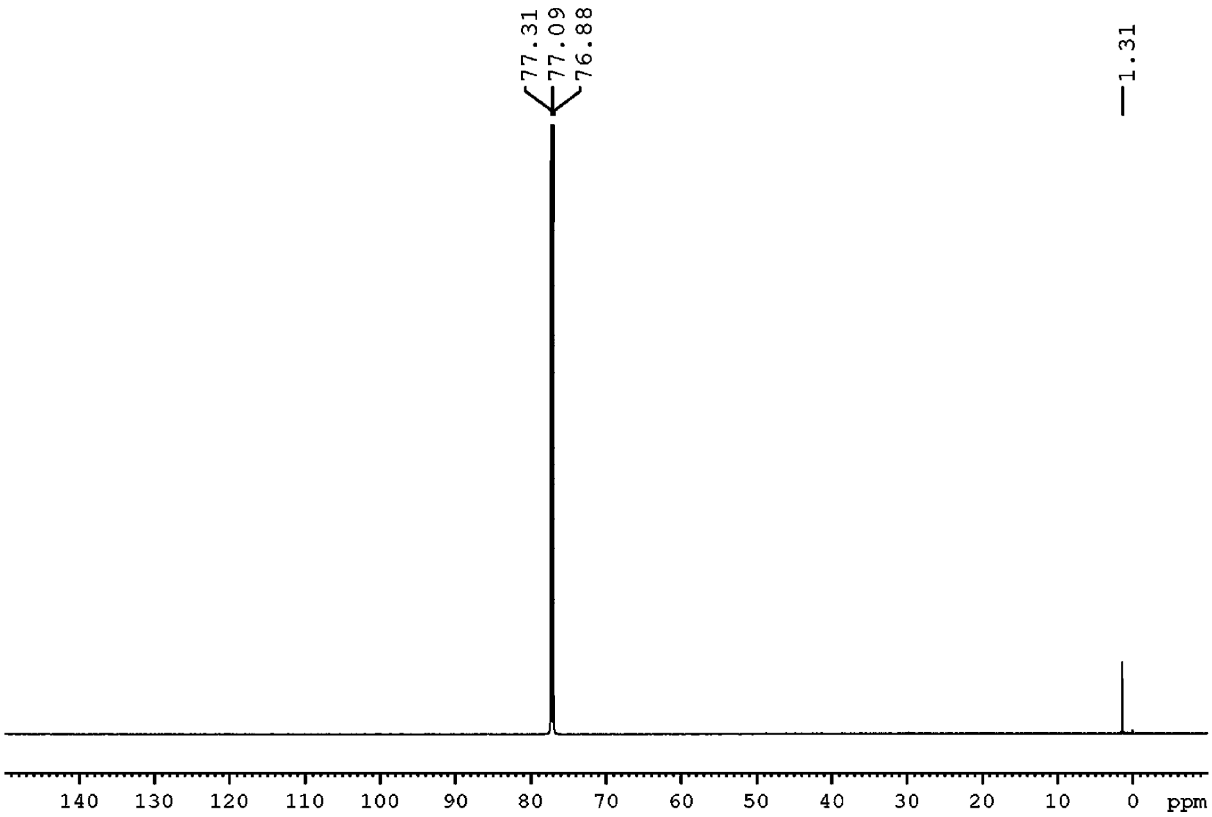
77.31
77.09
76.88
1.31
140
130
120
110
100
90
80
70
60
50
40
30
20
10
0
ppm

FIG. 6

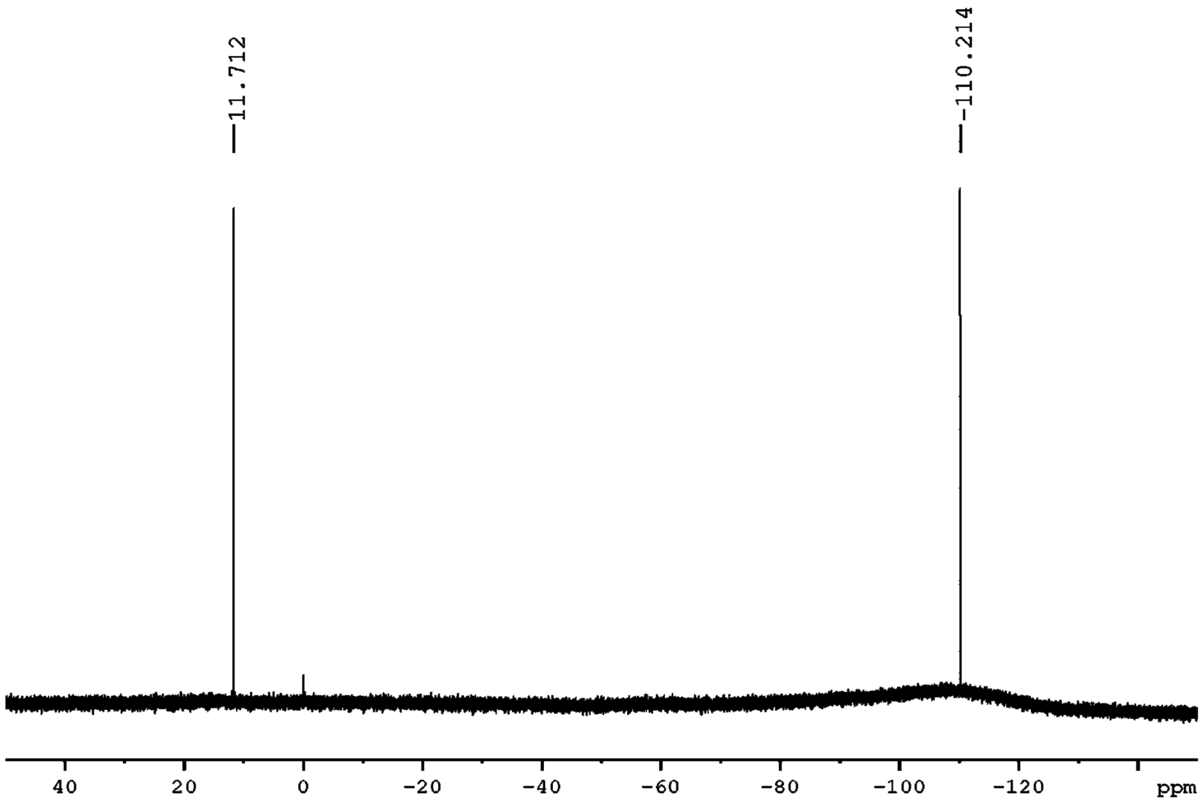
11.712
-110.214
40
20
0
-20
-40
-60
-80
-100
-120
ppm

FIG. 7

**Y1680_**
**TMS_12_1712-1730 ver.1**

MEASURED VALUE (M+Na) 1715.1246
THEORETICAL VALUE (M+Na) 1715.1280

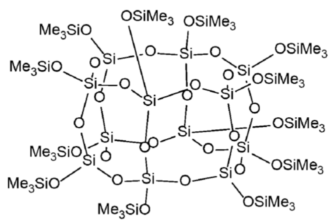

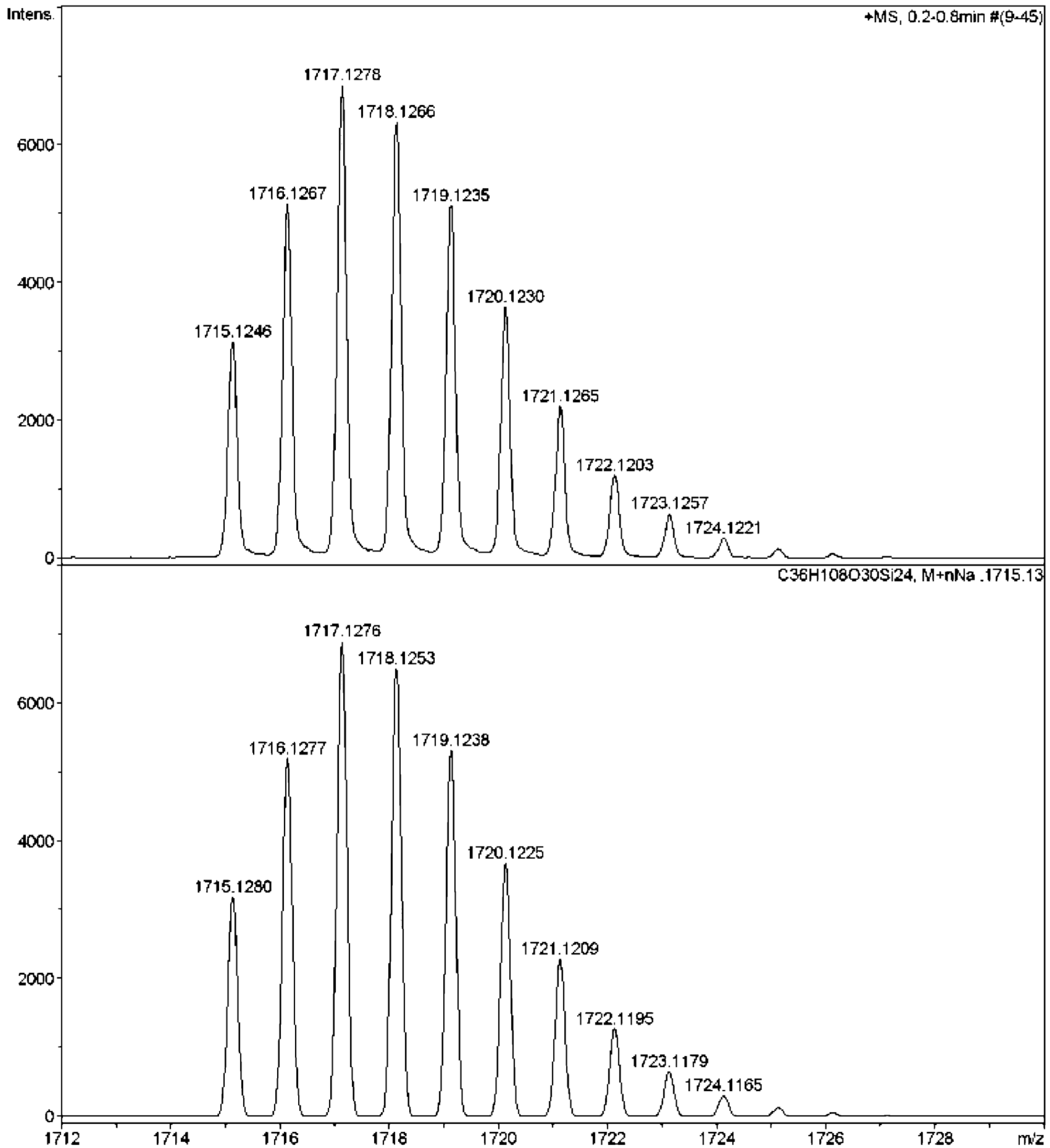

FIG. 8

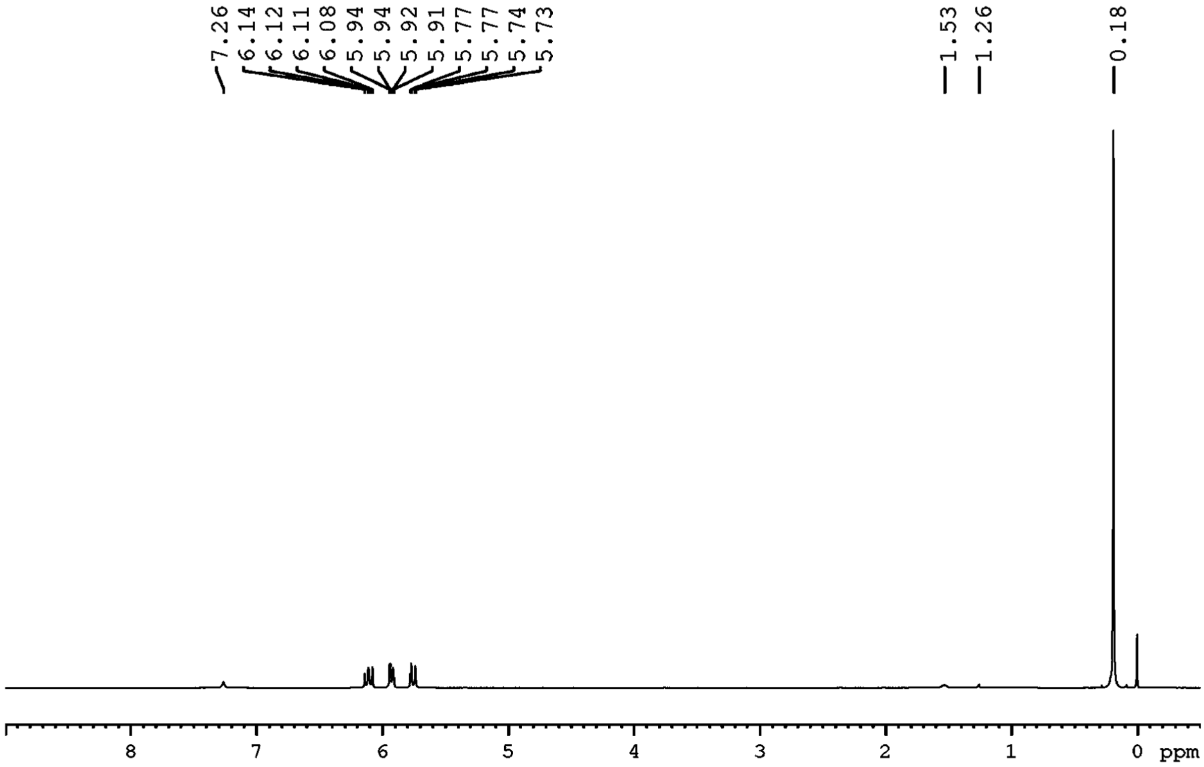
7.26
6.14
6.12
6.11
6.08
5.94
5.94
5.92
5.91
5.77
5.77
5.74
5.73
1.53
1.26
0.18
8
7
6
5
4
3
2
1
0 ppm

FIG. 9

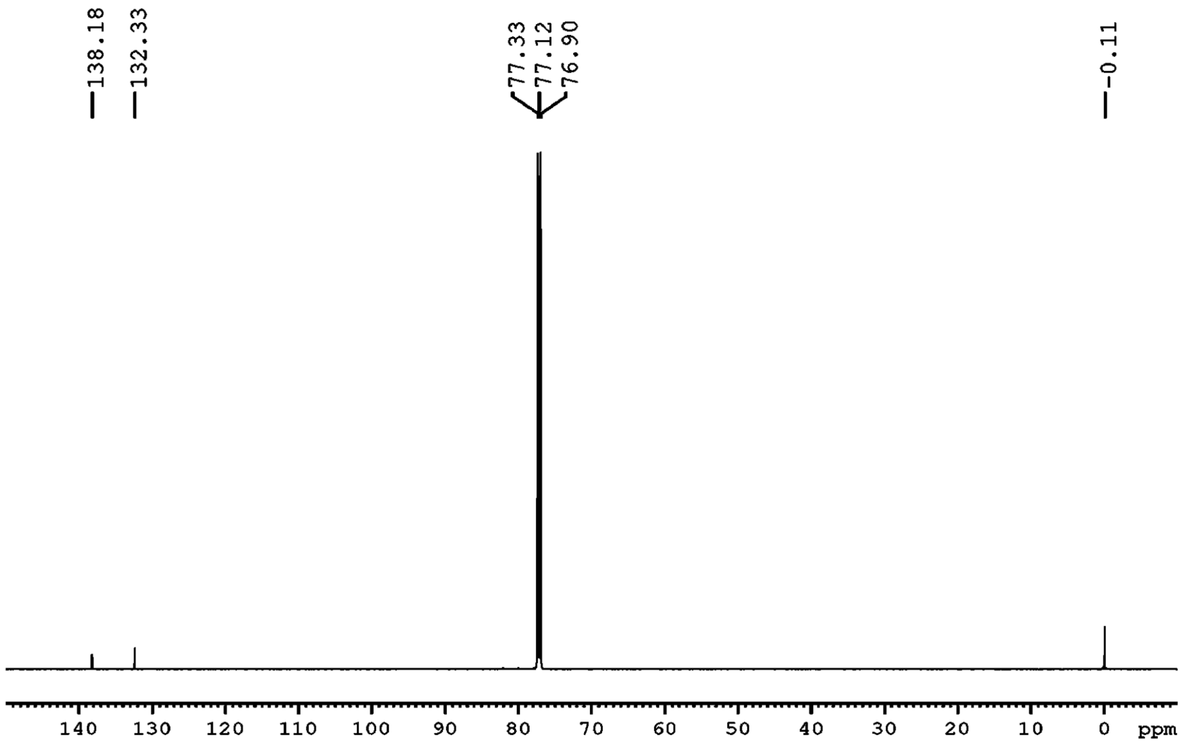
138.18
132.33
77.33
77.12
76.90
-0.11
140
130
120
110
100
90
80
70
60
50
40
30
20
10
0 ppm

FIG. 10

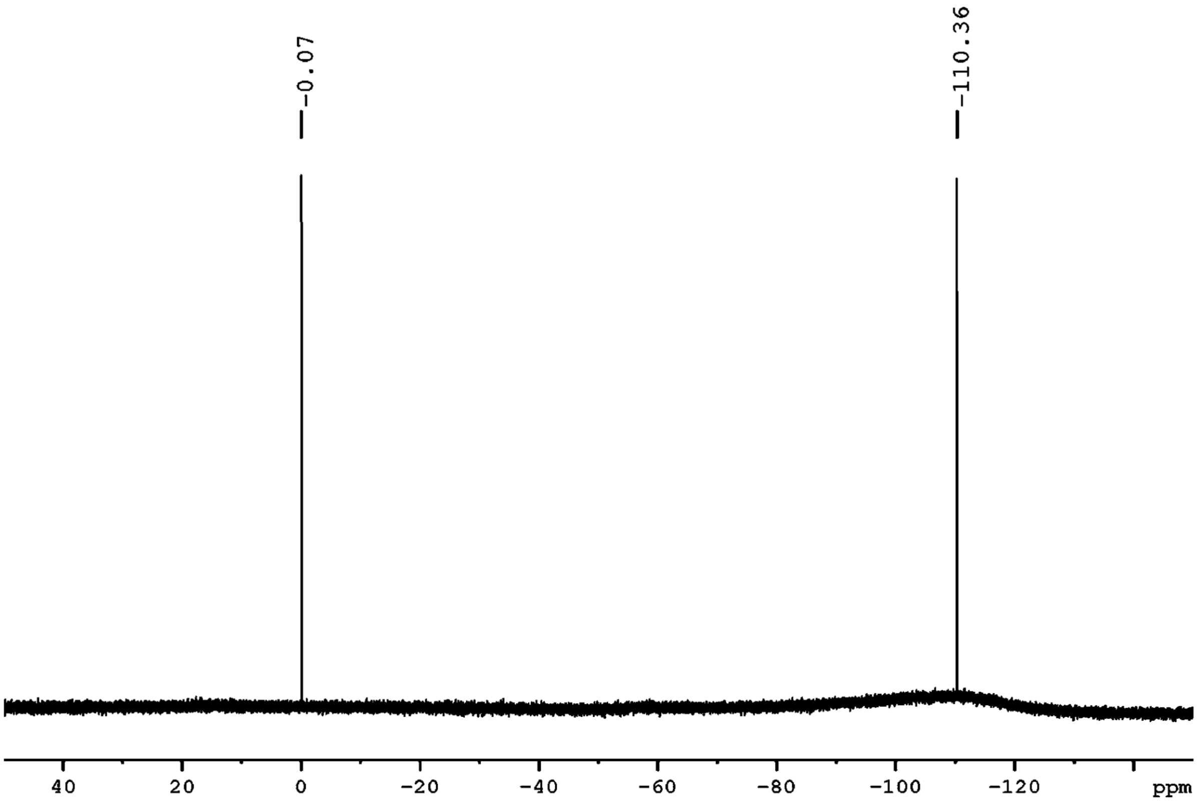

# FIG. 11

**Y1671_**
**SiMe2Vi_12_1858.5-1870 ver.1**

MEASURED VALUE (M+Na) 1859.1272
THEORETICAL VALUE (M+Na) 1859.1280

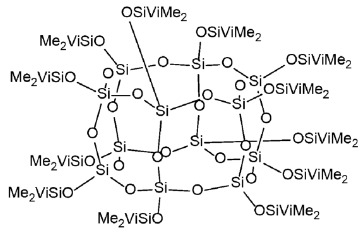

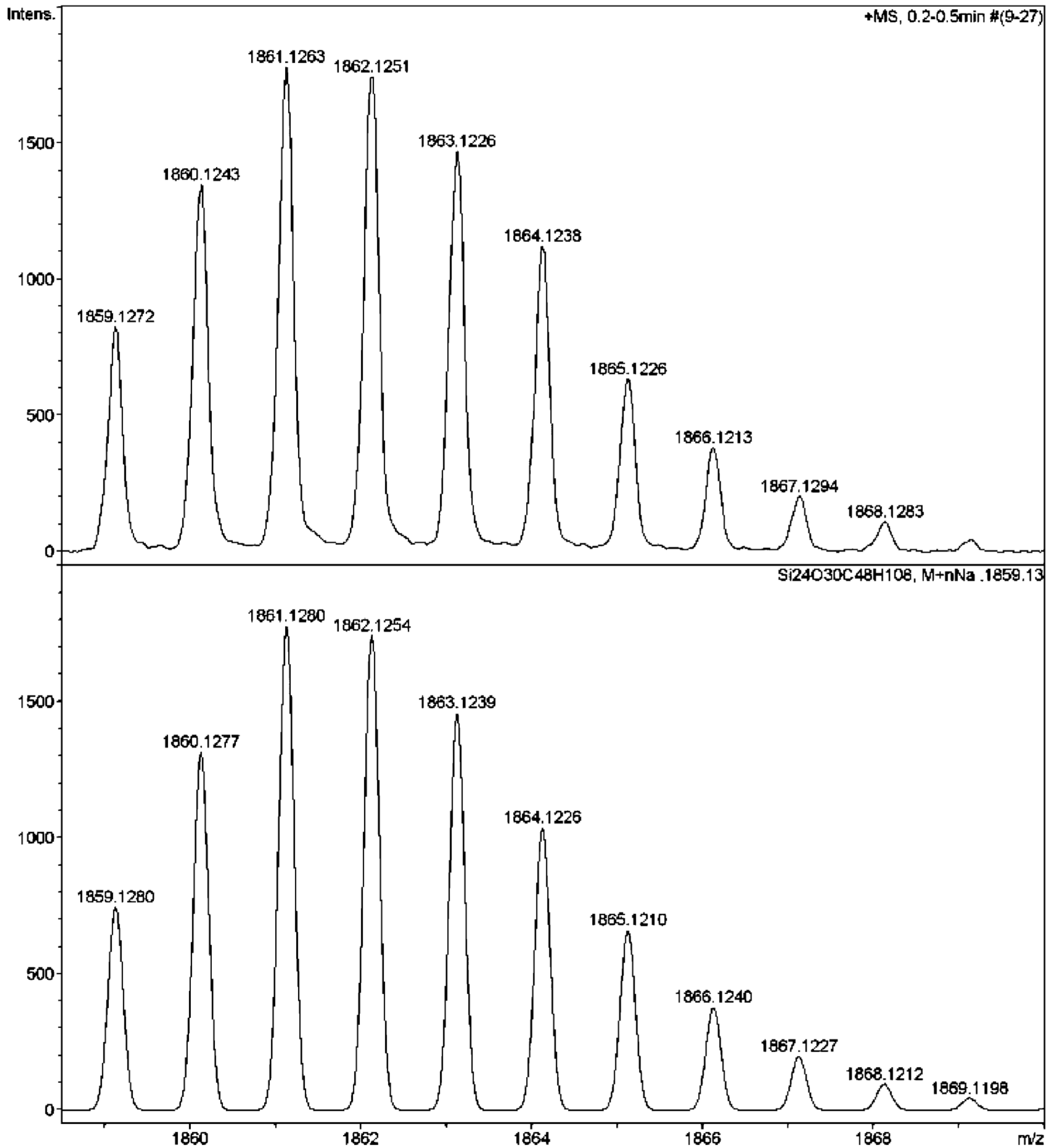

FIG. 12

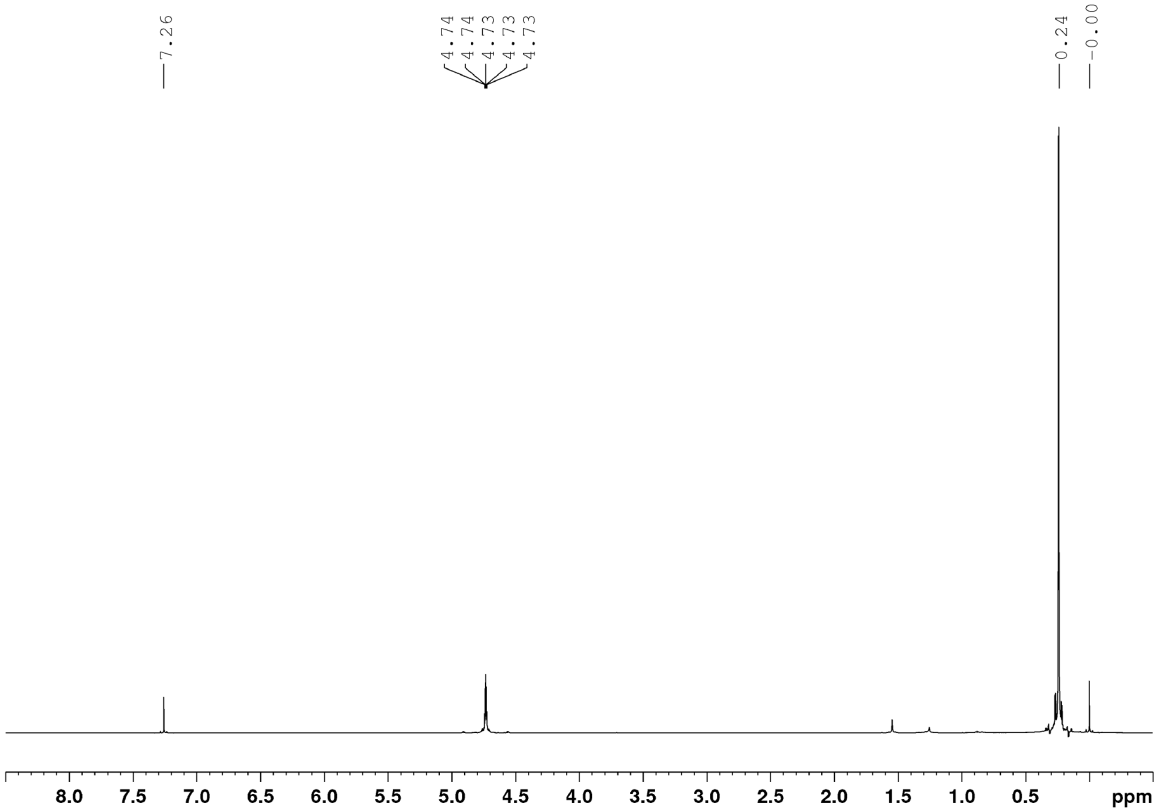
7.26
4.74
4.74
4.73
4.73
4.73
0.24
-0.00
8.0
7.5
7.0
6.5
6.0
5.5
5.0
4.5
4.0
3.5
3.0
2.5
2.0
1.5
1.0
0.5
ppm

FIG. 13

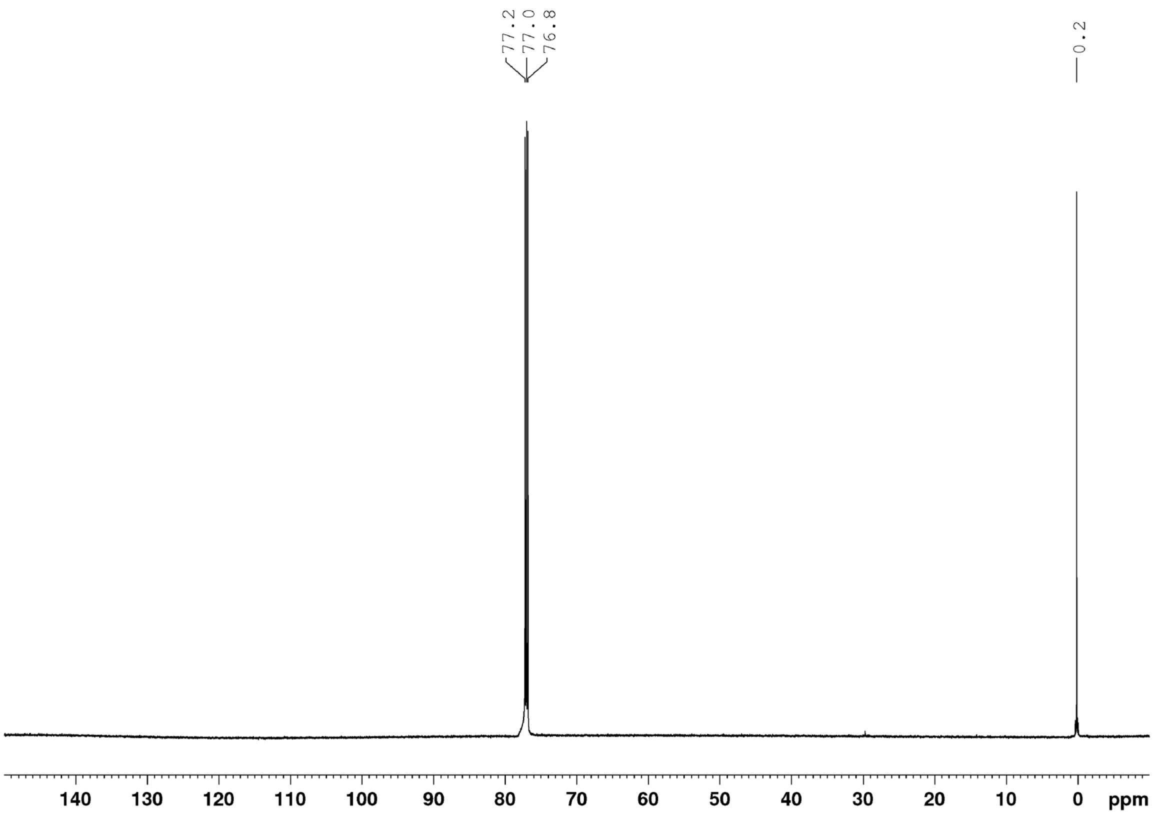
77.2
77.0
76.8
0.2
140
130
120
110
100
90
80
70
60
50
40
30
20
10
0
ppm

FIG. 14

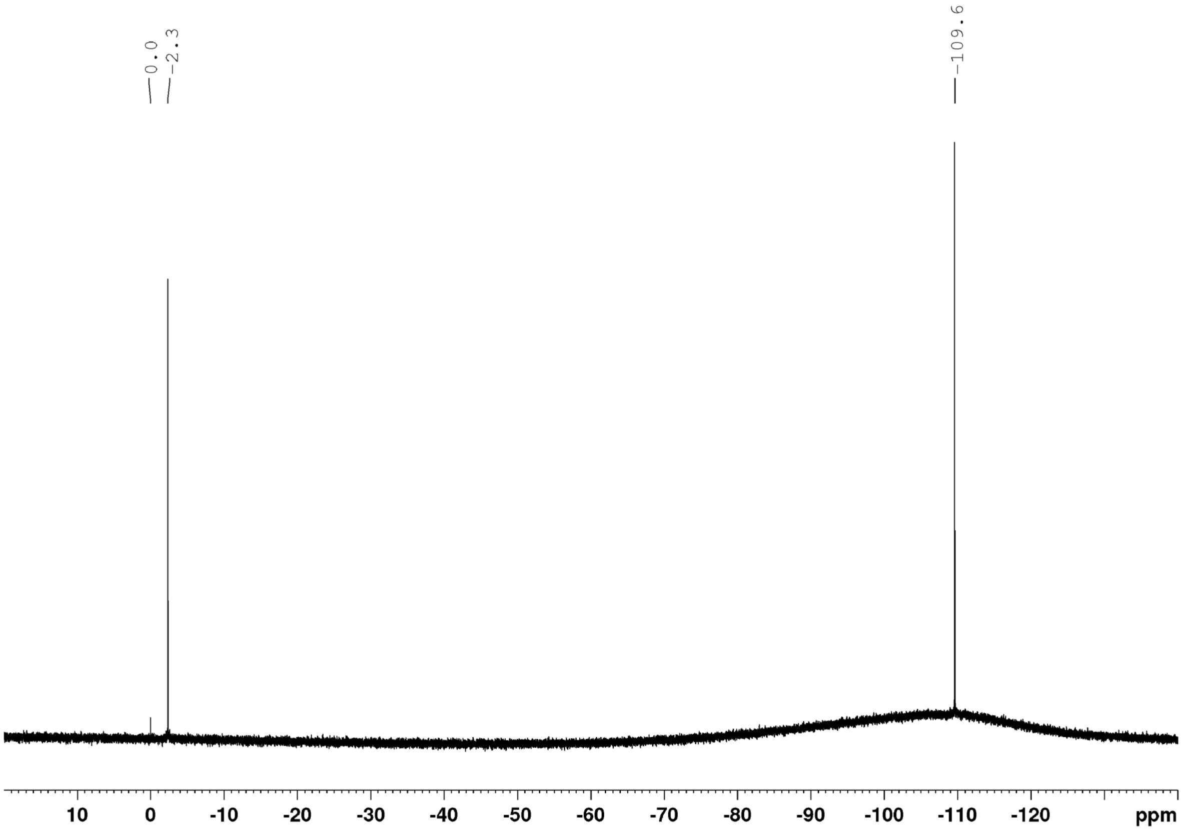

# FIG. 15

**Y1670_**
**SiMe2H_12_1545−1560 ver.1**

MEASURED VALUE (M+Na) 1546.9382
THEORETICAL VALUE (M+Na) 1546.9402

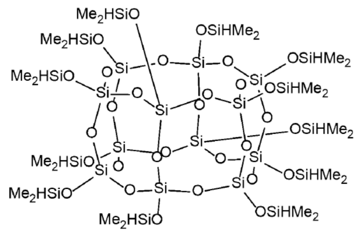

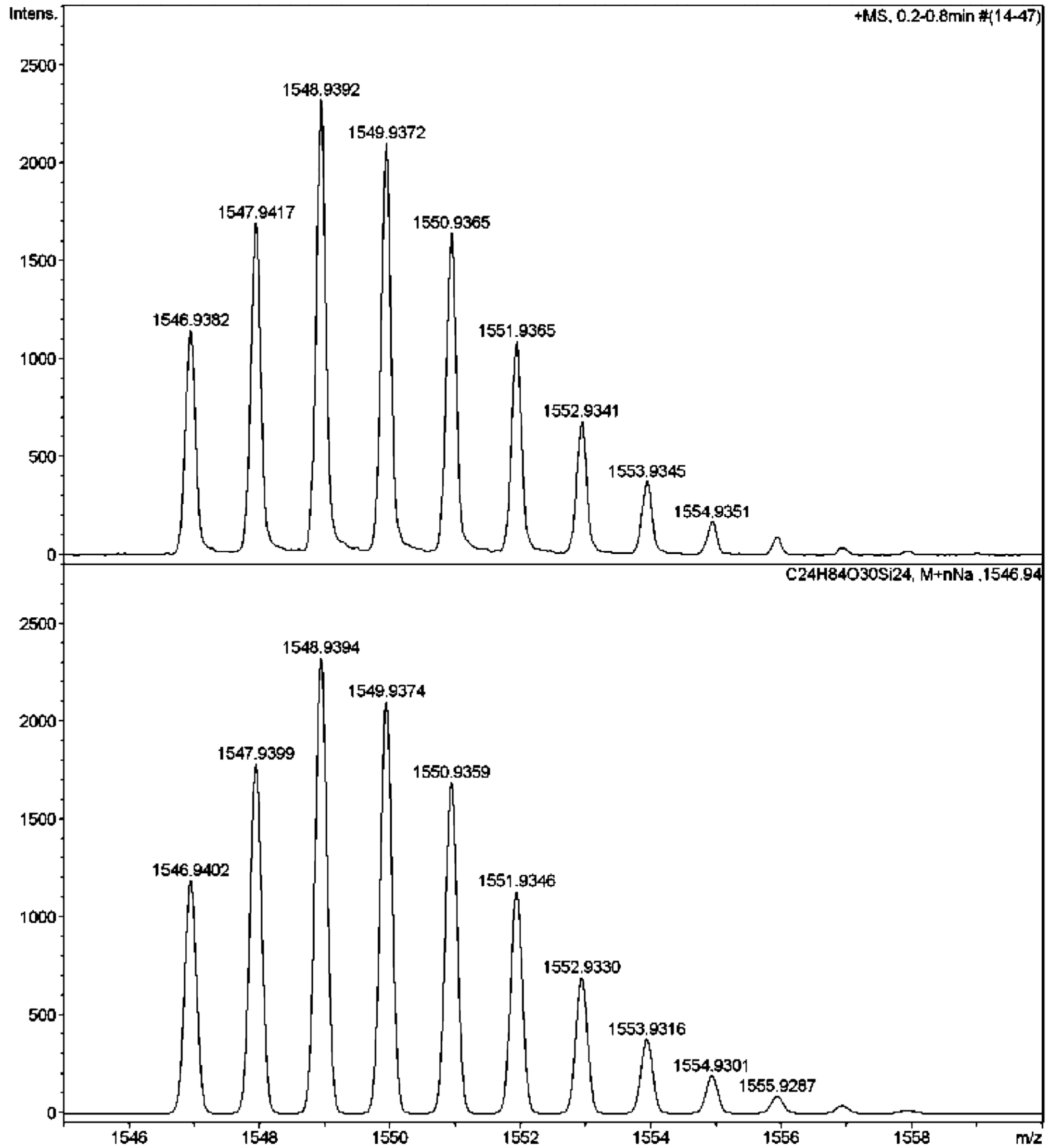

FIG. 16

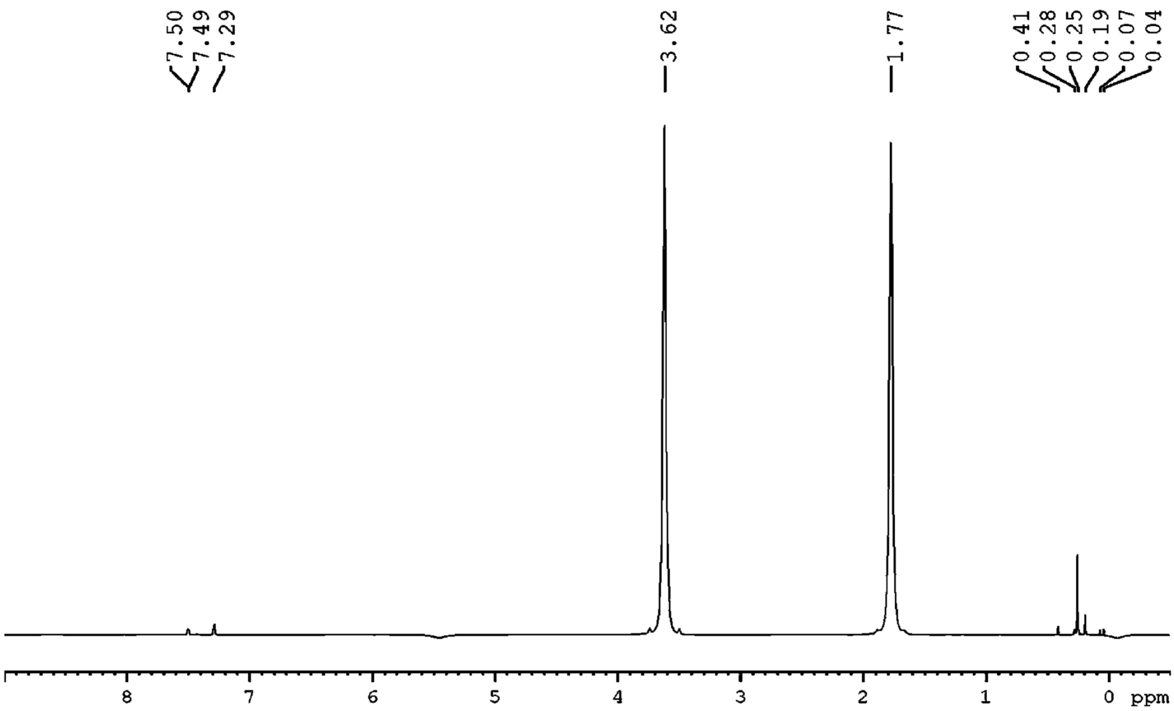
7.50
7.49
7.29
3.62
1.77
0.41
0.28
0.25
0.19
0.07
0.04
8
7
6
5
4
3
2
1
0 ppm

FIG. 17

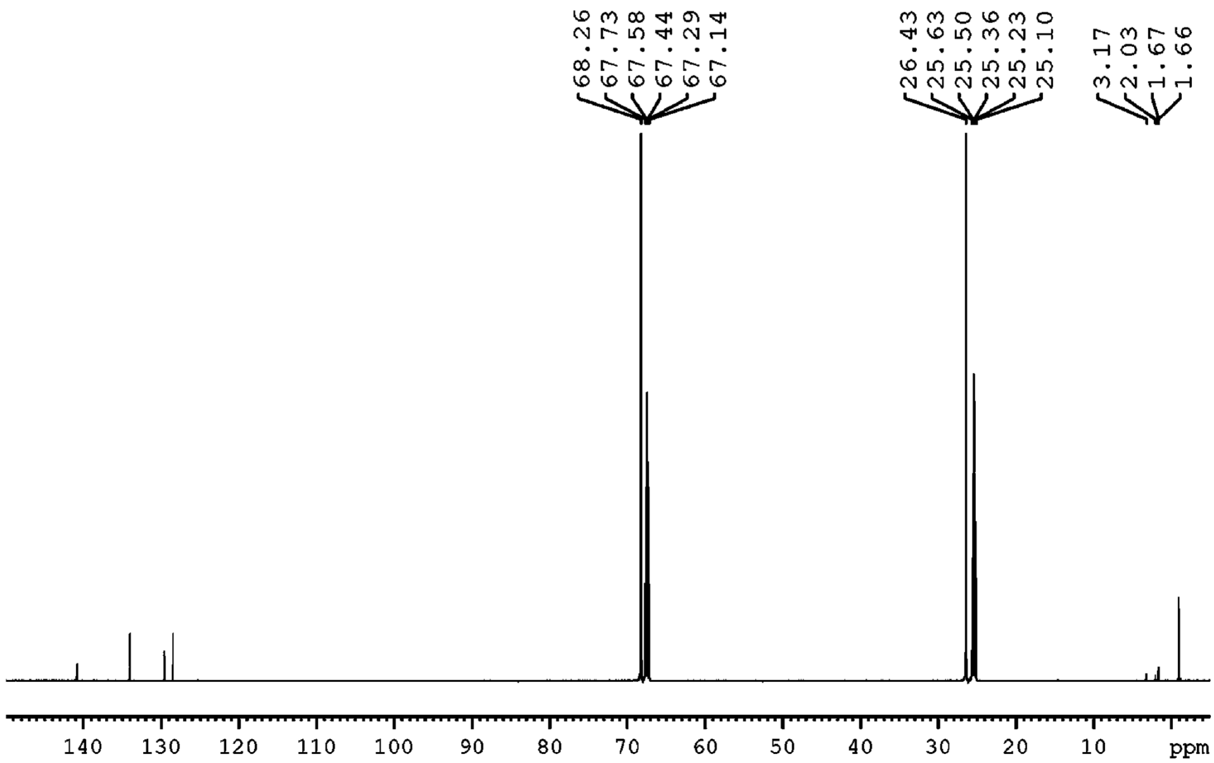
68.26
67.73
67.58
67.44
67.29
67.14
26.43
25.63
25.50
25.36
25.23
25.10
3.17
2.03
1.67
1.66
140
130
120
110
100
90
80
70
60
50
40
30
20
10
ppm

FIG. 18

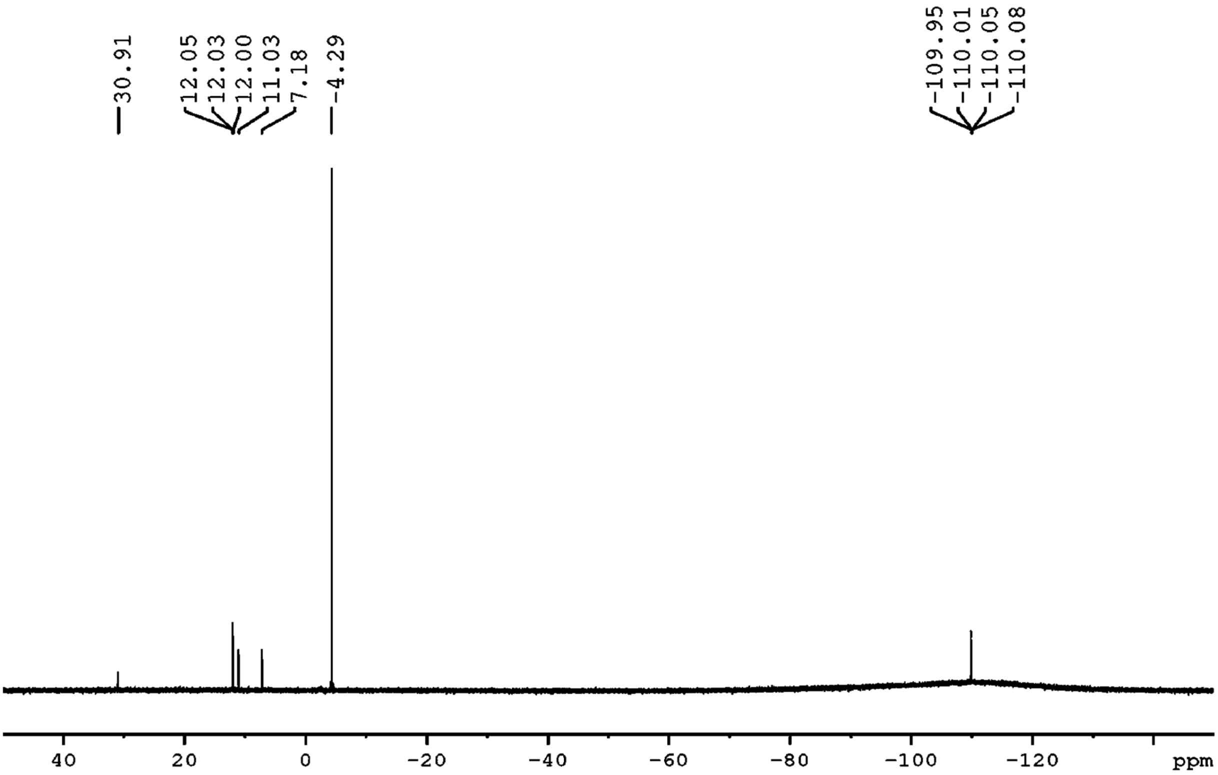
30.91
12.05
12.03
12.00
11.03
7.18
-4.29
-109.95
-110.01
-110.05
-110.08
40
20
0
-20
-40
-60
-80
-100
-120
ppm

# FIG. 19

**Y1697-copy_**
**SiMe2H_1_TMS_11_1700-1714 ver.1**

MEASURED VALUE (M+Na) 1701.1146
THEORETICAL VALUE (M+Na) 1701.1123

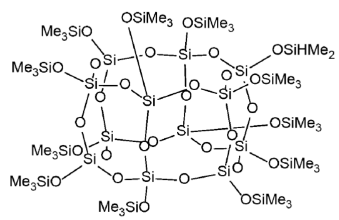

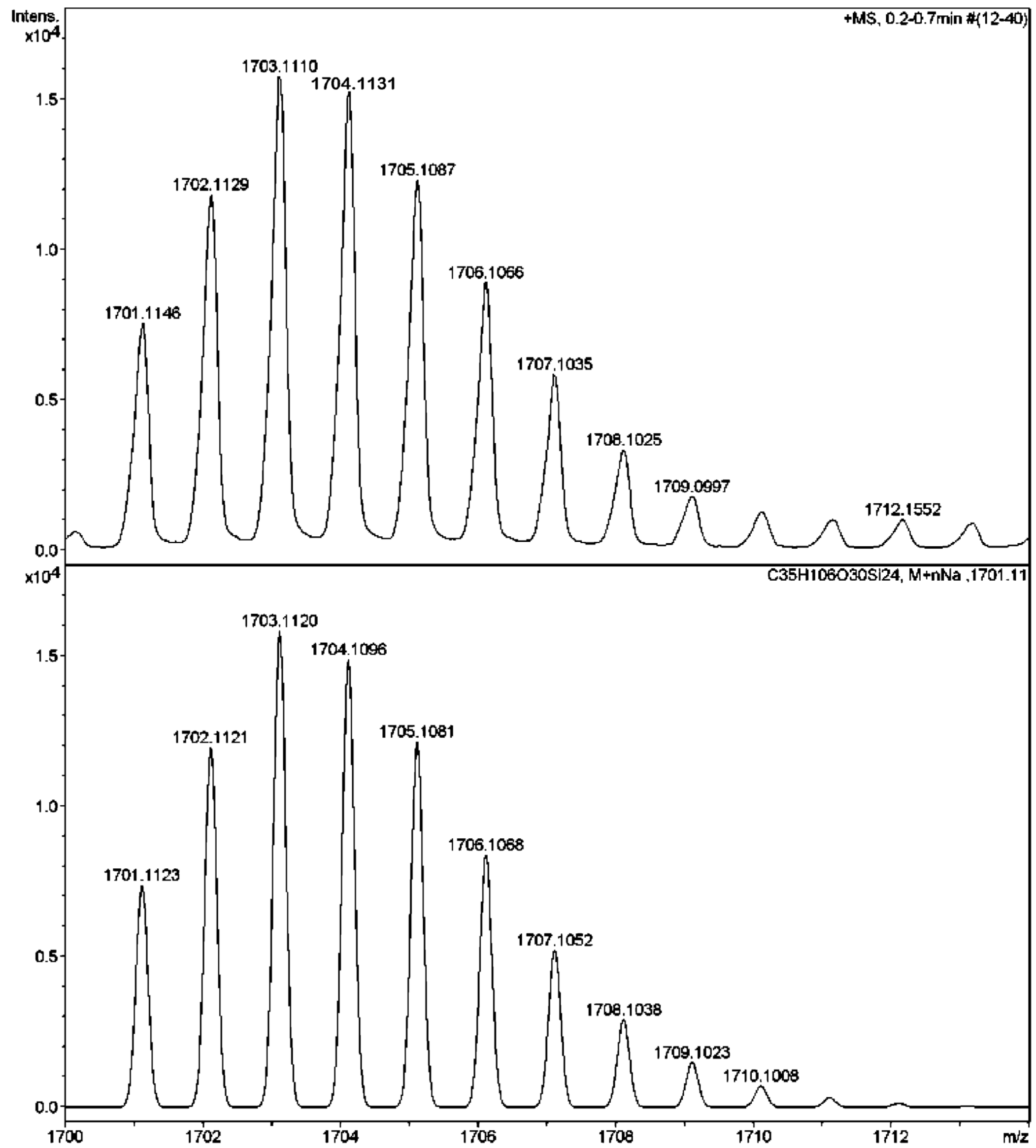

# FIG. 20

Y1697-copy_
SiMe2H_2_TMS_10_1686-1700 ver.1

MEASURED VALUE (M+Na)1687.1011
THEORETICAL VALUE (M+Na)1687.0967

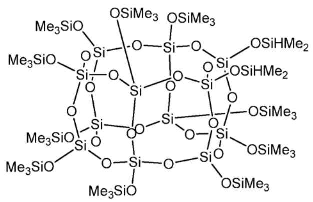

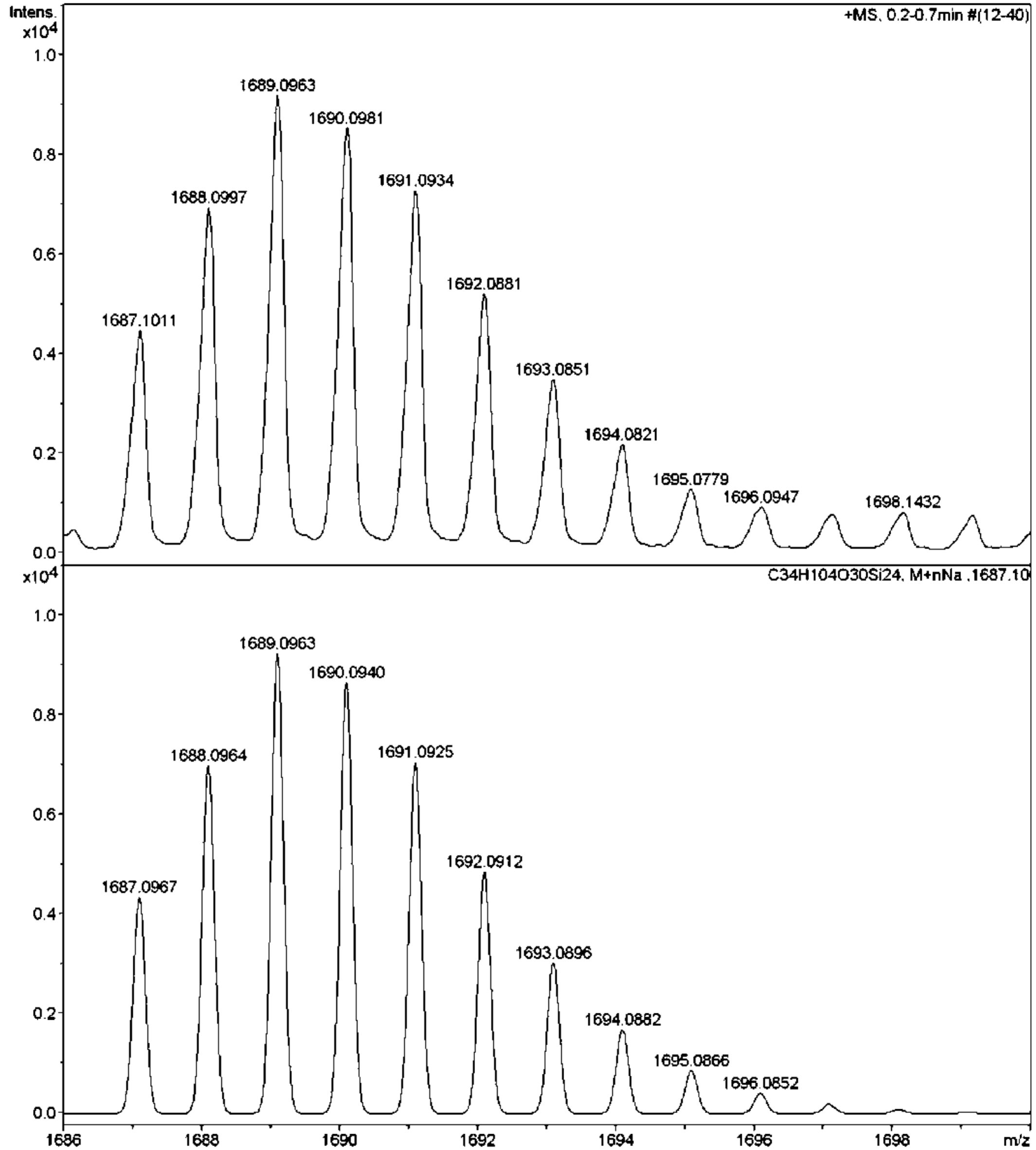

FIG. 21 Y1697-copy_
SiMe2H_3_TMS_9_1672-1686 ver.1

MEASURED VALUE (M+Na) 1673.0827
THEORETICAL VALUE (M+Na) 1673.0810

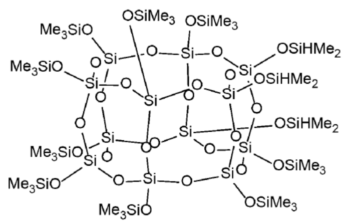

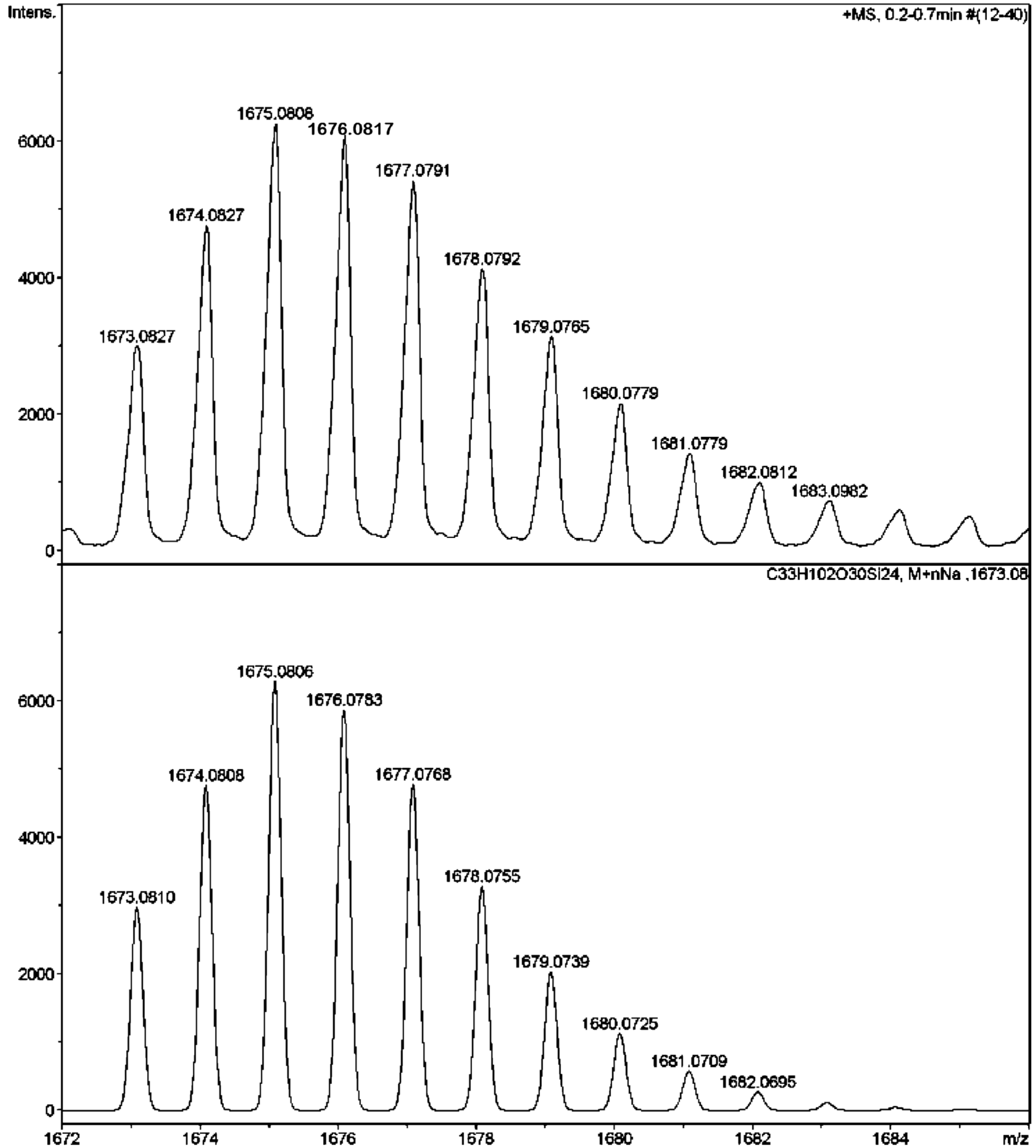

# FIG. 22

**Y1697-copy_**
**SiMe2H_4_TMS_8_1658-1672 ver.1**

MEASURED VALUE (M+Na) 1659.0662
THEORETICAL VALUE (M+Na) 1659.0654

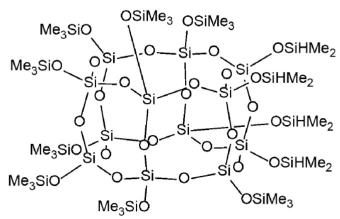

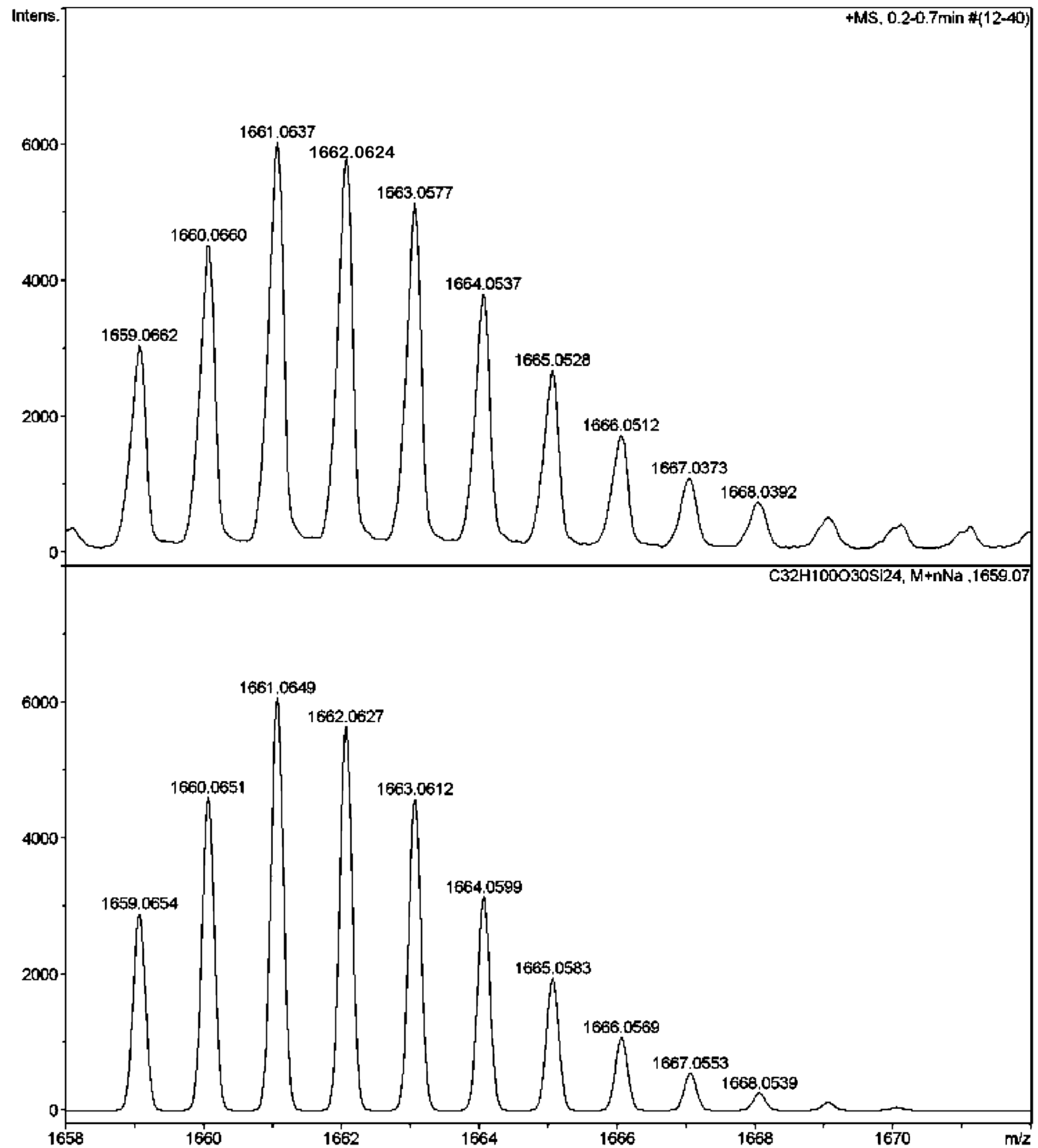

FIG. 23

Y1697-copy_
SiMe2H_5_TMS_7_1644-1658 ver.1

MEASURED VALUE (M+Na) 1645.0623
THEORETICAL VALUE (M+Na) 1645.0497

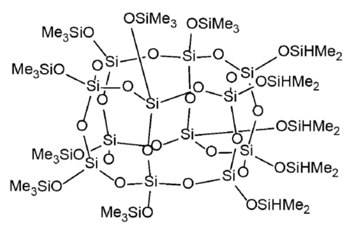

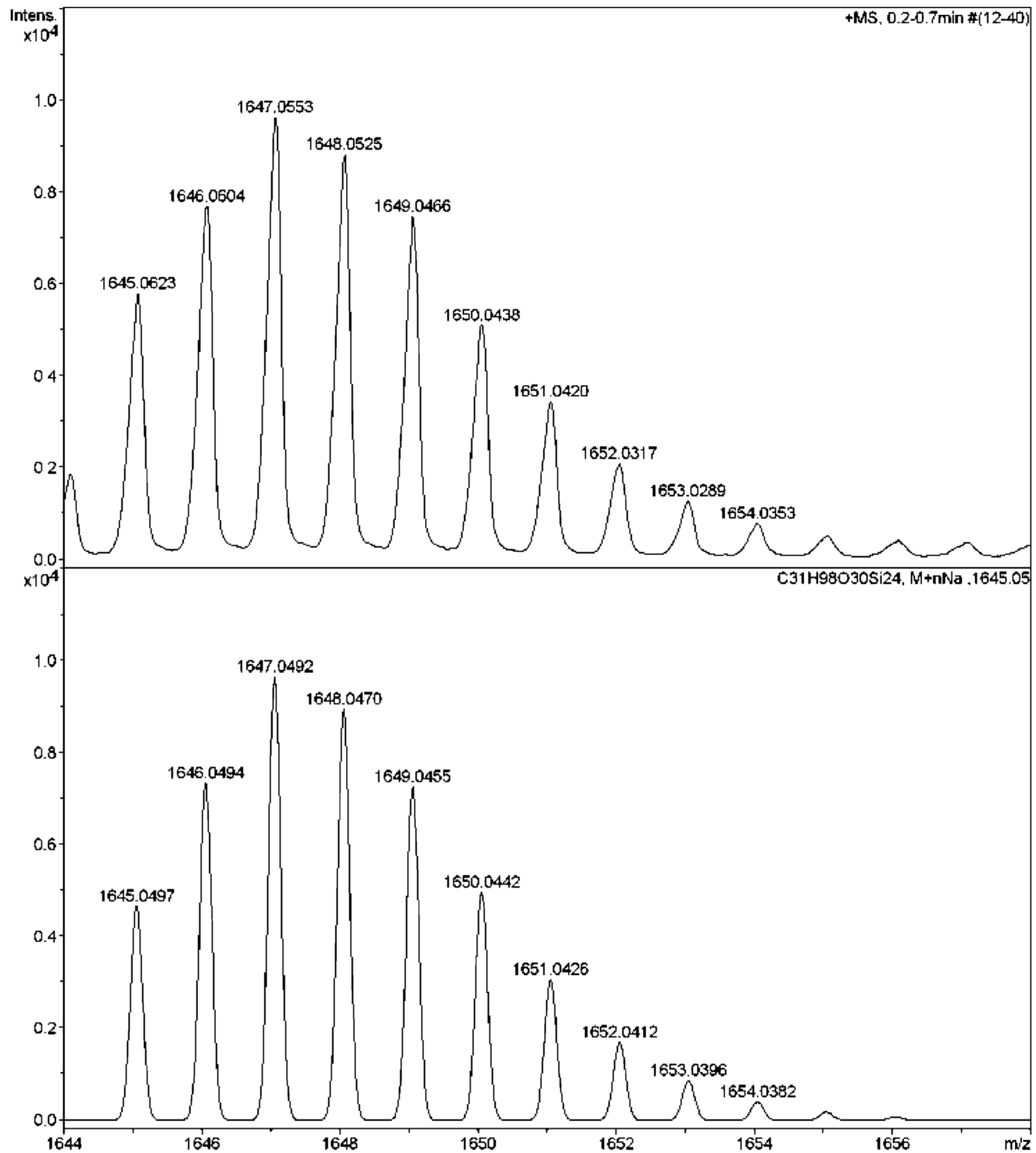

FIG. 24 Y1697-copy_
SiMe2H_6_TMS_6_1630-1644 ver.1

MEASURED VALUE (M+Na) 1631.0449
THEORETICAL VALUE (M+Na) 1631.0341

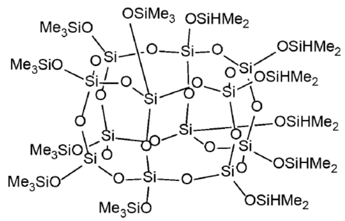

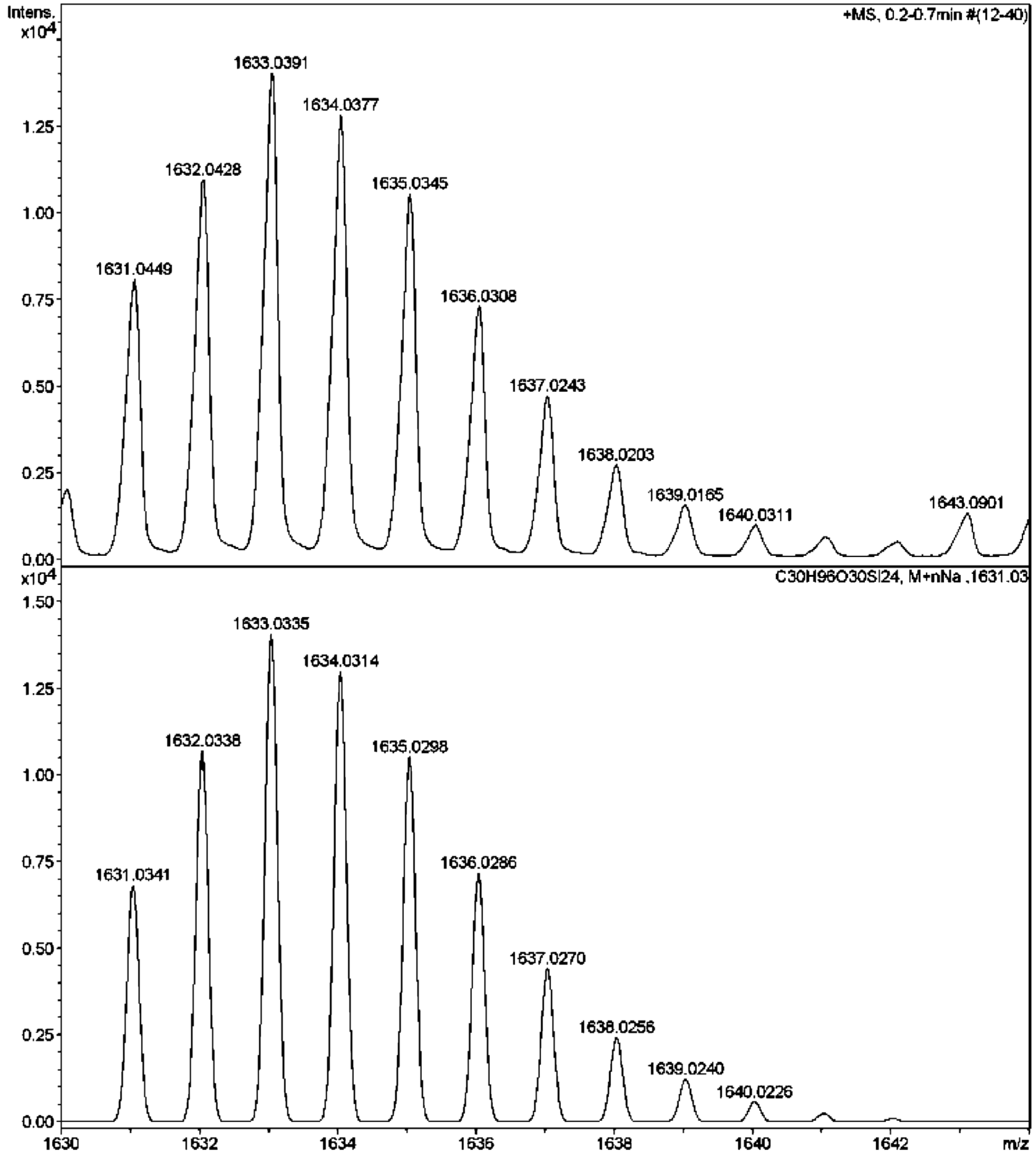

FIG. 25 Y1697-copy_
SiMe2H_7_TMS_5_1616-1630 ver.1

MEASURED VALUE (M+Na) 1617.0259
THEORETICAL VALUE (M+Na) 1617.0184

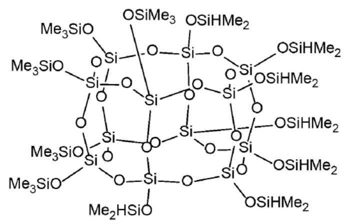

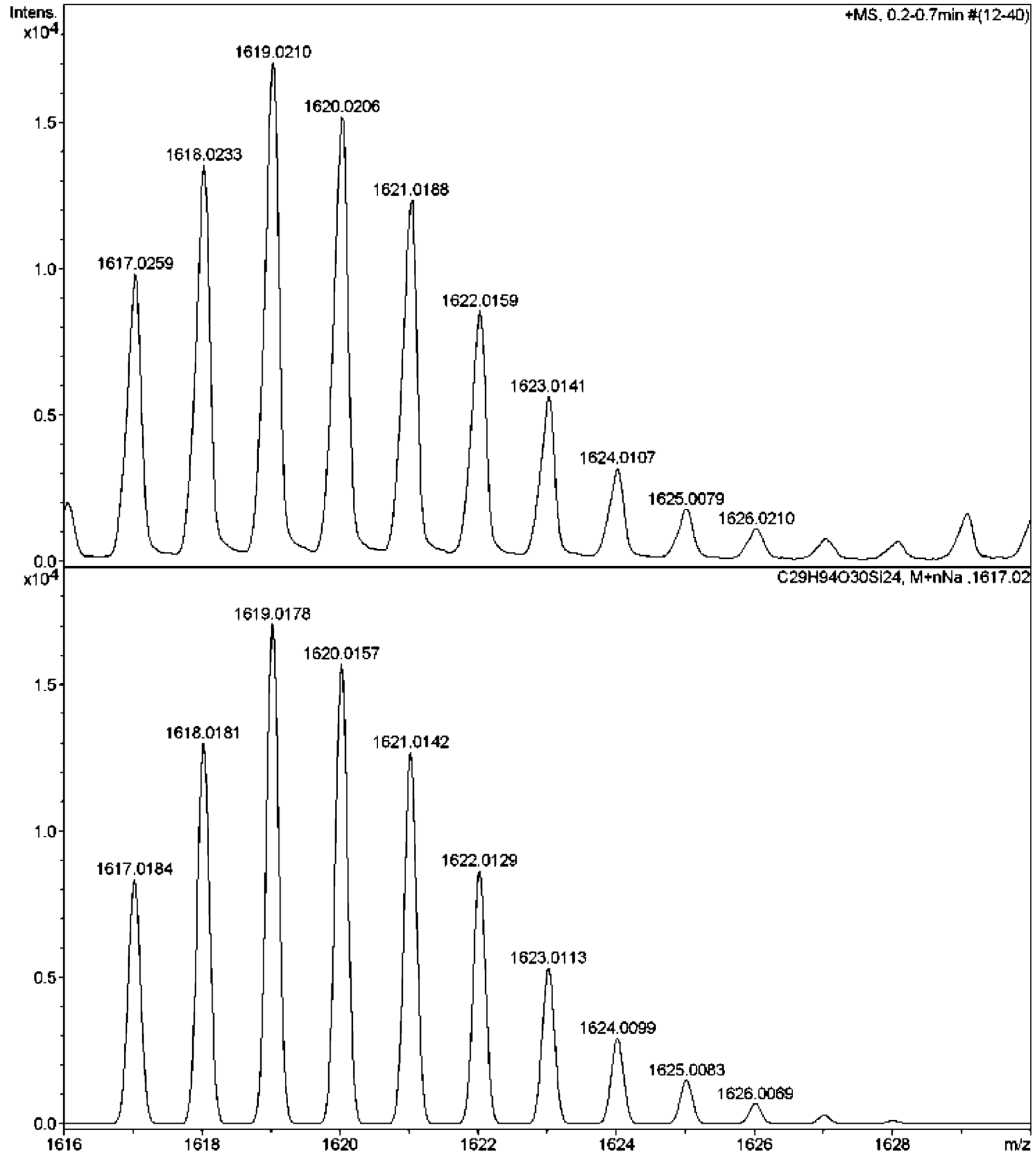

FIG. 26

**Y1697-copy_**
**SiMe2H_8_TMS_4_1602-1616 ver.1**

MEASURED VALUE (M+Na) 1603.0118
THEORETICAL VALUE (M+Na) 1603.0028

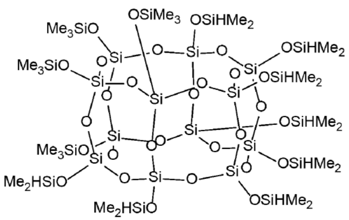

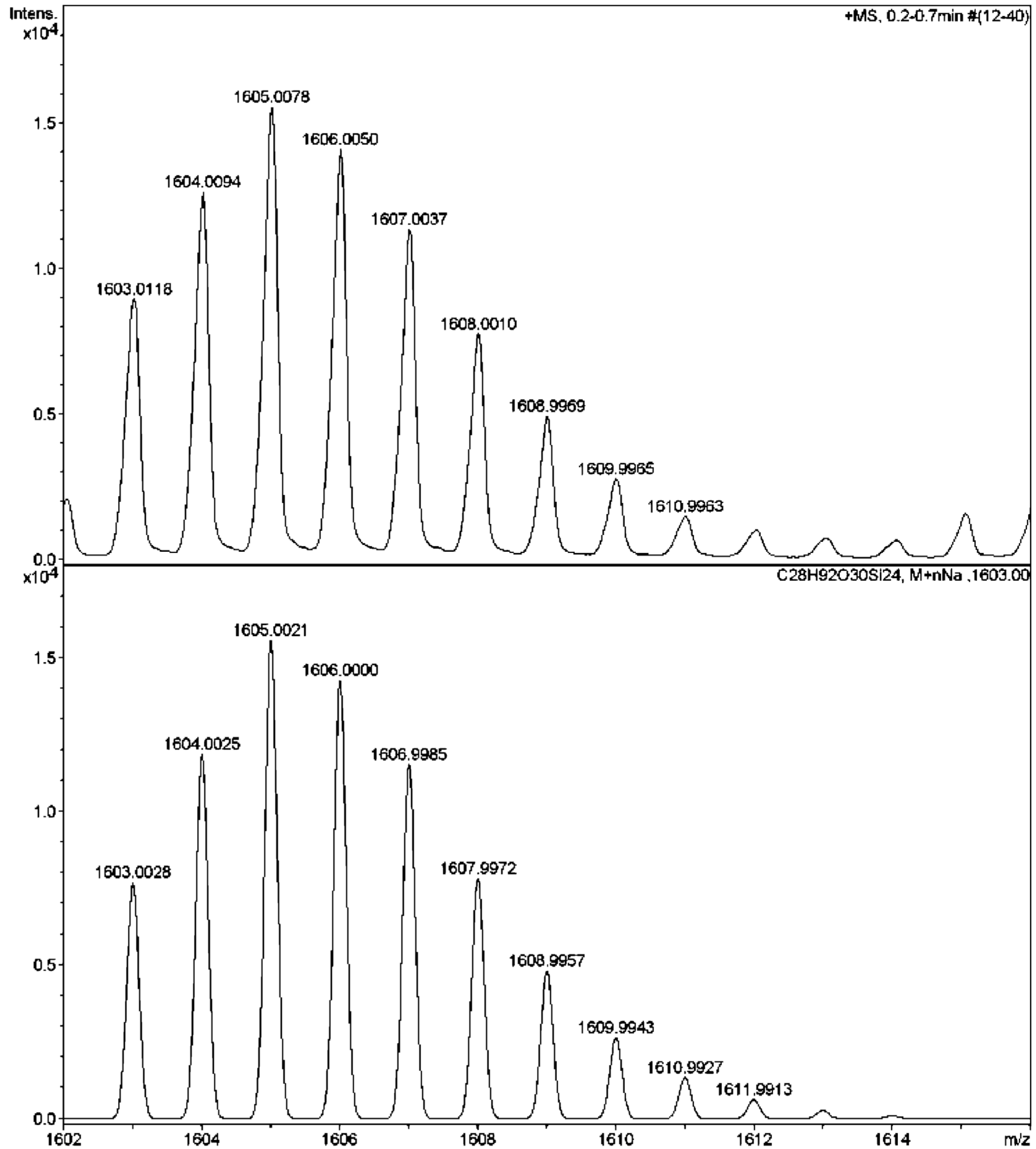

# FIG. 27

**Y1697-copy_**
**SiMe2H_9_TMS_3_1588-1602 ver.1**

MEASURED VALUE (M+Na) 1589.0076
THEORETICAL VALUE (M+Na) 1588.9871

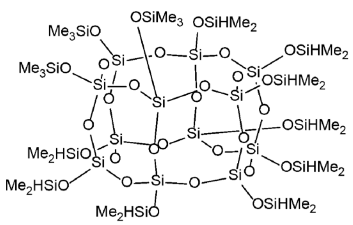

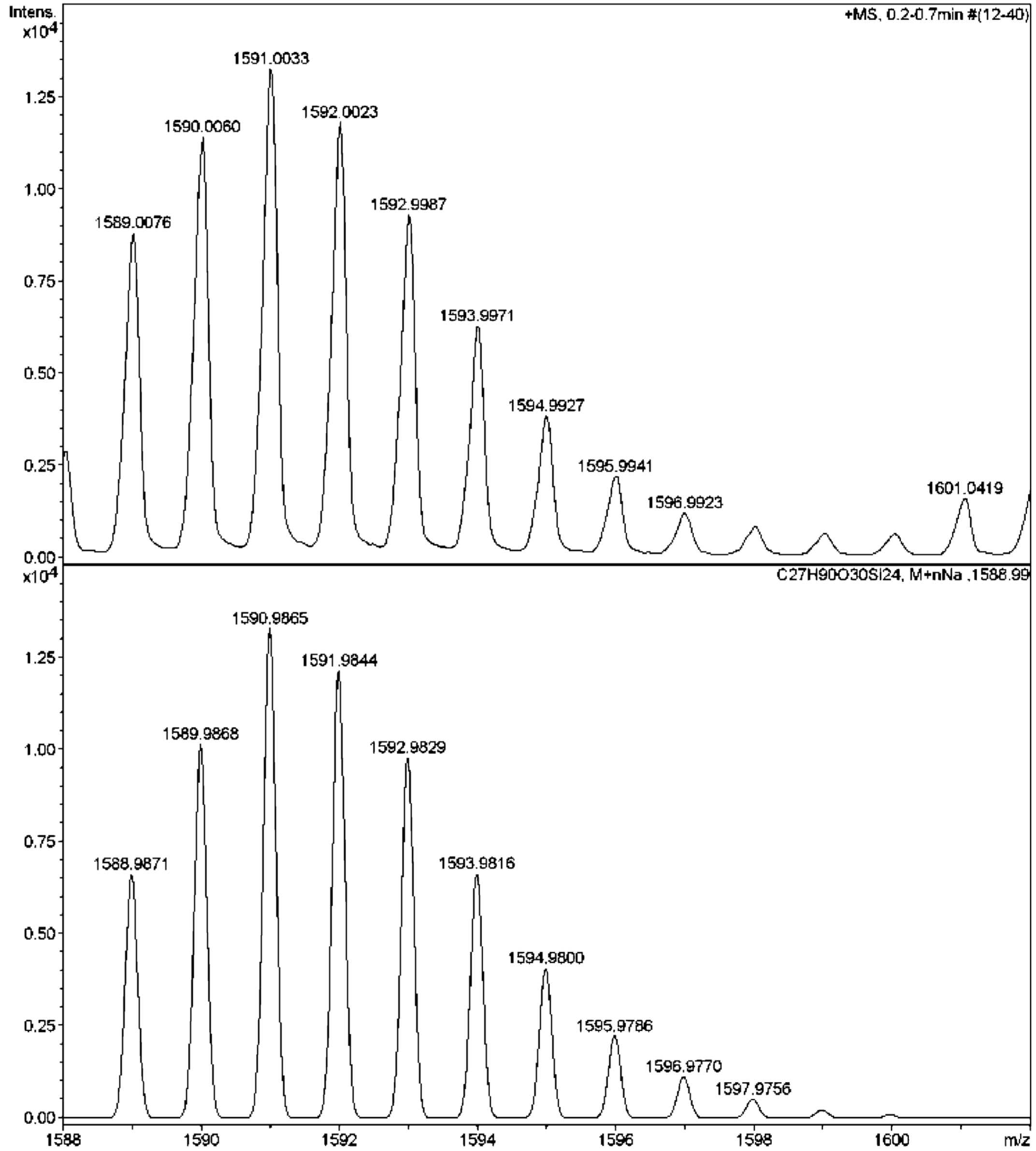

# FIG. 28

**Y1697-copy_**
**SiMe2H_10_TMS_2_1574-1588 ver.1**

MEASURED VALUE (M+Na) 1575.0032
THEORETICAL VALUE (M+Na) 1574.9715

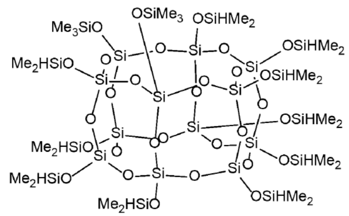

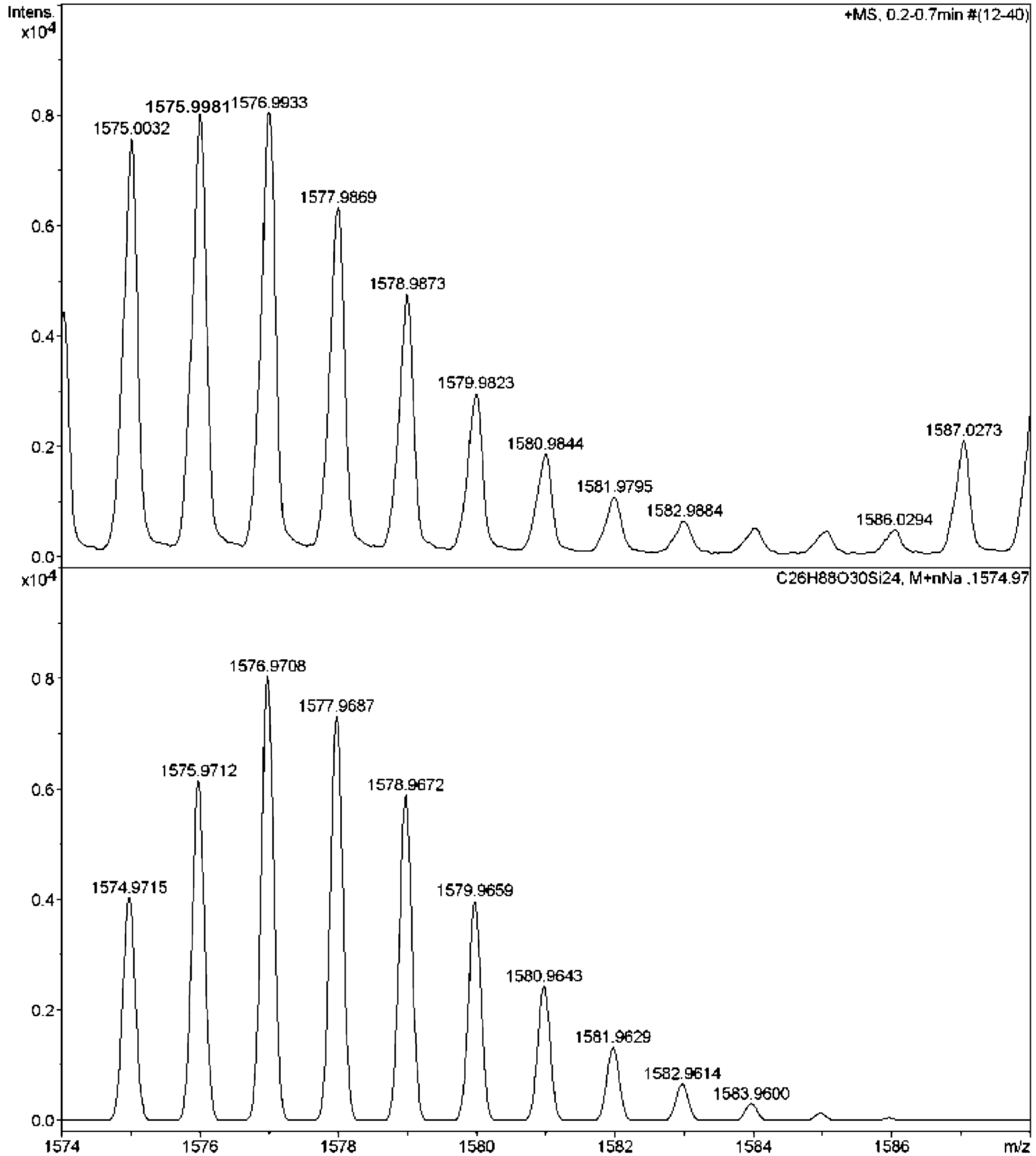

FIG. 29

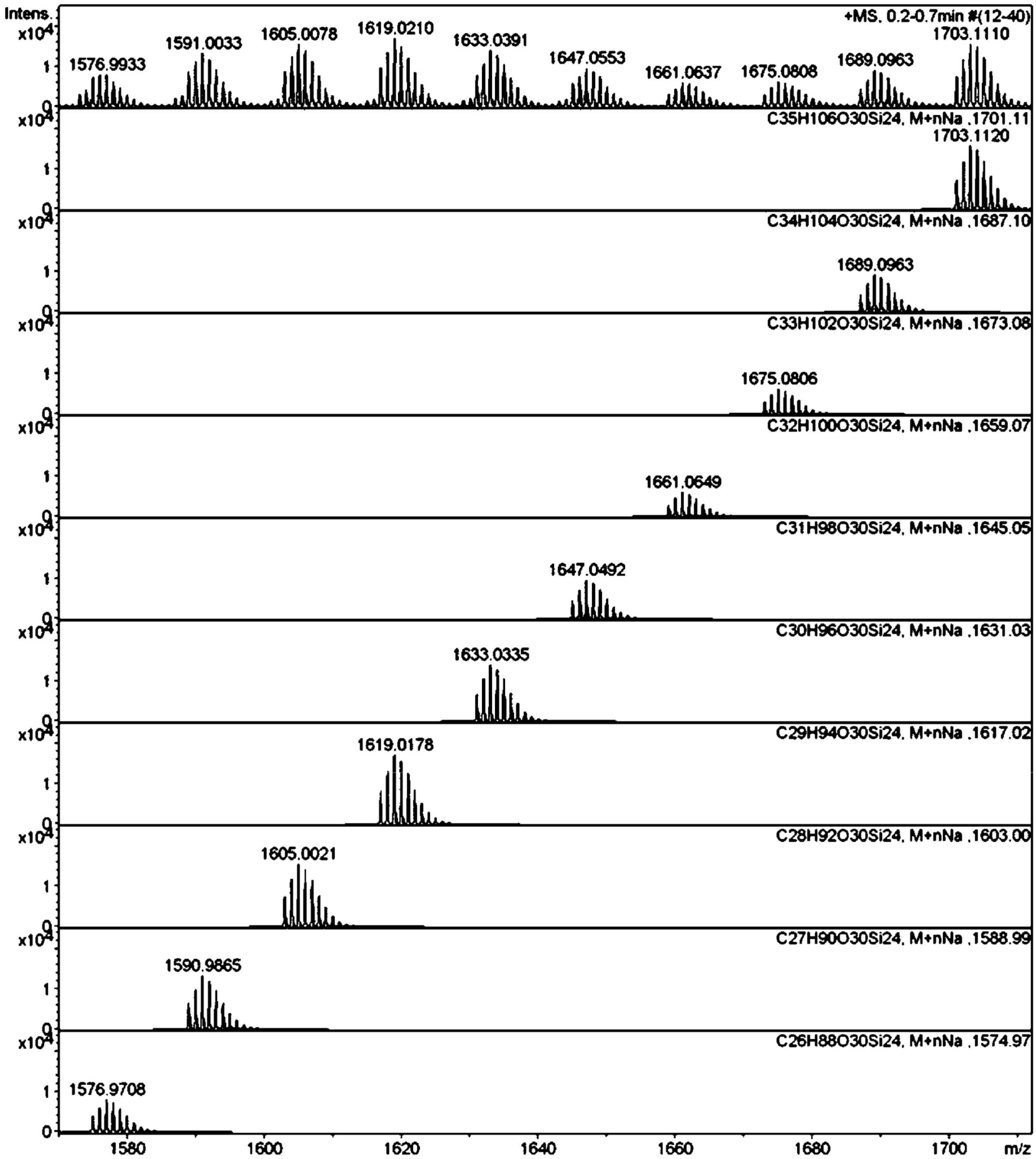
Intens.
x10^4
+MS, 0.2-0.7min #(12-40)
1576.9933
1591.0033
1605.0078
1619.0210
1633.0391
1647.0553
1661.0637
1675.0808
1689.0963
1703.1110
C35H106O30Si24, M+nNa ,1701.11
1703.1120
C34H104O30Si24, M+nNa ,1687.10
1689.0963
C33H102O30Si24, M+nNa ,1673.08
1675.0806
C32H100O30Si24, M+nNa ,1659.07
1661.0649
C31H98O30Si24, M+nNa ,1645.05
1647.0492
C30H96O30Si24, M+nNa ,1631.03
1633.0335
C29H94O30Si24, M+nNa ,1617.02
1619.0178
C28H92O30Si24, M+nNa ,1603.00
1605.0021
C27H90O30Si24, M+nNa ,1588.99
1590.9865
C26H88O30Si24, M+nNa ,1574.97
1576.9708
1580
1600
1620
1640
1660
1680
1700
m/z

FIG. 30

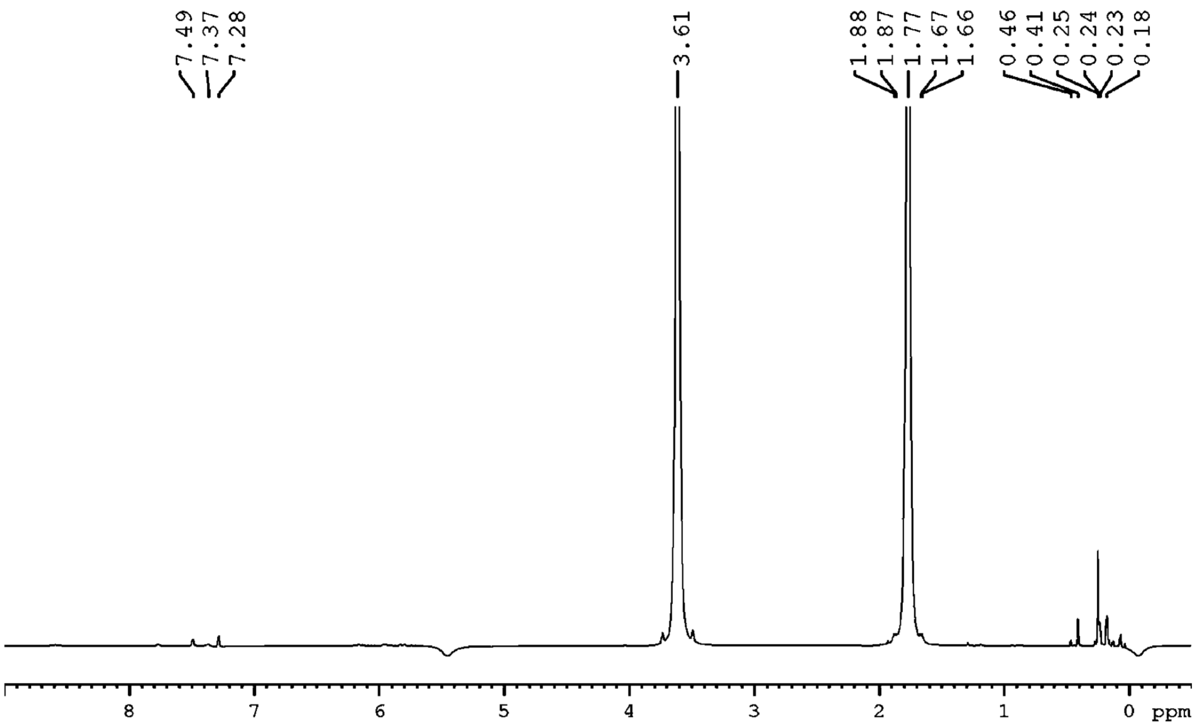
7.49
7.37
7.28
3.61
1.88
1.87
1.77
1.67
1.66
0.46
0.41
0.25
0.24
0.23
0.18
8
7
6
5
4
3
2
1
0 ppm

FIG. 31

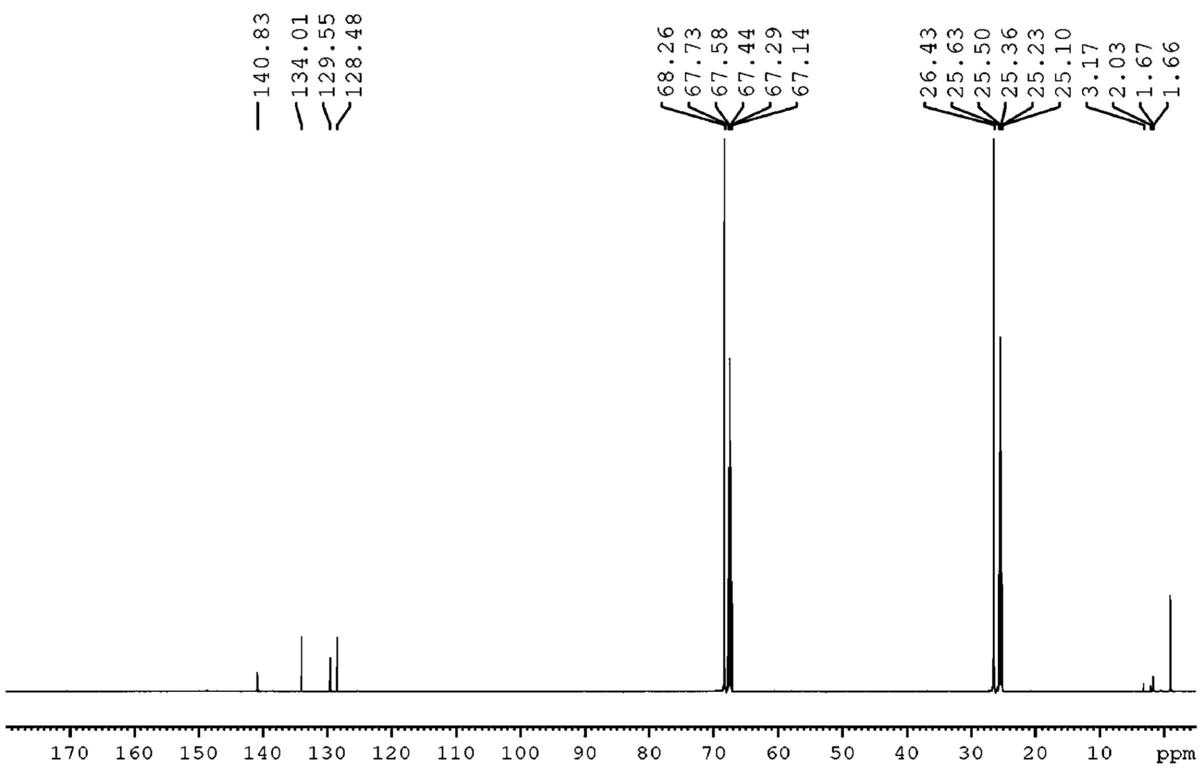
140.83
134.01
129.55
128.48
68.26
67.73
67.58
67.44
67.29
67.14
26.43
25.63
25.50
25.36
25.23
25.10
3.17
2.03
1.67
1.66
170
160
150
140
130
120
110
100
90
80
70
60
50
40
30
20
10
ppm

FIG. 32

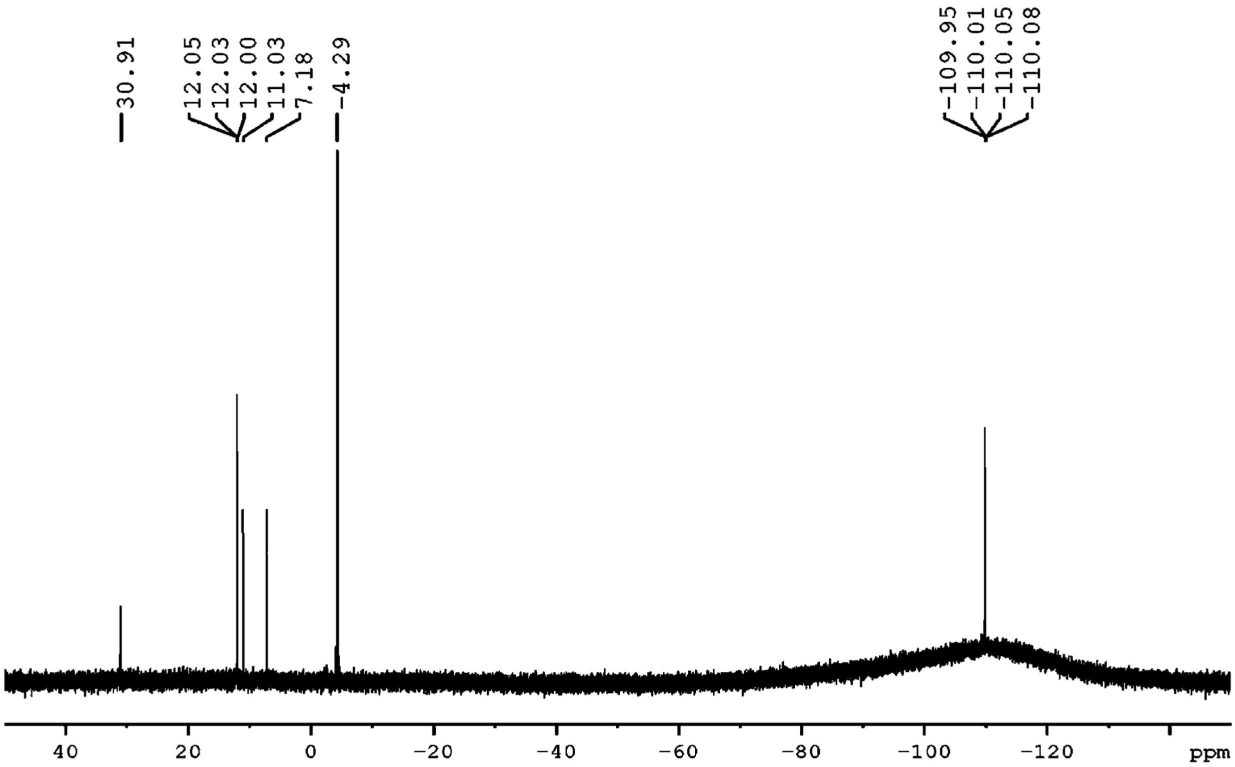

30.91
12.05
12.03
12.00
11.03
7.18
-4.29
-109.95
-110.01
-110.05
-110.08
40
20
0
-20
-40
-60
-80
-100
-120
ppm

# FIG. 33

Y1699-copy_
SiMe2Vi_1_TMS_11_1724-1738 ver.1

MEASURED VALUE: (M+Na) 1727.1061
THEORETICAL VALUE: (M+Na) 1727.1280

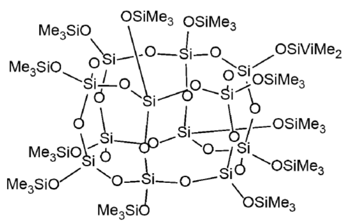

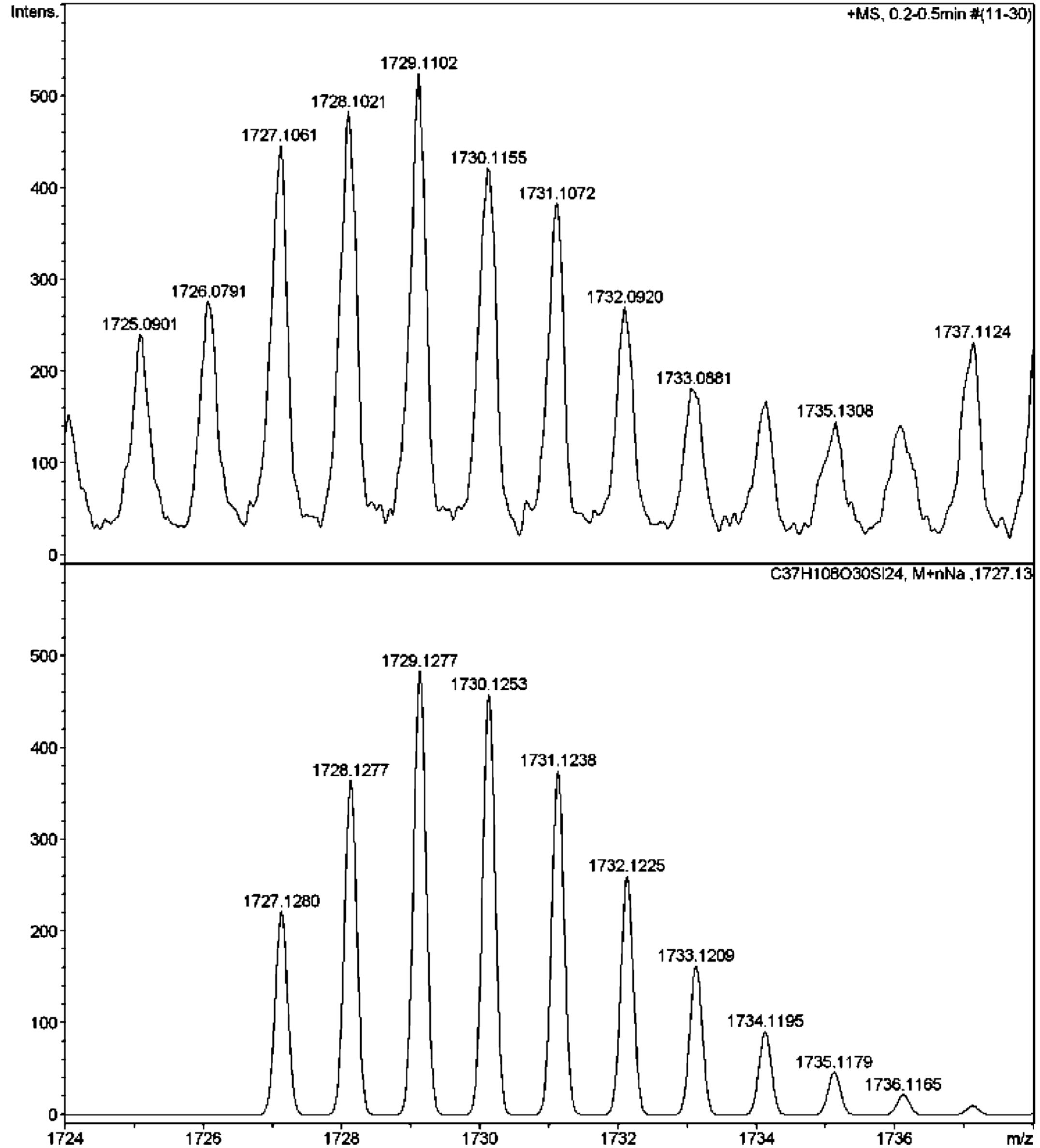

# FIG. 34

Y1699-copy_
SiMe2Vi_2_TMS_10_1737-1751 ver.1

MEASURED VALUE (M+Na) 1739.1256
THEORETICAL VALUE (M+Na) 1739.1280

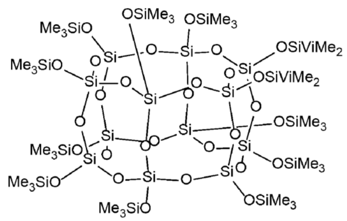

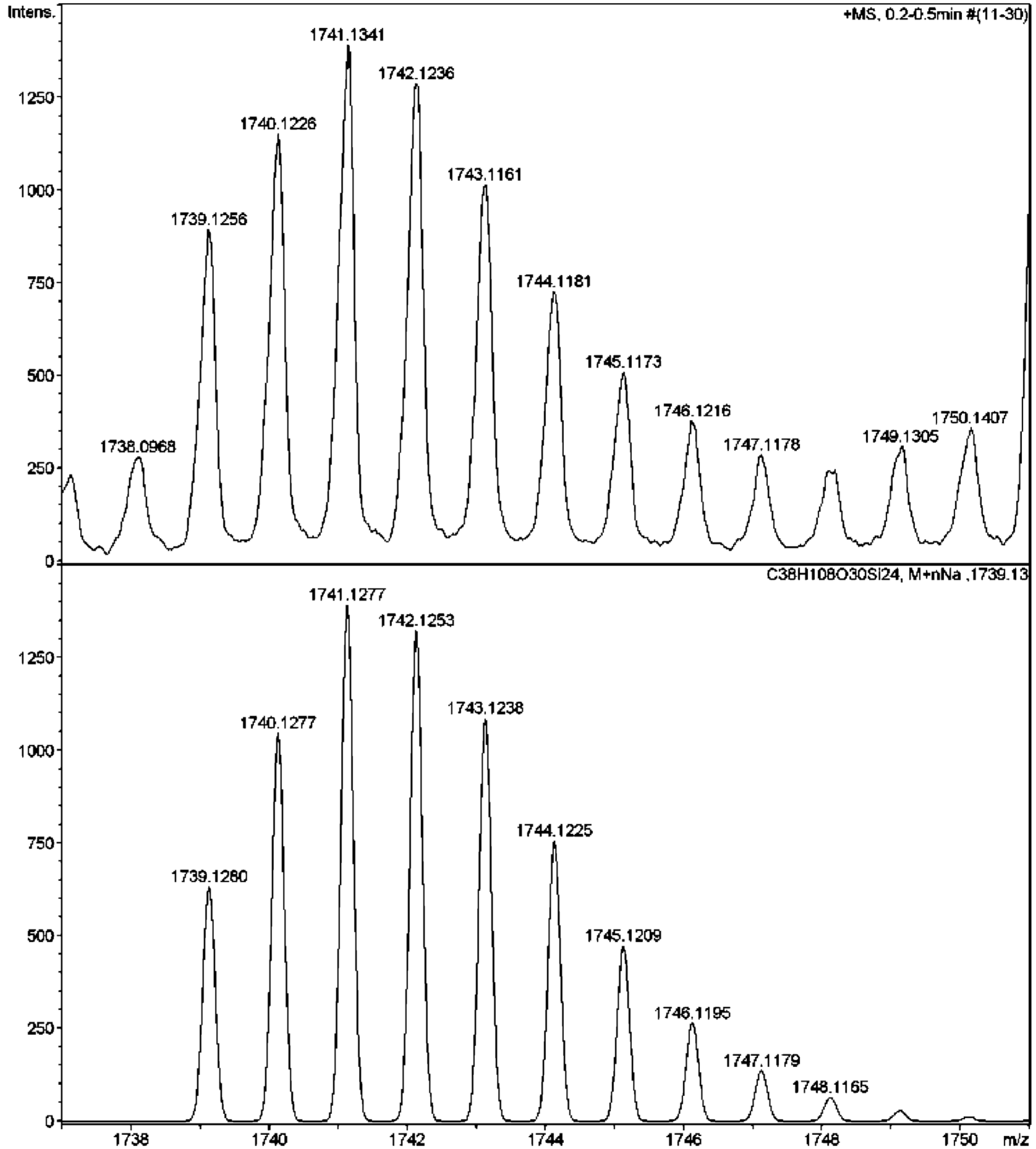

FIG. 35 Y1699-copy_
SiMe2Vi_3_TMS_9_1749-1763 ver.1

MEASURED VALUE (M+Na) 1751.1286
THEORETICAL VALUE (M+Na) 1751.1280

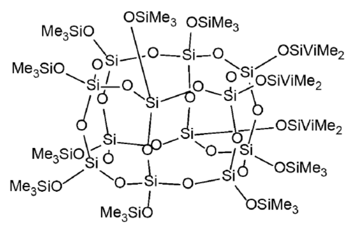

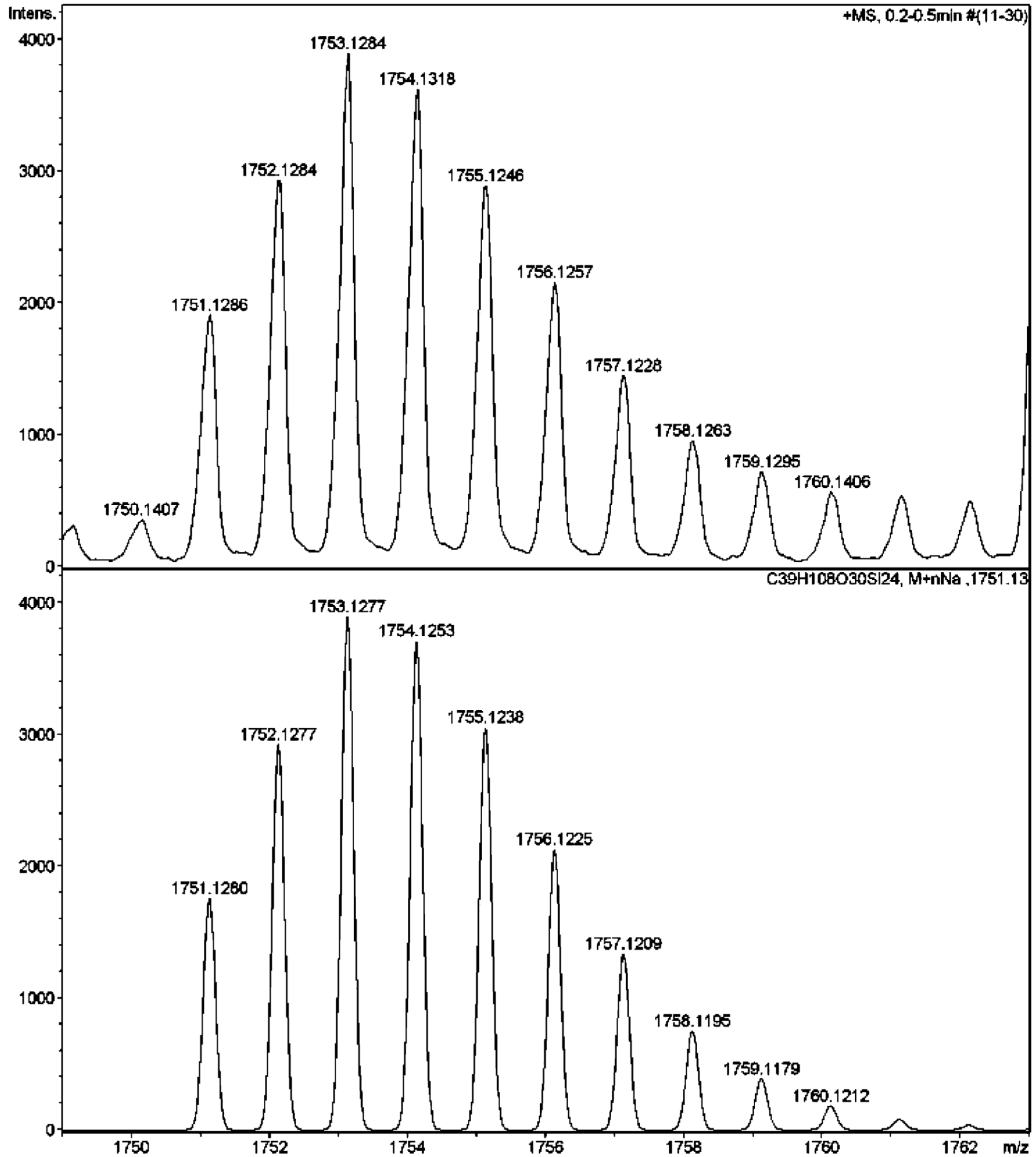

# FIG. 36

**Y1699-copy_**
**SiMe2Vi_4_TMS_8_1761-1775 ver.1**

MEASURED VALUE (M+Na) 1763.1324
THEORETICAL VALUE (M+Na) 1763.1280

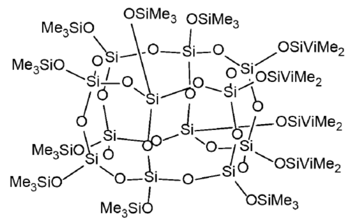

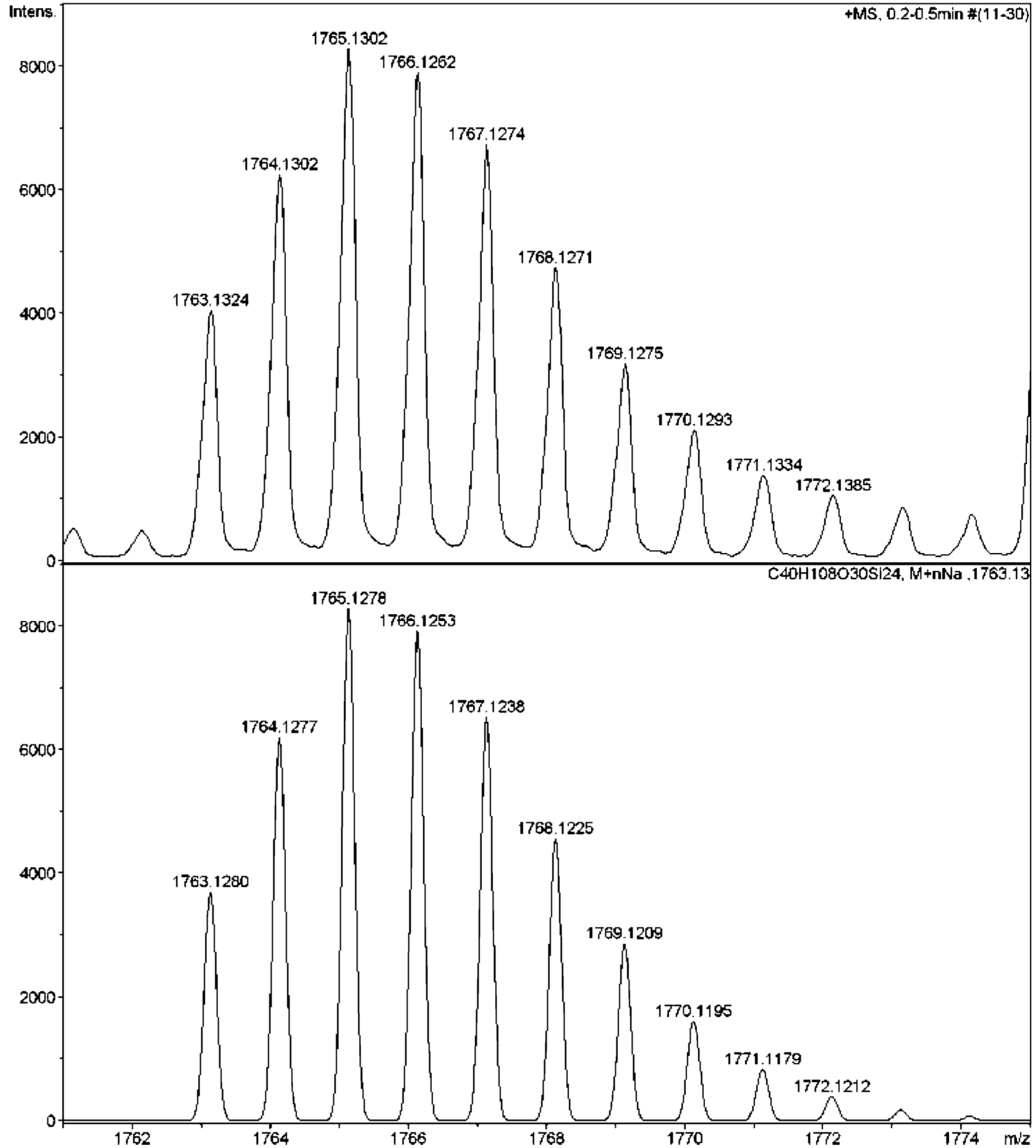

# FIG. 37

Y1699-copy_
SiMe2Vi_5_TMS_7_1773-1787 ver.1

MEASURED VALUE (M+Na) 1775.1319
THEORETICAL VALUE (M+Na) 1775.1280

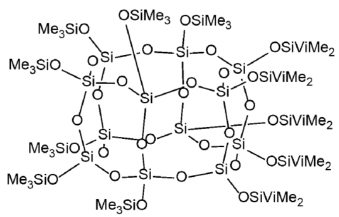

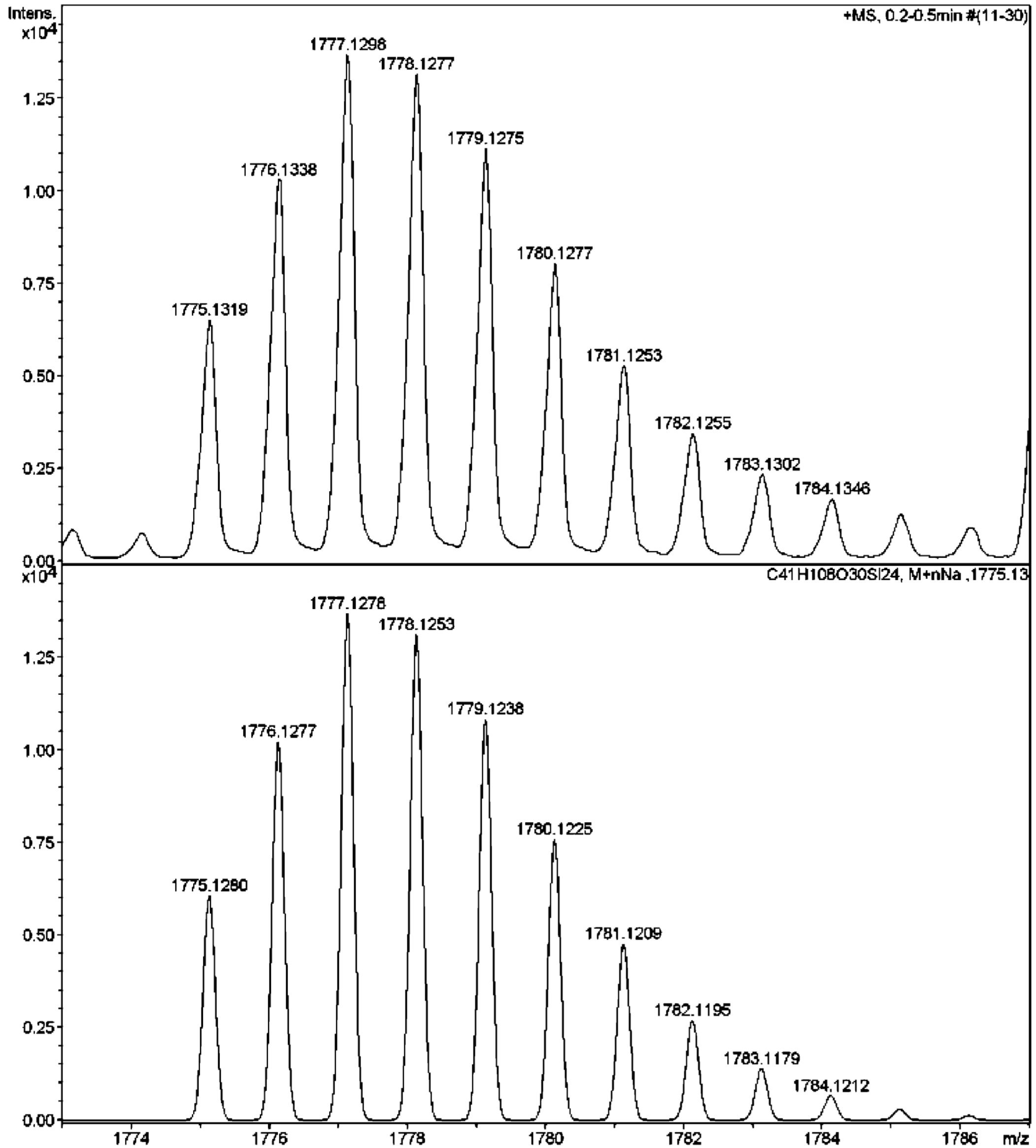

# FIG. 38

Y1699-copy_
SiMe2Vi_6_TMS_6_1785-1799 ver.1

MEASURED VALUE (M+Na) 1787.1328
THEORETICAL VALUE (M+Na) 1787.1280

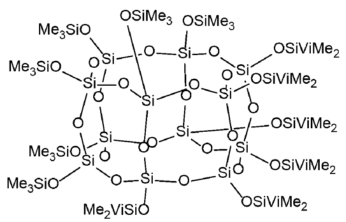

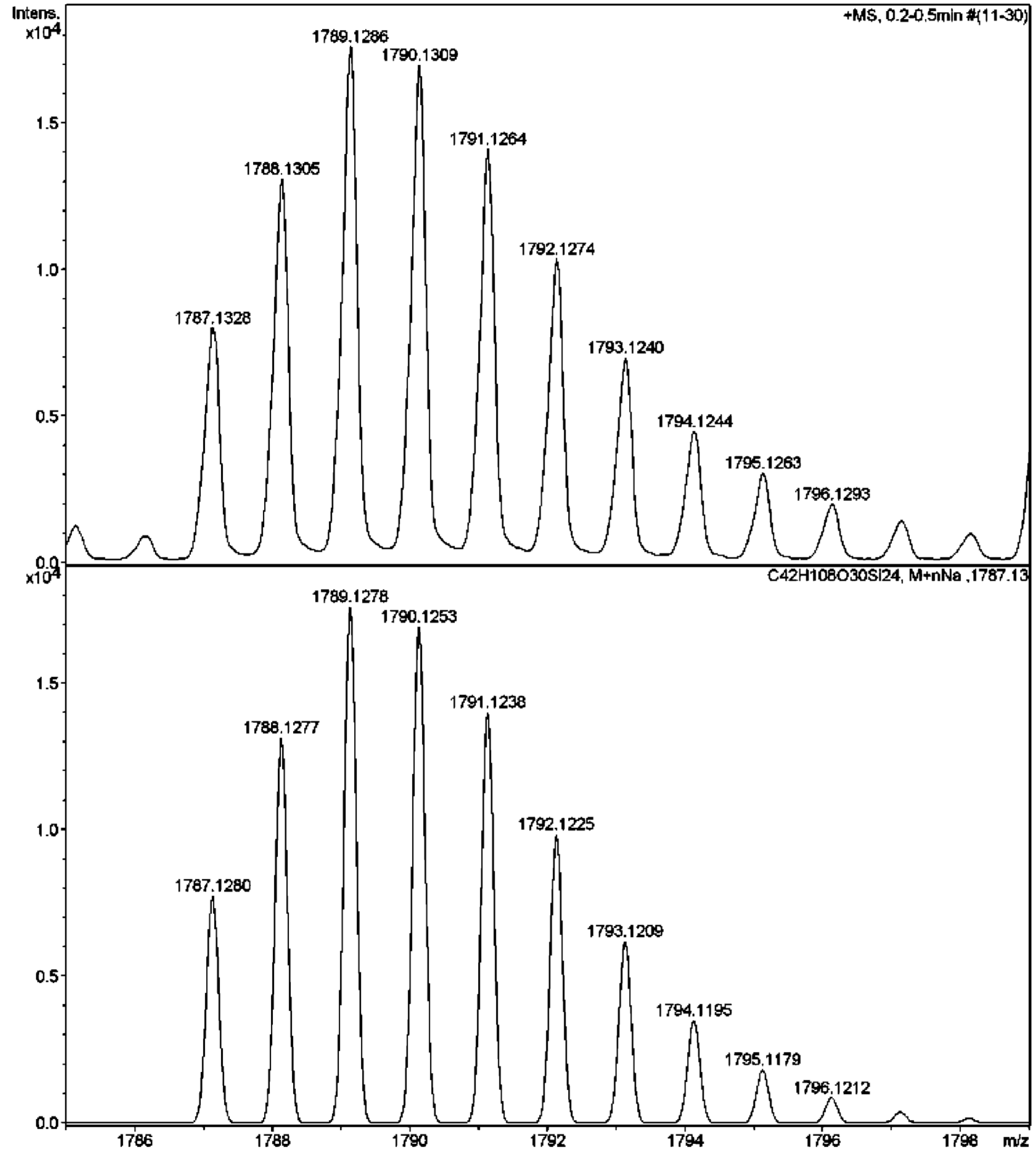

FIG. 39

**Y1699-copy_**
**SiMe2Vi_7_TMS_5_1797-1811 ver.1**

MEASURED VALUE (M+Na) 1799.1316
THEORETICAL VALUE (M+Na) 1799.1280

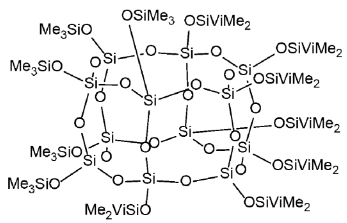

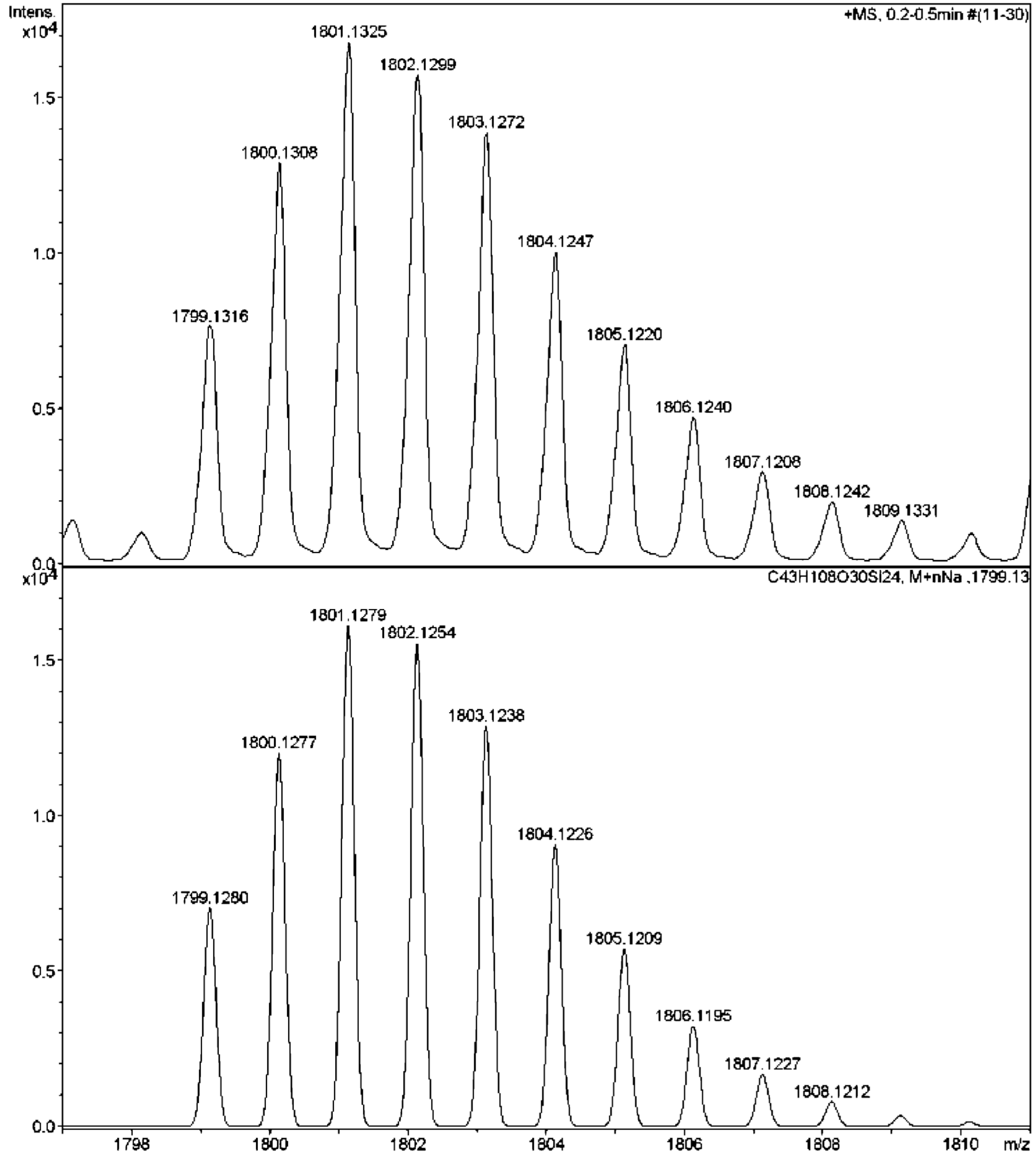

# FIG. 40

**Y1699-copy_**
**SiMe2Vi_8_TMS_4_1809-1823 ver.1**

MEASURED VALUE (M+Na) 1811.1337
THEORETICAL VALUE (M+Na) 1811.1280

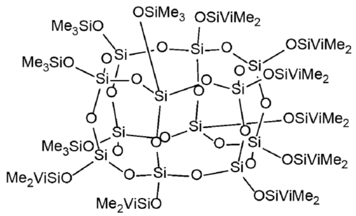

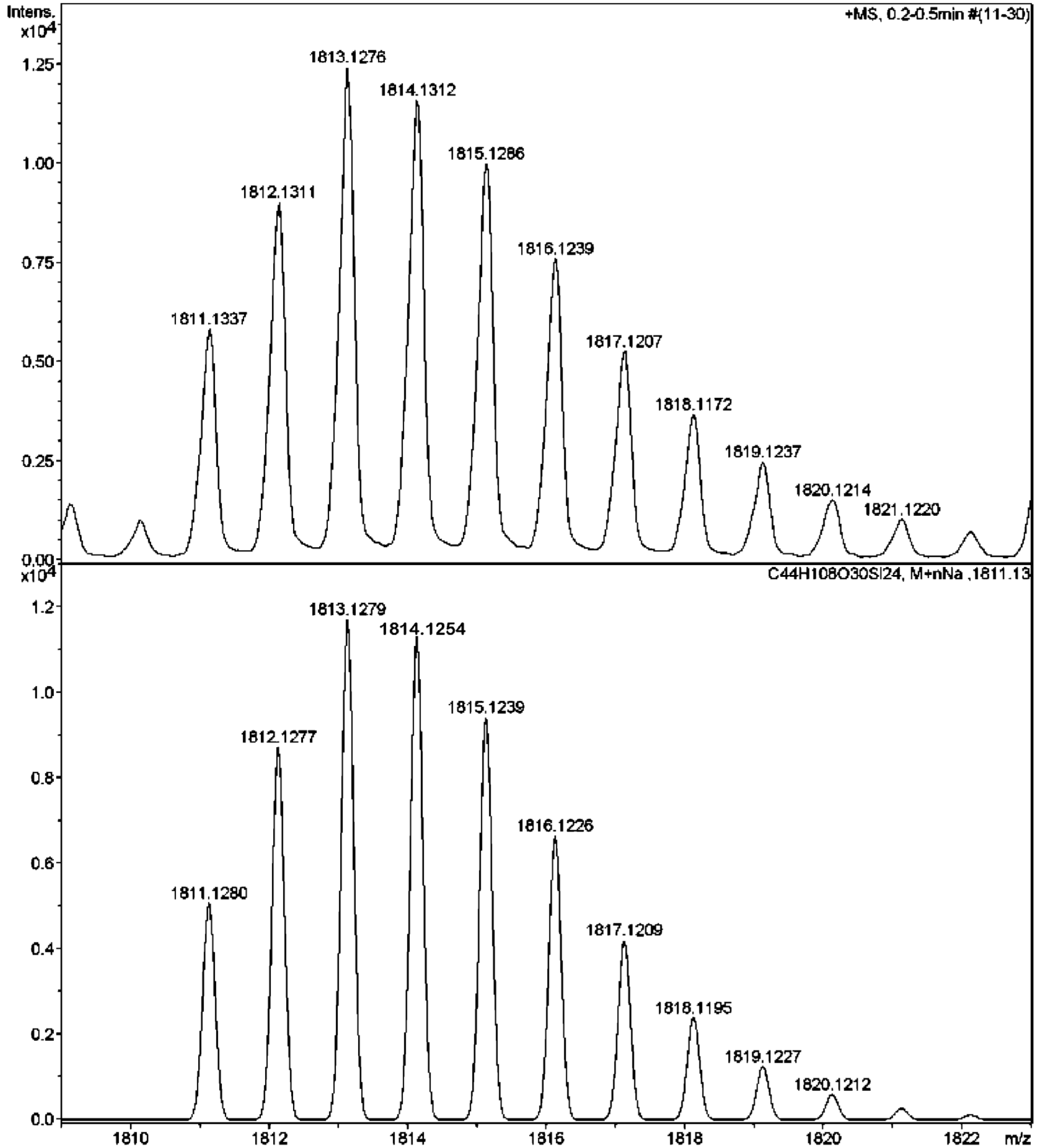

# FIG. 41

**Y1699-copy_**
**SiMe2Vi_9_TMS_3_1821-1835 ver.1**

MEASURED VALUE (M+Na) 1823.1312
THEORETICAL VALUE (M+Na) 1823.1280

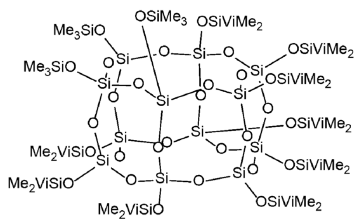

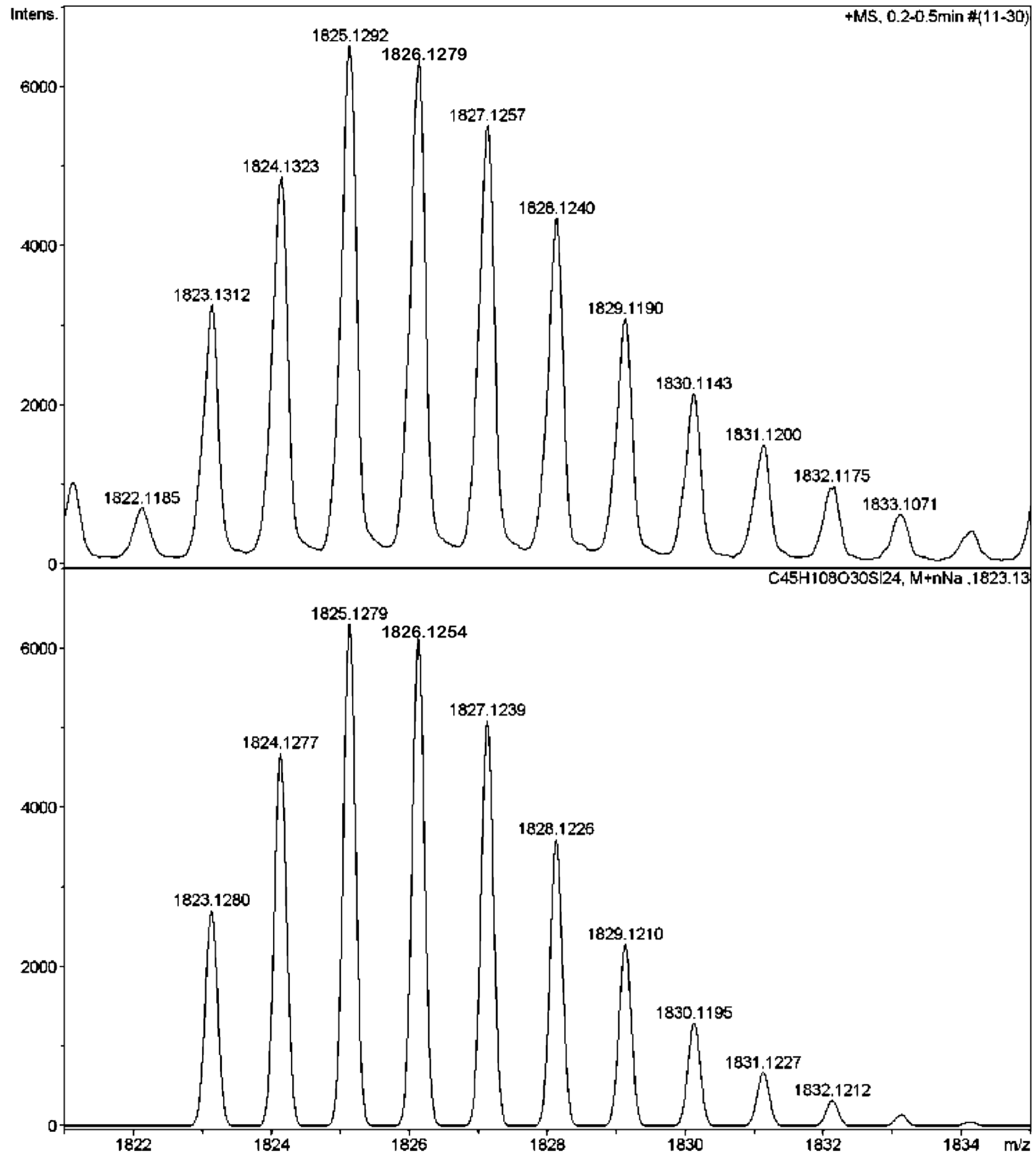

# FIG. 42

Y1699-copy_
SiMe2Vi_10_TMS_2_1834-1848 ver.1

MEASURED VALUE (M+Na) 1835.1326
THEORETICAL VALUE (M+Na) 1835.1280

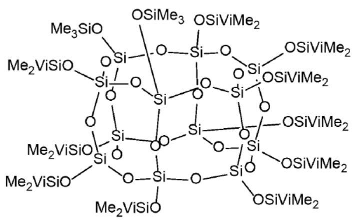

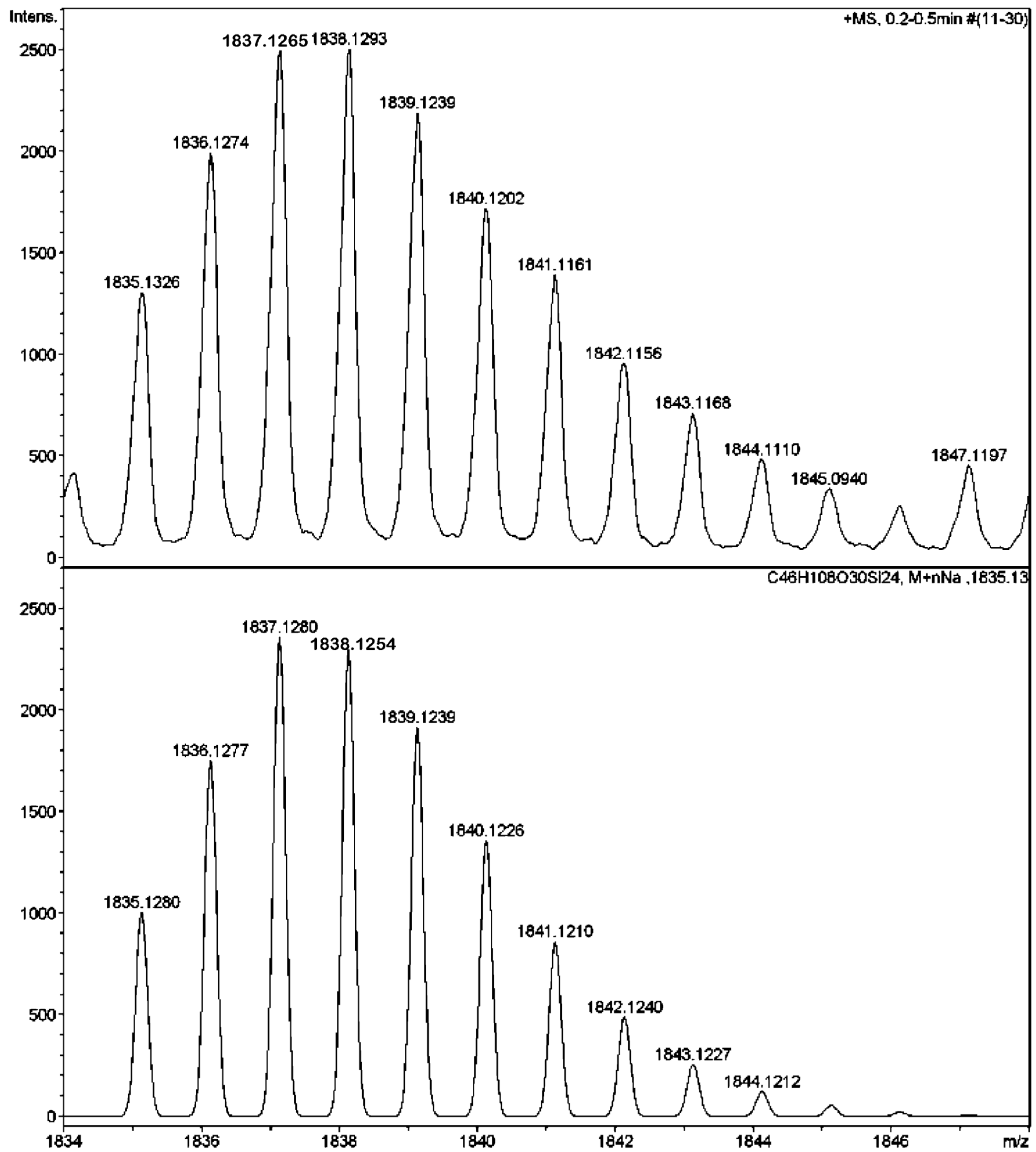

FIG. 43

**Y1699-copy_**
**SiMe2Vi_11_TMS_1_1846-1860 ver.1**

MEASURED VALUE (M+Na) 1847.1197
THEORETICAL VALUE (M+Na) 1847.1280

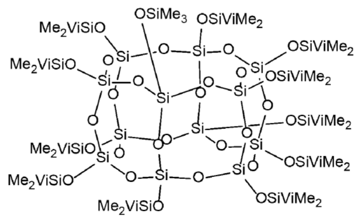

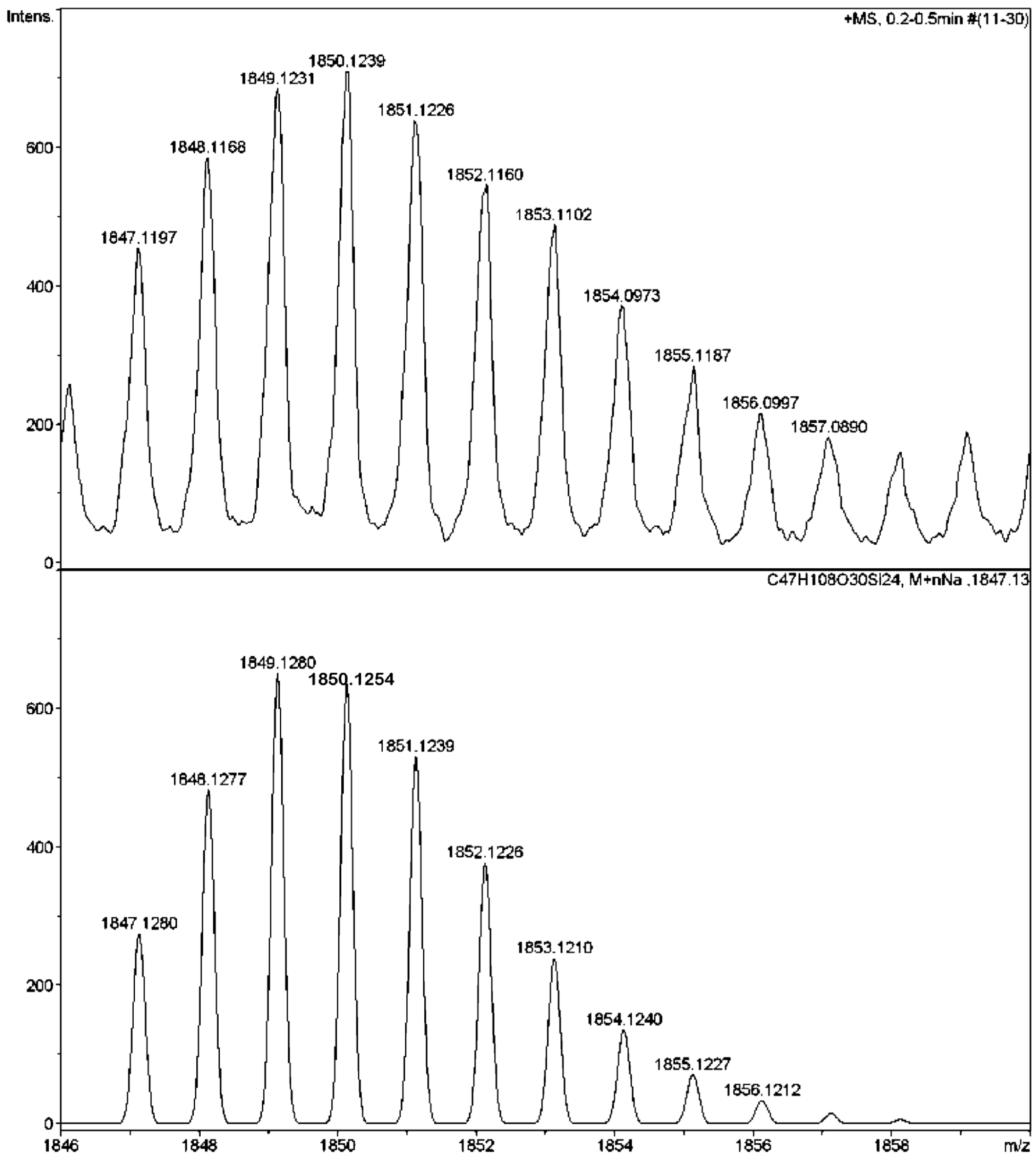

FIG. 44

Y1699-copy_
SiMe2Vi_1-11_TMS_11-1_1722-1860 ver.1

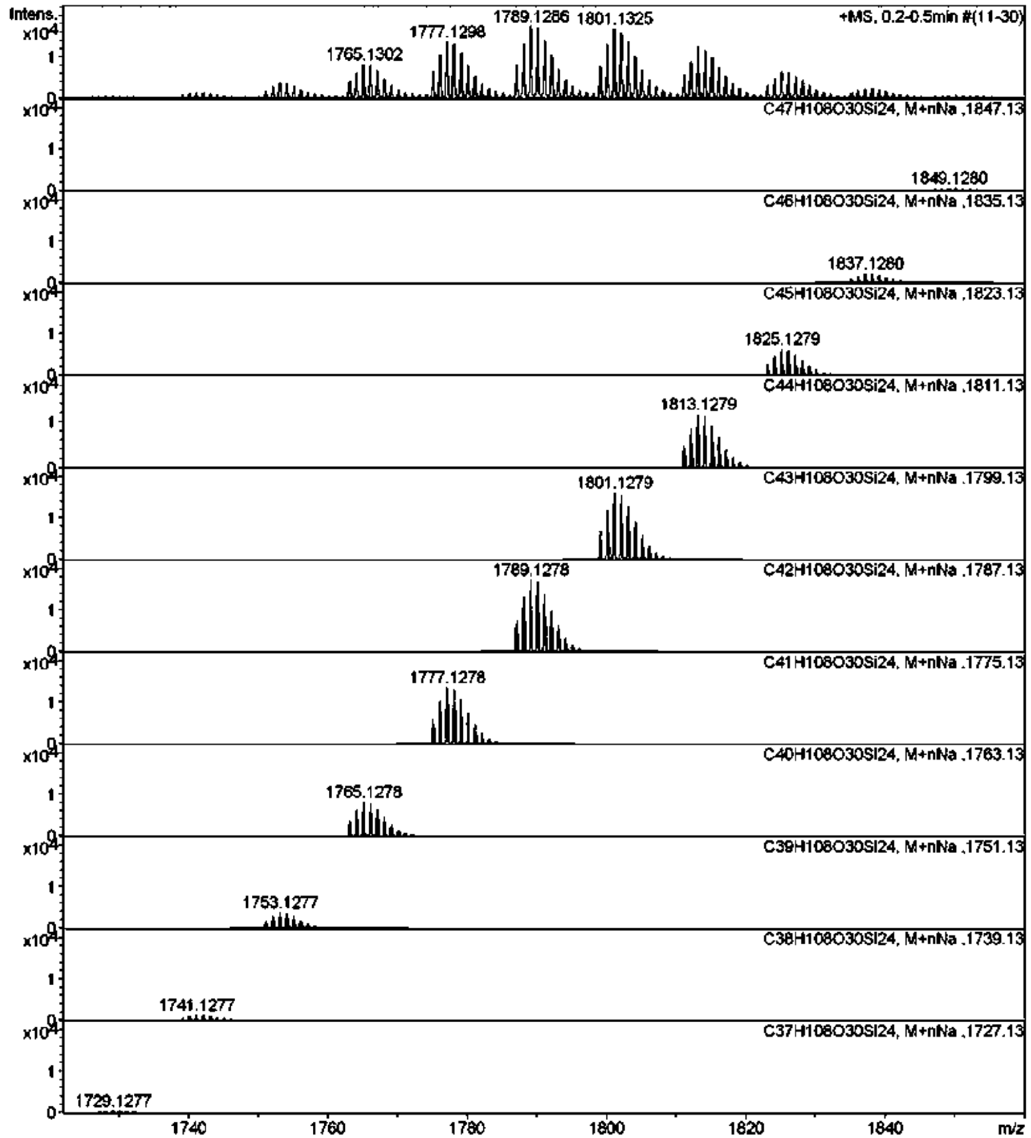

## INTERNATIONAL SEARCH REPORT

International application No.
**PCT/JP2024/002052**

**A. CLASSIFICATION OF SUBJECT MATTER**

***C07F 7/21***(2006.01)i
FI: C07F7/21

According to International Patent Classification (IPC) or to both national classification and IPC

**B. FIELDS SEARCHED**

Minimum documentation searched (classification system followed by classification symbols)

C07F7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2007-284652 A (FUJIFILM CORPORATION) 01 November 2007 (2007-11-01)<br>claim 1, p. 11, compounds (I-g) | 1<br>2-5 |
| X<br>Y | JP 2007-092019 A (FUJIFILM CORPORATION) 12 April 2007 (2007-04-12)<br>claim 1, p. 8, compounds (I-a) | 1<br>2-5 |
| Y | JP 2007-026889 A (FUJIFILM CORPORATION) 01 February 2007 (2007-02-01)<br>claim 5, synthesis example 1 | 2-5 |
| Y | JP 2006-104325 A (SHIN-ETSU CHEMICAL CO., LTD.) 20 April 2006 (2006-04-20)<br>claim 5, example 1 | 2-5 |
| A | WO 2021/085535 A1 (THE NATIONAL INSTITUTE OF ADVANCED INDUSTRIAL SCIENCE AND TECHNOLOGY) 06 May 2021 (2021-05-06)<br>claims 1-5 | 1-5 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 March 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

INTERNATIONAL SEARCH REPORT

International application No.
**PCT/JP2024/002052**

**C. DOCUMENTS CONSIDERED TO BE RELEVANT**

| Category* | Citation of document, with indication, where appropriate, of the relevant passages | Relevant to claim No. |
|---|---|---|
| A | WO 2021/085482 A1 (THE NATIONAL INSTITUTE OF ADVANCED INDUSTRIAL SCIENCE AND TECHNOLOGY) 06 May 2021 (2021-05-06) claims 1-5 | 1-5 |

Form PCT/ISA/210 (second sheet) (July 2022)

**INTERNATIONAL SEARCH REPORT**
**Information on patent family members**

International application No.
**PCT/JP2024/002052**

| Patent document cited in search report | Publication date (day/month/year) | Patent family member(s) | Publication date (day/month/year) |
|---|---|---|---|
| JP 2007-284652 A | 01 November 2007 | US 2007/0054135 A1<br>claim 1, p. 5, compounds (I-g)<br>KR 10-2007-0026276 A | |
| JP 2007-092019 A | 12 April 2007 | US 2007/0054135 A1<br>claim 1, p. 5, compounds (I-a)<br>KR 10-2007-0026276 A | |
| JP 2007-026889 A | 01 February 2007 | (Family: none) | |
| JP 2006-104325 A | 20 April 2006 | US 2006/0074213 A1<br>claim 5, example 1<br>EP 1645560 A1 | |
| WO 2021/085535 A1 | 06 May 2021 | (Family: none) | |
| WO 2021/085482 A1 | 06 May 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023008656 A

### Non-patent literature cited in the description

- *Main Group Metal Chemistry*, 1997, vol. 20, 515-529
- *Angew. Chem. Int. Ed. Engl.*, 1997, vol. 36, 743
- *Crystals*, 2018, vol. 8, 457
- *CHEMICAL ABSTRACTS*, 126347-25-9